# EUROPEAN PATENT APPLICATION

(11) **EP 4 832 575 A1**
(43) Date of publication of application: **28.10.2026**
(21) Application number: 24916666.1
(22) Date of filing: 13.12.2024
(51) Int. Cl.: H04W 36/00

(54) **SERVICE DATA PROCESSING METHOD AND COMMUNICATION APPARATUS**

(30) Priority: 11.01.2024 CN 202410047108
(71) Applicant: Huawei Technologies Co., Ltd., Shenzhen, Guangdong 518129 (CN)
(72) Inventor: XU, Shengfeng, Shenzhen, Guangdong 518129 (CN)
(74) Representative: Huawei European IPR
(86) International application number: PCT/CN2024/139286
(87) International publication number: WO 2025/148619

(57) **Abstract**

This application provides a service data processing method and a communication apparatus. The method includes: receiving, by a mobile communication device, first steering information; where the first steering information indicates that data of a first service is transmitted through a first UE; or the first steering information indicates that data of the first service is preferentially transmitted through the first UE, the first network, or the first RAT; the first network is a network on which the first UE camps; the first RAT is a RAT supported by a first access network device, and the first access network device corresponds to the first UE; and the mobile communication device transmits the data of the first service through a first session of the first UE based on the first steering information. Based on this method, the mobile communication device can receive steering information sent by a network side for steering data of a service, thereby enabling the mobile communication device to reasonably select a UE for transmitting service data.

## Description

This application claims priority to Chinese Patent Application No. 202410047108.X, filed with the China National Intellectual Property Administration on January 11, 2024, and entitled "A Service Data Processing Method and a Communication Apparatus," which is incorporated herein by reference in its entirety.

### TECHNICAL FIELD

This application relates to the field of communication technologies, and in particular, to a service data processing method and a communication apparatus.

### BACKGROUND

The user equipment (user equipment, UE), radio access network (radio access network, RAN), user plane function (user plane function, UPF), and data network (data network, DN) are generally referred to as data plane network functions and entities. Data traffic of a user may be transmitted through a protocol data unit (protocol data unit, PDU) established between the UE and the DN, and the transmission passes through the two network function entities, namely, the RAN and the UPF.

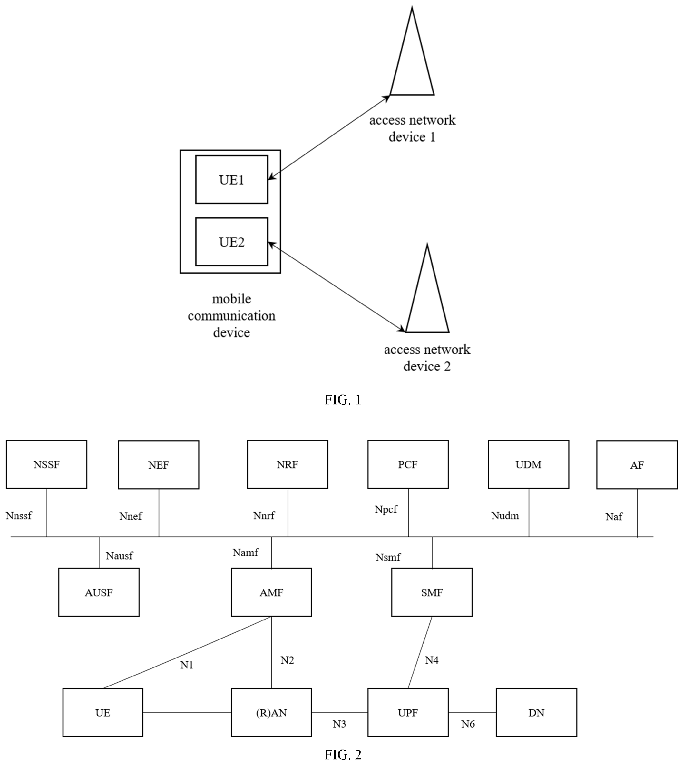

In a communication system, there may be a case where a mobile communication device may include two UEs. For example, a mobile communication device includes a UE 1 and a UE 2. For example, as shown in FIG. 1, the UE 1 is connected to an access network device 1, and the UE 2 is connected to an access network device 2. How to control which UE in the mobile communication device transmits service data of the mobile communication device is a technical problem that urgently needs to be resolved at present.

### SUMMARY

This application provides a service data processing method and a communication apparatus, to control a mobile communication device to properly select a UE for transmitting service data.

According to a first aspect, this application provides a service data processing method, applied to a mobile communication device, where the mobile communication device includes a first user equipment UE and a second UE, and the method includes:
the mobile communication device receives first steering information, where the first steering information indicates that data of a first service is transmitted through the first UE; or
the first steering information indicates that data of the first service is preferentially transmitted through the first UE; or
the first steering information indicates that data of the first service is preferentially transmitted through the first network, where the first network is a network on which the first UE camps; or
the first steering information indicates that data of the first service is preferentially transmitted through a first radio access technology RAT, where the first RAT is a RAT supported by the first access network device, and the first access network device corresponds to the first UE;
the mobile communication device transmits the data of the first service through the first session of the first UE based on the first steering information.

The first RAT is a RAT supported by the first access network device, and the first access network device corresponds to the first UE, which may be understood as that the first UE is connected to the first access network device, and the first access network device supports the first RAT.

Based on the method described in the first aspect, the mobile communication device may receive the information sent by the network side for steering data of the service, so that the mobile communication device can properly select a UE for transmitting service data.

In a possible embodiment, the mobile communication device sends a registration request, where the registration request is used to request to register the first UE with the network;
A specific implementation manner in which the mobile communication device receives the first steering information is: the mobile communication device receives a registration accept message or a UE policy container, where the registration accept message or the UE policy container includes the first steering information, and the registration accept message indicates that the first UE successfully registers with the network.

Based on this possible embodiment, when the first UE in the mobile communication device is registered, information used for steering data of a service can be obtained, so that the mobile communication device can reasonably select a UE for transmitting service data.

In a possible embodiment, the registration request further includes a subscription concealed identifier SUCI of the second UE or a dual steer device indication, where the dual steer device indication is used to indicate that the first UE is located in a dual steer device, and the dual steer device is a device that includes two UEs. Based on this possible embodiment, the first steering information can be generated when the two UEs in the mobile communication device are both registered with the network or when the first UE is located in the dual steer device.

In a possible embodiment, a specific implementation manner in which the mobile communication device transmits the data of the first service through the first session of the first UE based on the first steering information is as follows: the mobile communication device selects the first UE based on the first steering information, and establishes the first session of the first UE; and transmits the data of the first service through the first session of the first UE; the method further includes: the mobile communication device sends a first message, where the first message carries information about the first session of the first UE, an identifier of the second session of the second UE, and a second session establishment request, where the second session establishment request is used to request establishment of the second session of the second UE.

In a possible embodiment, the mobile communication device may further establish the first session of the first UE; and the mobile communication device may further send a first message, where the first message carries information about the first session of the first UE, an identifier of the second session of the second UE, and a second session establishment request, where the second session establishment request is used to request establishment of the second session of the second UE.

A specific implementation manner in which the mobile communication device receives the first steering information is as follows: the mobile communication device receives a session establishment accept message, where the session establishment accept message includes the first steering information, and the session establishment accept message indicates that the second session of the second UE is successfully established.

Based on this possible embodiment, the information used to steer data of the service may be obtained in a process of creating the second session of the second UE and establishing an association relationship between the first session of the first UE and the second session of the second UE, so that the mobile communication device can reasonably select a UE for transmitting service data.

In a possible embodiment, before the mobile communication device receives the first steering information, the mobile communication device may further establish the first session of the first UE; and the mobile communication device may further send a first message, where the first message carries the information about the first session of the first UE, an identifier of the second session of the second UE, and a second session establishment request, where the second session establishment request is used to request establishment of the second session of the second UE.

A specific implementation method for the mobile communication device to receive the first steering information is as follows: the mobile communication device receives the first steering information sent by the first network element, where the first network element is responsible for access management of the first UE.

Based on this possible embodiment, during the process of creating the second session for the second UE and establishing an association between the first session of the first UE and the second session of the second UE, information for steering data of the service can be obtained. This allows the mobile communication device to reasonably select a UE for transmitting service data.

In a possible embodiment, the information of the first session of the first UE includes one or more of the following items: an identifier of the first session of the first UE, a data network name DNN corresponding to the first session of the first UE, or single network slice selection assistance information S-NSSAI corresponding to the first session of the first UE. Based on this possible embodiment, it is beneficial to accurately determine the first session of the first UE.

In a possible embodiment, the first message further includes the SUCI of the first UE or the subscription permanent identifier SUPI of the first UE. Based on this possible embodiment, it is beneficial to accurately determine the SUPI of the first UE.

In a possible embodiment, the first message is further used to request to associate the first session of the first UE with the second session of the second UE.

In a possible embodiment, a specific implementation manner in which the mobile communication device establishes the first session of the first UE is as follows: the mobile communication device sends an identifier of the first session of the first UE, a DNN, S-NSSAI, a first session establishment request, and first indication information, where the first session establishment request is used to request establishment of the first session of the first UE, and the first indication information indicates that the first session of the first UE may be associated between different UEs.

By sending the first indication information, it facilitates the selection of a session management network element that supports associating service data between different UEs to provide services, thereby facilitating subsequent processing.

In a possible embodiment, the mobile communication device may further receive second indication information, where the second indication information indicates that the first session is allowed to be associated between different UEs, or indicates that a session of the mobile communication device is allowed to be associated between different UEs;
A specific implementation manner in which the mobile communication device sends the first message is as follows: the mobile communication device sends the first message based on the second indication information. Based on this possible embodiment, it is beneficial for the mobile communication device to accurately determine whether the first session can be associated between different UEs.

According to a second aspect, this application provides a service data processing method, where the method includes:
the session management network element receives a second message, where the second message carries a subscription permanent identifier SUPI of a first user equipment UE, an identifier of a first session of the first UE, a SUPI of a second UE, an identifier of a second session of the second UE, and a second session establishment request, where the second session establishment request is used to request establishment of the second session of the second UE; in response to the second message, the session management network element stores an association relationship between the first session of the first UE and the second session of the second UE; the session management network element sends first steering information based on the second message, where the first steering information indicates that data of the first service is transmitted through the first session of the first UE; or the first steering information indicates that data of the first service is preferentially transmitted through the first session of the first UE; or the first steering information indicates that data of the first service is preferentially transmitted through a first network, where the first network is a network on which the first UE camps; or the first steering information indicates that data of the first service is preferentially transmitted through a first radio access technology RAT, where the first RAT is a RAT supported by the first access network device, and the first access network device corresponds to the first UE.

According to the method described in the second aspect, during the process of creating a second session for the second UE and establishing an association between the first session of the first UE and the second session of the second UE, the session management network element may be triggered to send information used for steering data of the service to the mobile communication device. This facilitates the mobile communication device to reasonably select a UE for transmitting service data.

In a possible embodiment, a specific implementation manner in which the session management network element sends the first steering information based on the second message is as follows: the session management network element obtains control information from the first policy control network element based on the second message, where the control information indicates that the data of the first service is transmitted through the first session of the first UE; or the control information indicates that the data of the first service is preferentially transmitted through the first session of the first UE; or the control information indicates that the data of the first service is preferentially transmitted through the first network; or the control information indicates that the data of the first service is preferentially transmitted through the first RAT; and the session management network element sends the first steering information based on the control information. Based on this possible embodiment, the session management network element can generate a reasonable first steering information based on the control information.

In a possible embodiment, a specific implementation manner in which the session management network element obtains the control information from the first policy control network element based on the second message is as follows: the session management network element sends a third message to the first policy control network element, where the third message carries a session policy association identifier associated with an identifier of the first session of the first UE, the SUPI of the second UE, and an identifier of the second session; and the session management network element receives the control information sent by the first policy control network element. Based on this possible embodiment, the session management network element can accurately obtain the control information.

In a possible embodiment, a specific implementation manner for sending the first steering information is as follows: sending a session establishment accept message to a second network element, where the session establishment accept message includes the first steering information, the session establishment accept message indicates that the second session of the second UE is successfully established, and the second network element is responsible for access management of the second UE. Based on this possible implementation, the first steering information can be successfully sent to the mobile communication device.

In a possible embodiment, a specific implementation of sending the first steering information is: sending the first steering information to a first network element, where the first network element is responsible for access management of the first UE. Based on this possible implementation, the first steering information can be successfully sent to the mobile communication device.

In a possible embodiment, the session management network element may further send first information to a user plane function network element, where the first information is used to indicate that the data of the first service is to be sent to the first access network device; and the first access network device is configured to carry the first session of the first UE. Based on this possible embodiment, the downlink data transmission behavior of the user plane function network element can be reasonably controlled, thereby preventing data of the same service from not being simultaneously transmitted through two UEs in the mobile communication device.

In a possible embodiment, the first information includes the address information of the first access network device and an identifier of the first service.

In a possible embodiment, the second message is further used to request to associate the first session of the first UE with the second session of the second UE.

In a possible embodiment, the session management network element may further receive the SUPI of the first UE, an identifier of the first session, a data network name DNN, single network slice selection assistance information S-NSSAI, a first session establishment request, and first indication information, where the first session establishment request is used to request establishment of the first session of the first UE, the first indication information indicates that the first session of the first UE may be associated between different UEs; and may further determine that the first session of the first UE is allowed to be associated between different UEs; and may further send second indication information, where the second indication information indicates that the first session of the first UE is allowed to be associated between different UEs.

Based on this possible embodiment, it is beneficial for the mobile communication device to accurately determine whether the first session can be associated between different UEs.

In a possible embodiment, a specific implementation manner in which the session management network element determines that the first session of the first UE is allowed to be associated between different UEs is as follows: the session management network element determines, based on the local configuration of the DNN, that the first session of the first UE is allowed to be associated between different UEs; or the session management network element determines, based on subscription data or policy information corresponding to the first session, that the first session of the first UE is allowed to be associated between different UEs.

Based on this possible embodiment, the session management network element can accurately determine whether the first session of the first UE is allowed to be associated between different UEs.

According to a third aspect, this application provides a service data processing method, which includes:
the first policy control network element receives a third message, where the third message carries a session policy association identifier associated with an identifier of a first session of the first UE, a subscription permanent identifier SUPI of the second UE, and an identifier of a second session of the second UE; in response to the third message, the first policy control network element sends control information, where the control information indicates that data of the first service is transmitted through the first session of the first UE; or the control information indicates that data of the first service is preferentially transmitted through the first session of the first UE; or the control information indicates that data of the first service is preferentially transmitted through the first network, where the first network is a network on which the first UE camps; or the control information indicates that data of the first service is preferentially transmitted through the first radio access technology RAT, where the first RAT is a RAT supported by the first access network device, and the first access network device corresponds to the first UE.

Based on the method described in the third aspect, it is beneficial for the session management network element to accurately obtain the control information.

According to a fourth aspect, this application provides a service data processing method, which includes:
the first network element receives a registration request, where the registration request is used to request to register the first UE with a network; the first network element sends a fourth message, where the fourth message is used to request establishment of an access management policy association for the first UE, and the fourth message carries a subscription permanent identifier SUPI of the first UE; the first network element receives first steering information, where the first steering information indicates that data of the first service is transmitted through the first UE; or the first steering information indicates that data of the first service is preferentially transmitted through the first UE; or the first steering information indicates that data of the first service is preferentially transmitted through the first network, where the first network is a network on which the first UE camps; or the first steering information indicates that data of the first service is preferentially transmitted through the first radio access technology RAT, where the first RAT is a RAT supported by the first access network device, and the first access network device corresponds to the first UE; the first network element sends a registration accept message or a UE policy container, where the registration accept message or the UE policy container includes the first steering information, and the registration accept message indicates that the first UE has successfully registered with the network.

According to the method described in the fourth aspect, when the first UE in a mobile communication device is registered, information for steering the service data can be sent, which helps control the mobile communication device to reasonably select a UE for transmitting service data.

In a possible embodiment, the registration request further includes an identifier of the second UE or a dual steer device indication, where the dual steer device indication is used to indicate that the first UE is located in a dual steer device, and the dual steer device is a device that includes two UEs; the fourth message further includes a subscription permanent identifier SUPI of the second UE or a dual steer device indication.

Based on this possible embodiment, it is advantageous to generate the first steering information when both UEs in the mobile communication device are registered with the network or when the first UE is located within a dual steer device.

In a possible embodiment, in response to a registration request, the first network element may further send the SUPI of the first UE to a unified data management network element; and may further receive the SUPI of the second UE or a dual steer device indication sent by the unified data management network element, where the dual steer device indication is used to indicate that the first UE is located in a dual steer device, and the dual steer device is a device that includes two UEs; where the fourth message further includes the SUPI of the second UE or the dual steer device indication. Based on this possible embodiment, it is beneficial to generate the first steering information when both UEs in the mobile communication device are registered with the network or when the first UE is located in a dual steer device.

According to a fifth aspect, this application provides a service data processing method, where the method includes:
the second policy control network element receives a fourth message, where the fourth message is used to request establishment of an access management policy association for a first user equipment UE, and the fourth message carries a subscription permanent identifier SUPI of the first UE; in response to the fourth message, the second policy control network element sends first steering information, where the first steering information indicates that data of the first service is transmitted through the first UE; or the first steering information indicates that data of the first service is preferentially transmitted through the first UE; or the first steering information indicates that data of the first service is preferentially transmitted through a first network, where the first network is a network on which the first UE camps; or the first steering information indicates that data of the first service is preferentially transmitted through a first radio access technology RAT, where the first RAT is a RAT supported by the first access network device, and the first access network device corresponds to the first UE.

Based on the method described in the fifth aspect, when the first UE in a mobile communication device is registered, information for steering data of the service can be sent, which helps control the mobile communication device to reasonably select a UE for transmitting service data.

In a possible embodiment, the fourth message further includes the SUPI of the second UE or a dual steer device indication, where the dual steer device indication is used to indicate that the first UE is located in a dual steer device, and the dual steer device is a device that includes two UEs. Based on this possible embodiment, it is beneficial to generate the first steering information when both UEs in the mobile communication device are registered with the network.

In a possible embodiment, the second policy control network element obtains subscription information of the first UE and generates first steering information based on the subscription information; where the subscription information indicates that data of the first service is transmitted through the first UE; or the subscription information indicates that data of the first service is preferentially transmitted through the first UE; or the subscription information indicates that data of the first service is preferentially transmitted through the first network; or the subscription information indicates that data of the first service is preferentially transmitted through the first RAT. Based on this possible embodiment, reasonable first steering information can be generated based on the subscription information of the first UE.

According to a sixth aspect, this application provides a service data processing method, where the method includes:
the session management network element receives a second message, where the second message carries a subscription permanent identifier SUPI of a first user equipment (UE), an identifier of a first session of the first UE, a SUPI of a second UE, an identifier of a second session of the second UE, and a second session establishment request, where the second session establishment request is used to request establishment of the second session of the second UE; in response to the second message, the session management network element stores an association relationship between the first session of the first UE and the second session of the second UE; the session management network element sends first information to a user plane function network element based on the second message, where the first information is used to indicate that data of the first service is to be sent to the first access network device; and the first access network device is configured to carry the first session of the first UE.

Based on the method described in the sixth aspect, the downlink data transmission behavior of the user plane function network element can be reasonably controlled.

In a possible embodiment, a specific implementation manner in which the session management network element sends the first information to the user plane function network element based on the second message is as follows: the session management network element obtains control information from the first policy control network element based on the second message; the control information indicates that data of the first service is transmitted through the first session of the first UE; or the control information indicates that data of the first service is preferentially transmitted through the first session of the first UE; or the control information indicates that data of the first service is preferentially transmitted through the first network, where the first network is a network on which the first UE camps; or the control information indicates that data of the first service is preferentially transmitted through the first radio access technology RAT, where the first RAT is a RAT supported by the first access network device, and the first access network device corresponds to the first UE; and the session management network element sends the first information based on the control information.

Based on this possible embodiment, the downlink data transmission behavior of the user plane function network element can be reasonably controlled based on the control information.

In a possible embodiment, a specific implementation manner in which the session management network element obtains the control information from the first policy control network element based on the second message is as follows: the session management network element sends a third message to the first policy control network element, where the third message carries a session policy association identifier associated with the identifier of the first session of the first UE, the SUPI of the second UE, and the identifier of the second session; and the session management network element receives the control information sent by the first policy control network element.

Based on this possible embodiment, the session management network element can accurately obtain the control information.

In a possible embodiment, the first information includes address information of the first access network device and an identifier of the first service.

In a possible embodiment, the second message is further used to request to associate the first session of the first UE with the second session of the second UE.

According to a seventh aspect, this application provides a service data processing method, applied to a mobile communication device, where the mobile communication device includes a first user equipment UE and a second UE, and the method includes:
establishing, by the mobile communication device, a first session of the first UE; transmitting, by the mobile communication device, data of a first service by using the first session of the first UE; establishing, by the mobile communication device, a second session of the second UE; and associating the first session of the first UE with the second session of the second UE; sending, by the mobile communication device, a fifth message, where the fifth message carries an identifier of the second session of the second UE, and the fifth message is used to request to switch the data of the first service transmitted by using the first session of the first UE to the second session of the second UE for transmission; or the fifth message is used to request to switch the data of the first service to the second session of the second UE for transmission; and transmitting, by the mobile communication device, the data of the first service by using the second session of the second UE, where the data of the first service is transmitted by using a first IP address, and the first IP address is an IP address associated with the first session of the first UE and the second session of the second UE.

Based on the method described in the seventh aspect, an association relationship between the first session of the first UE and the second session of the second UE may be established in advance, and subsequently, service data may be triggered to be switched between UEs in the mobile communication device for transmission according to a requirement. By establishing the association relationship between the first session of the first UE and the second session of the second UE, the first session of the first UE and the second session of the second UE can share the same IP address, so that an IP address used for the service data remains unchanged before and after the switching between UEs in the mobile communication device, thereby maintaining service continuity. In addition, the association relationship between the first session of the first UE and the second session of the second UE is established in advance, which facilitates timely switching of the service data to the second UE for transmission subsequently.

In a possible embodiment, a specific implementation manner in which the mobile communication device establishes the second session of the second UE is as follows: the mobile communication device sends a first message, where the first message carries the information about the first session of the first UE, an identifier of the second session of the second UE, and a second session establishment request, where the second session establishment request is used to request establishment of the second session of the second UE.

Based on this possible embodiment, the second session of the second UE can be successfully established, and an association between the first session of the first UE and the second session of the first UE can be established.

In a possible embodiment, the first message is used to request to associate the first session of the first UE with the second session of the second UE.

In a possible embodiment, the first message further includes an association indication, where the association indication is used to indicate to associate the first session of the first UE with the second session of the second UE.

In a possible embodiment, the information about the first session of the first UE includes one or more of the following: an identifier of the first session of the first UE, a data network name DNN corresponding to the first session of the first UE, or single network slice selection assistance information S-NSSAI corresponding to the first session of the first UE. Based on this possible embodiment, the first session of the first UE can be accurately determined.

In a possible embodiment, the first message further includes the subscription concealed identifier SUCI of the first UE or the subscription permanent identifier SUPI of the first UE. Based on this possible embodiment, the SUPI of the first UE can be accurately determined.

In a possible embodiment, the mobile communication device may further receive second indication information, where the second indication information indicates that the first session is allowed to be associated between different UEs, or indicates that a session of the mobile communication device is allowed to be associated between different UEs;
A specific implementation manner in which the mobile communication device sends the first message is that the mobile communication device sends the first message based on the second indication information. Based on this possible embodiment, the mobile communication device can accurately determine whether the first session can be associated between different UEs.

In a possible embodiment, a specific implementation manner in which the mobile communication device establishes the first session of the first UE is: the mobile communication device sends an identifier of the first session of the first UE, a DNN, S-NSSAI, a first session establishment request, and first indication information, where the first session establishment request is used to request establishment of the first session of the first UE, and the first indication information indicates that the first session of the first UE may be associated between different UEs.

By sending the first indication information, it is beneficial to select a session management network element that supports the association of service data between different UEs to provide services, thereby facilitating subsequent processing.

In a possible embodiment, the fifth message further includes a switching indication, where the switching indication is used to indicate to switch the data of the first service transmitted in the first session of the first UE to the second session of the second UE for transmission, or the switching indication is used to indicate to switch the data of the first service transmitted in the first session associated with the second UE to the second session of the second UE for transmission, or the switching indication is used to indicate to switch the data of the first service to the second session of the second UE for transmission.

In a possible embodiment, the mobile communication device may further receive third indication information, where the third indication information indicates that the data of the first service is allowed to be switched between different UEs, or the service data transmitted in the first session is allowed to be switched between different UEs;
A specific implementation manner in which the mobile communication device sends the fifth message is: the mobile communication device sends the fifth message based on the third indication information.

Based on this possible embodiment, it is beneficial for the mobile communication device to accurately determine whether the data of the first service can be switched between different UEs.

In a possible embodiment, a specific implementation manner in which the mobile communication device sends the fifth message is as follows: when the signal quality between the mobile communication device and the first access network device deteriorates, or when the signal quality between the mobile communication device and the first access network device is below a first threshold, or when the quality of service QoS requirement of the first session of the first UE is not met, the mobile communication device sends the fifth message, where the first access network device corresponds to the first UE.

Based on this possible embodiment, when the signal quality between the first UE and the first access network device deteriorates or becomes poor, or when the QoS requirements of the first session of the first UE are not met, a timely switching to the second UE can be performed to transmit the data of the first service, thereby ensuring the transmission quality of the data of the first service.

According to an eighth aspect, this application provides a service data processing method, where the method includes: storing, by a session management network element, an association relationship between an identifier of a second session of a second UE and an identifier of a first session of a first UE; receiving, by the session management network element, a sixth message, where the sixth message is used to request to switch the data of the first service transmitted in the first session of the first UE to the second session of the second UE for transmission, or the sixth message is used to request to switch the data of the first service to the second session of the second UE for transmission, the sixth message carries session indication information, where the session indication information is used to indicate the second session of the second UE; and in response to the sixth message, sending, by the session management network element, second information to a user plane function network element, where the second information indicates to send the data of the first service to a second access network device, the data of the first service is transmitted through a first IP address, the first IP address is an IP address associated with the first session of the first UE and the second session of the second UE, and the second access network device is configured to carry the second session of the second UE.

Based on the method described in the eighth aspect, an association relationship between the first session of the first UE and the second session of the second UE may be established in advance, and subsequently, service data may be triggered to be switched between UEs in the mobile communication device for transmission according to a requirement. By establishing the association relationship between the first session of the first UE and the second session of the second UE, the first session of the first UE and the second session of the second UE can share the same IP address, and an IP address used for the service data remains unchanged before and after the switching between UEs in the mobile communication device, thereby maintaining service continuity. In addition, the association relationship between the first session of the first UE and the second session of the second UE is established in advance, which facilitates timely switching of the service data to the second UE for transmission subsequently.

In a possible embodiment, the second information includes an identifier of the first N4 session, address information of the second access network device, and an identifier of the first service, where the identifier of the first N4 session is an N4 session identifier associated with the first session of the first UE.

In a possible embodiment, the session management network element may further receive a second message, where the second message carries a subscription permanent identifier SUPI of the first user equipment (UE), an identifier of the first session of the first UE, a SUPI of the second UE, an identifier of the second session of the second UE, and a second session establishment request, where the second session establishment request is used to request establishment of the second session of the second UE;
A specific implementation in which the session management network element stores the association relationship between the identifier of the second session of the second UE and the identifier of the first session of the first UE is: in response to the second message, the session management network element stores the association relationship between the identifier of the second session of the second UE and the identifier of the first session of the first UE.

Based on this possible embodiment, the second session of the second UE can be successfully established, and an association between the first session of the first UE and the second session of the first UE can be established.

In a possible embodiment, the second message is used to request to associate the first session of the first UE with the second session of the second UE.

In a possible embodiment, the second message further includes an association indication, where the association indication is used to indicate to associate the first session of the first UE with the second session of the second UE.

In a possible embodiment, the session management network element may further receive the SUPI of the first UE, an identifier of the first session, a data network name DNN, single network slice selection assistance information S-NSSAI, a first session establishment request, and first indication information, where the first session establishment request is used to request establishment of the first session of the first UE, and the first indication information indicates that the first session of the first UE may be associated between different UEs; the session management network element may further determine that the first session of the first UE is allowed to be associated between different UEs; the session management network element may further send second indication information to the first network element, where the second indication information indicates that the first session of the first UE is allowed to be associated between different UEs.

Based on this possible embodiment, it is beneficial for the mobile communication device to accurately determine whether the first session can be associated between different UEs.

In a possible embodiment, a specific implementation manner in which the session management network element determines that the first session of the first UE is allowed to be associated between different UEs is: the session management network element determines, based on the local configuration of the DNN, that the first session of the first UE is allowed to be associated between different UEs; or the session management network element determines, based on subscription data or policy information corresponding to the first session, that the first session of the first UE is allowed to be associated between different UEs.

Based on this possible embodiment, it is possible to accurately determine whether the first session of the first UE is allowed to be associated between different UEs.

In a possible embodiment, the session indication information includes the SUPI of the second UE and the identifier of the second session, or the session indication information is information allocated by a session management network element for identifying the second session of the second UE.

In a possible embodiment, the sixth message further includes a switching indication, where the switching indication is used to indicate to switch the data of the first service transmitted in the first session of the first UE to the second session of the second UE for transmission, or the switching indication is used to indicate to switch the data of the first service transmitted in the first session associated with the second UE to the second session of the second UE for transmission, or the switching indication is used to indicate to switch the data of the first service to the second session of the second UE for transmission.

In a possible embodiment, the session management network element sends third indication information, where the third indication information indicates that the data of the first service is allowed to be switched between different UEs, or the service data transmitted in the first session is allowed to be switched between different UEs.

Based on this possible embodiment, it is beneficial for the mobile communication device to accurately determine whether the data of the first service can be switched between different UEs.

According to a ninth aspect, this application provides a service data processing method, applied to a mobile communication device, where the mobile communication device includes a first user equipment UE and a second UE, and the method includes:
the mobile communication device establishes a first session of the first UE; the mobile communication device transmits data of a first service through the first session of the first UE; the mobile communication device establishes a second session for the second UE; the first session of the first UE is associated with the second session of the second UE; the mobile communication device receives second steering information, where the second steering information indicates that the data of the first service is transmitted through the second UE, or indicates that the data of the first service is preferentially transmitted through the second UE, or indicates that the data of the first service is switched from being transmitted through the first UE to being transmitted through the second UE; the mobile communication device transmits the data of the first service through the second session ofthe second UE based on the second steering information, where the data of the first service is transmitted through a first IP address, and the first IP address is an IP address associated with the first session of the first UE and the second session of the second UE.

Based on the method described in the ninth aspect, an association relationship between the first session of the first UE and the second session of the second UE can be established in advance, and subsequently, the switching of service data between UEs in the mobile communication device can be triggered according to a requirement. By establishing the association relationship between the first session of the first UE and the second session of the second UE, the first session of the first UE and the second session of the second UE can share the same IP address, and the IP address used for the service data remains unchanged before and after the switching between UEs in the mobile communication device, thereby maintaining service continuity. Moreover, establishing the association relationship between the first session of the first UE and the second session of the second UE in advance facilitates the timely switching of service data to the second UE for transmission in the subsequent process.

In a possible embodiment, a specific implementation manner in which the mobile communication device establishes the second session of the second UE is as follows: the mobile communication device sends a first message to a second network element, where the first message carries information about the first session of the first UE, an identifier of the second session of the second UE, and a second session establishment request, where the second session establishment request is used to request establishment of the second session of the second UE.

Based on this possible embodiment, the second session of the second UE can be successfully established, and an association between the first session of the first UE and the second session of the first UE can be established.

In a possible embodiment, the first message is used to request to associate the first session of the first UE with the second session of the second UE.

In a possible embodiment, the first message further includes an association indication, where the association indication is used to indicate to associate the first session of the first UE with the second session of the second UE.

In a possible embodiment, the information about the first session of the first UE includes one or more of the following: an identifier of the first session of the first UE, a data network name DNN corresponding to the first session of the first UE, or single network slice selection assistance information S-NSSAI corresponding to the first session of the first UE. Based on this possible embodiment, the first session of the first UE can be accurately determined.

In a possible embodiment, the first message further includes the subscription concealed identifier SUCI of the first UE or the subscription permanent identifier SUPI of the first UE. Based on this possible embodiment, the SUPI of the first UE can be accurately determined.

In a possible embodiment, the mobile communication device may further receive second indication information, where the second indication information indicates that the first session is allowed to be associated between different UEs, or indicates that a session of the mobile communication device is allowed to be associated between different UEs;

A specific implementation of sending the first message by the mobile communication device is that the mobile communication device sends the first message based on the second indication information. Based on this possible embodiment, the mobile communication device can accurately determine whether the first session can be associated between different UEs.

In a possible embodiment, a specific implementation of establishing, by the mobile communication device, the first session of the first UE by using the first access network device is: the mobile communication device sends an identifier, a DNN, S-NSSAI, a first session establishment request, and first indication information of the first session of the first UE, where the first session establishment request is used to request establishment of the first session of the first UE, and the first indication information indicates that the first session of the first UE may be associated between different UEs.

By sending the first indication information, it is beneficial to select a session management network element that supports service data association between different UEs to provide a service, thereby facilitating subsequent processing.

According to a tenth aspect, this application provides a service data processing method, where the method includes:
the session management network element stores an association relationship between an identifier of a second session of a second user equipment UE and an identifier of a first session of a first UE; the session management network element receives fourth indication information sent by a first access network device, where the fourth indication information indicates that the quality of service requirement of the quality of service flow identifier QFI bound to the data of the first service is not met, and the first access network device is configured to carry the first session of the first UE; the session management network element sends second steering information based on the fourth indication information, where the second steering information indicates that the data of the first service is transmitted through the second UE, or indicates that the data of the first service is preferentially transmitted through the second UE, or indicates that the data of the first service is switched from being transmitted through the first UE to being transmitted through the second UE; the session management network element sends second information to a user plane function network element based on the fourth indication information, where the second information indicates that the data of the first service is to be sent to the second access network device, the data of the first service is transmitted through a first IP address, the first IP address is an IP address associated with the first session of the first UE and the second session of the second UE, and the second access network device is configured to carry the second session of the second UE.

Based on the method described in the tenth aspect, an association relationship between the first session of the first UE and the second session of the second UE may be established in advance, and subsequently, service data may be triggered to be switched between UEs in the mobile communication device for transmission according to a requirement. By establishing the association relationship between the first session of the first UE and the second session of the second UE, the first session of the first UE and the second session of the second UE can share the same IP address, and an IP address used for the service data remains unchanged before and after the switching between UEs in the mobile communication device, thereby maintaining service continuity. In addition, the association relationship between the first session of the first UE and the second session of the second UE is established in advance, which facilitates timely switching of the service data to the second UE for transmission subsequently.

In a possible embodiment, the second information includes an identifier of the first N4 session, address information of the second access network device, and an identifier of the first service, where the identifier of the first N4 session is an N4 session identifier associated with the first session of the first UE.

In a possible embodiment, the session management network element may further receive a second message, where the second message carries a subscription permanent identifier SUPI of the first user equipment UE, an identifier of the first session of the first UE, a SUPI of the second UE, an identifier of the second session of the second UE, and a second session establishment request, where the second session establishment request is used to request establishment of the second session of the second UE;

A specific implementation in which the session management network element stores the association relationship between the identifier of the second session of the second UE and the identifier of the first session of the first UE is: in response to the second message, the session management network element stores the association relationship between the identifier of the second session of the second UE and the identifier of the first session of the first UE.

Based on this possible embodiment, the second session of the second UE can be successfully established, and an association between the first session of the first UE and the second session of the first UE can be established.

In a possible embodiment, the second message is used to request to associate the first session of the first UE with the second session of the second UE.

In a possible embodiment, the second message further includes an association indication, which is used to indicate to associate the first session of the first UE with the second session of the second UE.

In a possible embodiment, before receiving the second message sent by the second network element, the session management network element may further receive the SUPI of the first UE, an identifier of the first session, a data network name DNN, single network slice selection assistance information S-NSSAI, a first session establishment request, and first indication information, which are sent by the first network element, where the first session establishment request is used to request establishment of the first session of the first UE, the first indication information indicates that the first session of the first UE may be associated between different UEs; and the session management network element may further determine that the first session of the first UE is allowed to be associated between different UEs; and the session management network element may further send second indication information to the first network element, where the second indication information indicates that the first session of the first UE is allowed to be associated between different UEs.

Based on this possible embodiment, it is beneficial for the mobile communication device to accurately determine whether the first session can be associated between different UEs.

In a possible embodiment, a specific implementation manner in which the session management network element determines that the first session of the first UE is allowed to be associated between different UEs is as follows: the session management network element determines, based on the local configuration of the DNN, that the first session of the first UE is allowed to be associated between different UEs; or the session management network element determines, based on subscription data or policy information corresponding to the first session, that the first session of the first UE is allowed to be associated between different UEs.

Based on this possible embodiment, it is possible to accurately determine whether the first session of the first UE is allowed to be associated between different UEs.

In a possible embodiment, if the data of the first service is allowed to be switched between different UEs, or the service data transmitted in the first session is allowed to be switched between different UEs, or the data of the first service is preferentially transmitted through the first UE, or the data of the first service is preferentially transmitted through the first network, where the first network is the network on which the first UE camps, or the data of the first service is preferentially transmitted through the first RAT, where the first RAT is the RAT supported by the first access network device, and the first access network device corresponds to the first UE, the session management network element sends fifth indication information to the first access network device, wherein the fifth indication information is used to indicate that the first access network device sends the fourth indication information when the QoS requirement of the QFI bound to the data of the first service is not met.

Based on this possible embodiment, the first access network device is notified to send the fourth indication information when the data of the first service is allowed to be switched between different UEs and the QoS requirement of the QFI bound to the data of the first service is not met. This approach helps to reduce signaling overhead.

According to an eleventh aspect, this application provides a service data processing method, which includes:
the second network element receives a first message, where the first message carries information about a first session of a first user equipment UE, an identifier of a second session of a second UE, and a second session establishment request, where the second session establishment request is used to request establishment of the second session of the second UE; and the second network element sends a second message to a session management network element based on the first message, where the second message carries a subscription permanent identifier SUPI of the first UE, an identifier of the first session, a SUPI of the second UE, an identifier of the second session, and the second session establishment request, where the session management network element is a network element that manages the first session of the first UE.

Based on the method described in the eleventh aspect, it is beneficial for successfully establishing the second session of the second UE and for establishing an association between the first session of the first UE and the second session of the second UE.

In a possible embodiment, the information of the first session of the first UE includes one or more of the following: an identifier of the first session of the first UE, a data network name DNN corresponding to the first session of the first UE, or single network slice selection assistance information S-NSSAI corresponding to the first session of the first UE. Based on this possible embodiment, it is beneficial for accurately determining the first session of the first UE.

In a possible embodiment, the first message further includes the subscription concealed identifier SUCI of the first UE or the SUPI of the first UE. Based on this possible embodiment, it is beneficial to accurately determine the SUPI of the first UE.

In a possible embodiment, the information of the first session of the first UE is an identifier of the first session of the first UE; a specific implementation manner in which the second network element sends the second message to the session management network element based on the first message is: the second network element obtains the SUPI of the first UE and an identifier of the session management network element based on the device identification information and the identifier of the first session; where the device identification information is the SUPI of the second UE, or the first message further includes the SUCI of the first UE, and the device identification information is the SUCI of the first UE; and the second network element sends the second message to the session management network element.

Based on this possible embodiment, the second network element can accurately obtain the SUPI of the first UE and the identifier of the session management network element used to manage the first session of the first UE, so as to send the second message to the session management network element.

In a possible embodiment, a specific implementation manner in which the second network element obtains the SUPI of the first UE and the identifier of the session management network element based on the device identification information and the identifier of the first session is as follows: the second network element sends the device identification information and the identifier of the first session to a unified data management network element; and the second network element receives the SUPI of the first UE and the identifier of the session management network element sent by the unified data management network element.

Based on this possible embodiment, the second network element can accurately obtain the SUPI of the first UE and the identifier of the session management network element used to manage the first session of the first UE.

In a possible embodiment, a specific implementation manner in which the second network element obtains the SUPI of the first UE and the identifier of the session management network element based on the device identification information and the identifier of the first session is as follows: the second network element sends the device identification information to an authentication server function network element or a unified data management network element; the second network element receives the SUPI of the first UE sent by the authentication server function network element or the unified data management network element; the second network element sends the SUPI of the first UE and the identifier of the first session to the unified data management network element; and the second network element receives the identifier of the session management network element sent by the unified data management network element.

Based on this possible embodiment, the second network element can accurately obtain the SUPI of the first UE and the identifier of the session management network element used to manage the first session of the first UE.

In a possible embodiment, the information of the first session of the first UE includes the DNN corresponding to the first session of the first UE and/or the S-NSSAI corresponding to the first session of the first UE; a specific implementation manner in which the second network element sends the second message to the session management network element based on the first message is: the second network element obtains the SUPI of the first UE, the identifier of the session management network element, and the identifier of the first session based on the device identification information and the information of the first session of the first UE; where the device identification information is the SUPI of the second UE, or the first message further includes the SUCI of the first UE, and the device identification information is the SUCI of the first UE; and the second network element sends the second message to the session management network element.

Based on this possible embodiment, the second network element can accurately obtain the SUPI of the first UE, the identifier of the session management network element used to manage the first session of the first UE, and the identifier of the first session, so as to send a second message to the session management network element.

In a possible embodiment, a specific implementation manner in which the second network element obtains the SUPI of the first UE, the identifier of the session management network element, and the identifier of the first session based on the device identification information and the information about the first session of the first UE is as follows: the second network element sends the device identification information and the information about the first session of the first UE to a unified data management network element; and the second network element receives the SUPI of the first UE, the identifier of the session management network element, and the identifier of the first session sent by the unified data management network element.

Based on this possible embodiment, the second network element can accurately obtain the SUPI of the first UE, the identifier of the session management network element used to manage the first session of the first UE, and the identifier of the first session.

In a possible embodiment, a specific implementation manner in which the second network element obtains the SUPI of the first UE, the identifier of the session management network element, and the identifier of the first session based on the device identification information and the information about the first session of the first UE is as follows: the second network element sends the device identification information to an authentication server function network element or a unified data management network element; the second network element receives the SUPI of the first UE from the unified data management network element; the second network element sends the SUPI of the first UE and the information about the first session of the first UE to the authentication server function network element or the unified data management network element; and the second network element receives the identifier of the session management network element and the identifier of the first session from the unified data management network element.

Based on this possible embodiment, the second network element can accurately obtain the SUPI of the first UE, the identifier of the session management network element used to manage the first session of the first UE, and the identifier of the first session.

In a possible embodiment, the first message and the second message are used to request to associate the first session of the first UE with the second session of the second UE.

In a possible embodiment, the first message and the second message further include an association indication, where the association indication is used to indicate to associate the first session of the first UE with the second session of the second UE.

According to a twelfth aspect, this application provides a service data processing method, where the method includes:
the second network element receives a fifth message, where the fifth message carries an identifier of a second session of the second UE, and the fifth message is used to request to switch the data of the first service transmitted on the first session of the first UE to the second session of the second UE for transmission; the first session of the first UE is associated with the second session of the second UE; and the second network element sends a sixth message, where the sixth message is used to request to switch the data of the first service transmitted on the first session of the first UE to the second session of the second UE for transmission, the sixth message carries session indication information, and the session indication information is used to indicate the second session of the second UE.

Based on the method described in the twelfth aspect, it is advantageous to successfully switch the data of the first service transmitted in the first session of the first UE to the second session of the second UE for transmission. Moreover, the first session of the first UE and the second session of the second UE share the same IP address, and the IP address used for the first service data remains unchanged before and after the switching between UEs, thereby maintaining service continuity.

In a possible embodiment, the first message may also be received, where the first message carries information about a first session of the first UE, an identifier of a second session of the second UE, and a second session establishment request, where the second session establishment request is used to request establishment of the second session of the second UE; and a second message may also be sent to a session management network element based on the first message, where the second message carries a subscription permanent identifier SUPI of the first user equipment UE, an identifier of the first session of the first UE, a SUPI of the second UE, an identifier of the second session of the second UE, and a second session establishment request, where the second session establishment request is used to request establishment of the second session of the second UE, and the session management network element is a network element that manages the first session of the first UE.

In a possible embodiment, the first message and the second message are used to request to associate the first session of the first UE with the second session of the second UE.

In a possible embodiment, the first message and the second message further include an association indication, where the association indication is used to indicate to associate the first session of the first UE with the second session of the second UE.

In a possible embodiment, the information about the first session of the first UE includes one or more of the following: an identifier of the first session of the first UE, a data network name DNN corresponding to the first session of the first UE, or single network slice selection assistance information S-NSSAI corresponding to the first session of the first UE. Based on this possible embodiment, the first session of the first UE can be accurately determined.

In a possible embodiment, the first message further includes the subscription concealed identifier SUCI of the first UE or the SUPI of the first UE. Based on this possible embodiment, the SUPI of the first UE can be accurately determined.

In a possible embodiment, the information of the first session of the first UE is an identifier of the first session of the first UE; a specific implementation manner in which the second network element sends the second message to the session management network element based on the first message is: the second network element obtains the SUPI of the first UE and the identifier of the session management network element based on the device identification information and the identifier of the first session; where the device identification information is the SUPI of the second UE, or the first message further includes the SUCI of the first UE, and the device identification information is the SUCI of the first UE; and the second network element sends the second message to the session management network element.

Based on this possible embodiment, the second network element can accurately obtain the SUPI of the first UE and the identifier of the session management network element that manages the first session of the first UE, so as to send a second message to the session management network element.

In a possible embodiment, a specific implementation manner in which the second network element obtains the SUPI of the first UE and the identifier of the session management network element based on the device identification information and the identifier of the first session is as follows: the second network element sends the device identification information and the identifier of the first session to a unified data management network element; the second network element receives the SUPI of the first UE and the identifier of the session management network element sent by the unified data management network element.

Based on this possible embodiment, the second network element can accurately obtain the SUPI of the first UE and the identifier of the session management network element used to manage the first session of the first UE.

In a possible embodiment, a specific implementation manner in which the second network element obtains the SUPI of the first UE and the identifier of the session management network element based on the device identification information and the identifier of the first session is as follows: the second network element sends the device identification information to an authentication server function network element or a unified data management network element; the second network element receives the SUPI of the first UE sent by the authentication server function network element or the unified data management network element; the second network element sends the SUPI of the first UE and the identifier of the first session to the unified data management network element; and the second network element receives the identifier of the session management network element sent by the unified data management network element.

Based on this possible embodiment, the second network element can accurately obtain the SUPI of the first UE and the identifier of the session management network element used to manage the first session of the first UE.

In a possible embodiment, the information of the first session of the first UE includes the DNN corresponding to the first session of the first UE and/or the S-NSSAI corresponding to the first session of the first UE; a specific implementation manner in which the second network element sends the second message to the session management network element based on the first message is as follows:the second network element obtains the SUPI of the first UE, the identifier of the session management network element, and the identifier of the first session based on the device identification information and the information of the first session of the first UE, where the device identification information is the SUPI of the second UE, or the first message further includes the SUCI of the first UE, and the device identification information is the SUCI of the first UE; and the second network element sends a second message to the session management network element.

Based on this possible embodiment, the second network element can accurately obtain the SUPI of the first UE and the identifier of the session management network element used to manage the first session of the first UE.

In a possible embodiment, a specific implementation manner in which the second network element obtains the SUPI of the first UE, the identifier of the session management network element, and the identifier of the first session based on the device identification information and the information of the first session of the first UE is as follows: the second network element sends the device identification information and the information of the first session of the first UE to a unified data management network element; and the second network element receives the SUPI of the first UE, the identifier of the session management network element, and the identifier of the first session that are sent by the unified data management network element.

Based on this possible embodiment, the second network element can accurately obtain the SUPI of the first UE, the identifier of the session management network element used to manage the first session of the first UE, and the identifier of the first session, so as to send a second message to the session management network element.

In a possible embodiment, a specific implementation manner in which the second network element obtains the SUPI of the first UE, the identifier of the session management network element, and the identifier of the first session based on the device identification information and the information about the first session of the first UE is as follows: the second network element sends the device identification information to an authentication server function network element or a unified data management network element; the second network element receives the SUPI of the first UE sent by the unified data management network element; the second network element sends the SUPI of the first UE and the information about the first session of the first UE to the authentication server function network element or the unified data management network element; and the second network element receives the identifier of the session management network element and the identifier of the first session sent by the unified data management network element.

Based on this possible embodiment, the second network element can accurately obtain the SUPI of the first UE, the identifier of the session management network element used to manage the first session of the first UE, and the identifier of the first session, so as to send a second message to the session management network element.

In a possible embodiment, the session indication information includes the SUPI of the second UE and an identifier of the second session, or the session indication information is information allocated by a session management network element to identify the second session of the second UE.

In a possible embodiment, the fifth message and the sixth message further include a switching indication, where the switching indication is used to indicate to switch the data of the first service transmitted in the first session of the first UE to the second session of the second UE for transmission, or the switching indication is used to indicate to switch the data of the first service transmitted in the first session associated with the second UE to the second session of the second UE for transmission.

For the beneficial effects of the twelfth aspect, refer to the beneficial effects of the eleventh aspect, which will not be described herein again.

According to a thirteenth aspect, this application provides a communication apparatus. For example, the communication apparatus may be a mobile communication device, a first network element, a second network element, or a session management network element, or may be a module (for example, a processor, a chip, or a chip system) applied to a mobile communication device, a first network element, a second network element, or a session management network element, or may be a logical node, a logical module, or software that can implement all or a part of the functions of the mobile communication device, the first network element, the second network element, or the session management network element. The communication apparatus includes a module/unit configured to perform any one of the methods in the first aspect to the twelfth aspect and the possible implementations thereof.

According to a fourteenth aspect, this application provides a communication apparatus, including a processor, where the processor is coupled to a memory, the memory is configured to store a program or instructions, and when the program or the instructions are executed by the processor, the apparatus is enabled to perform the method according to any one of the first aspect to the twelfth aspect.

According to a fifteenth aspect, this application provides a chip. The chip includes a processor and an interface, where the processor is coupled to the interface; the interface is configured to receive or output a signal; and the processor is configured to execute code instructions, so that the chip performs the method according to any one of the first aspect to the twelfth aspect.

According to a sixteenth aspect, this application provides a computer-readable storage medium, where the computer-readable storage medium stores computer-executable instructions, and when the computer-executable instructions are invoked, any one of the first aspect to the twelfth aspect is performed.

According to a seventeenth aspect, this application provides a computer program product, where the computer program product includes computer program code, and when the computer program code is run, any one of the first aspect to the twelfth aspect is performed.

According to an eighteenth aspect, this application provides a communication system, where the communication system includes a mobile communication device configured to perform the method according to the first aspect, a session management network element configured to perform the session management network element according to the second aspect, a first policy control network element configured to perform the third aspect, and a second network element configured to perform the eleventh aspect.

Alternatively, the communication system includes a mobile communication device configured to perform the method according to the first aspect, a first network element configured to perform the method according to the fourth aspect, a second policy control network element configured to perform the method according to the fifth aspect, a session management network element configured to perform the method according to the sixth aspect, a first policy control network element configured to perform the method according to the third aspect, and a second network element configured to perform the method according to the eleventh aspect.

Alternatively, the communication system includes a mobile communication device configured to perform the method according to the seventh aspect, a session management network element configured to perform the method according to the eighth aspect, and a second network element configured to perform the method according to the twelfth aspect.

Alternatively, the communication system includes a mobile communication device configured to perform the method according to the ninth aspect, a session management network element configured to perform the method according to the tenth aspect, and a second network element configured to perform the method according to the eleventh aspect.

### BRIEF DESCRIPTION OF DRAWINGS

FIG. 1 is a schematic diagram of a mobile communication device including two UEs according to this application;
FIG. 2 is a schematic diagram of a 5G communication system according to this application;
FIG. 3 is a schematic diagram of a system architecture according to this application;
FIG. 4 is a schematic flowchart of a service data processing method according to this application;
FIG. 5 is a schematic flowchart of a service data processing method according to this application;
FIG. 6 is a schematic diagram of a scenario in which a session of a first UE and a session of a second UE share the same IP address according to this application;
FIG. 7 to FIG. 14 are schematic flowcharts of a service data processing method according to this application;
FIG. 15 is a schematic structural diagram of a communication apparatus 1500 according to this application;
FIG. 16 is a schematic structural diagram of another communication apparatus 1600 according to this application.

### DESCRIPTION OF EMBODIMENTS

The following further describes specific embodiments of this application in detail with reference to the accompanying drawings.

In the specification, claims, and accompanying drawings of this application, the terms "first", "second", and the like are intended to distinguish between different objects, but do not indicate a particular order. In addition, the terms "include", "have", and any other variant thereof are intended to cover a non-exclusive inclusion. For example, a process, method, system, product, or device that includes a series of steps or units is not limited to those listed steps or units, but optionally further includes other steps or units that are not listed, or optionally further includes other inherent steps or units of these processes, methods, systems, products, or devices.

The term "embodiment" mentioned in this specification means that a particular characteristic, structure, or feature described with reference to the embodiment may be incorporated into at least one embodiment of this application. The appearance of this phrase in various locations in this specification does not necessarily refer to the same embodiment, nor is it an independent or optional embodiment exclusive from another embodiment. A person skilled in the art clearly understands, explicitly or implicitly, that embodiments described in this specification may be combined with other embodiments.

In this application, "at least one (item)" means one or more, "a plurality of" means two or more, "at least two (items)" means two or three or more, and "and/or" is used to describe an association relationship between associated objects, and indicates that three relationships may exist. For example, "A and/or B" may indicate the following three cases: only A exists, only B exists, and both A and B exist, where A and B may be singular or plural. The character "/" generally indicates an "or" relationship between the associated objects. "At least one of the following" or a similar expression thereof means any combination of these items, including any combination of one item or a plurality of items. For example, "at least one of a, b, or c" may indicate a, b, c, "a and b", "a and c", "b and c", or "a, b, and c", where a, b, and c may be singular or plural.

In order to prevent data of the same service from being simultaneously transmitted through two UEs in a mobile communication device, embodiments of this application provide a service data processing method and a communication apparatus.

To better understand the embodiments of this application, the 5G communication system is first described below. As shown in FIG. 2, network functions and entities included in the 5G communication system mainly include a UE, (R)AN, UPF, DN, AUSF, AMF, SMF, NSSF, NEF, NRF, PCF, UDM, and AF. For full names of these network functions and entities, refer to the following descriptions. FIG. 2 shows interaction relationships between network functions and entities and corresponding interfaces. For example, the UE and the AMF may interact with each other through an N1 interface, and an interaction message is referred to as an N1 message. Some interfaces are implemented by using a service-based interface manner.

The UE, (R)AN, UPF, and DN in FIG. 2 are generally referred to as data plane network functions and entities. Data traffic of a user may be transmitted through a PDU session established between the UE and the DN, and the transmission passes through the (R)AN and the UPF, which are two network function entities. The other network functions and entities are referred to as control plane network functions and entities, and are mainly responsible for functions such as authentication and authorization, registration management, session management, mobility management, and policy control, thereby implementing reliable and stable transmission of user-plane traffic. The user plane is used to carry service data, and the control plane is used to carry signaling messages.
1. User equipment (user equipment, UE): may also be referred to as terminal equipment. For example, user equipment may be a handheld terminal, a laptop computer, a cellular phone, a smartphone, a tablet computer, a handheld device, an AR device, a VR device, a machine type communication terminal, or other devices that can access a network. The UE communicates with the access network device through some air interface technology (such as NR or LTE technology). UEs can also communicate with each other through some air interface technology (such as NR or LTE technology). In vehicle-to-everything communication, the communication terminal on a vehicle is a type of UE, and a road side unit (Road Side Unit, RSU) can also function as a type of UE. An unmanned aerial vehicle equipped with a communication terminal can be considered as a type of UE.
2. Radio access network (radio access network, RAN) device: is primarily responsible for functions such as radio resource management, quality of service management, data compression, and encryption on the air interface side. The access network device may include various forms of base stations, such as a macro base station, a micro base station, a relay station, an access point, and the like. In systems using different radio access technologies, the names of devices with base station functions may vary. For example, in a 5th generation (5th generation, 5G) system, the device is referred to as a gNB.
3. User plane function (user plane function, UPF) network element: Responsible for forwarding and receiving user data in the UE. It can receive user data from the data network and transmit it to the UE through access network devices; the UPF network element can also receive user data from the UE through access network devices and forward it to the data network. The transmission resources and scheduling functions provided by the UPF network element for the UE are managed and controlled by the SMF network element.
4. Data network (data network, DN): also known as packet data network (packet data network, PDN), which is typically a network located outside the network of an operator, such as a third-party network. An operator network can connect to multiple DNs, on which various services can be deployed to provide data and/or voice services to UEs.
5. Authentication server function (authentication server function, AUSF) network element: Supports access authentication for both 3GPP and non-3GPP networks.
6. Access and mobility management function (access and mobility management function, AMF) network element: This is a core network element primarily responsible for the signaling processing part, including functions such as access control, mobility management, attach and detach procedures, and gateway selection. When the AMF network element provides services for a session in the UE, it offers control plane storage resources for that session to store the session identifier, the identifier of the SMF network element associated with the session identifier, and other related information.
7. Session management function (session management function, SMF) network element: Responsible for user plane network element selection, user plane network element redirection, Internet Protocol (IP) address allocation, establishment, modification, and release of bearers, as well as QoS control.
8. Network slice selection function (network slice selection function, NSSF) network element: Primarily responsible for network slice selection, determining the network slice instances that a UE is allowed to access based on slice selection assistance information of the UE, subscription information, and other relevant data.
9. Network exposure function (network exposure function, NEF) network element: Primarily supports secure interaction between 3GPP networks and third-party applications.
10. Network repository function (network repository function, NRF) network element: Supports the registration and discovery of network functions.
11. Policy control function (policy control function, PCF) network element: Responsible for decision-making in policy control, providing policy rules for control plane functions, and offering traffic-based charging control functions.
12. Unified data management (unified data management, UDM) network element: Primarily responsible for managing the subscription data of UEs, including the storage and management of UE identifiers, UE access authorization, and more.
13. Application function (application function, AF) network element: Primarily supports interaction with the 3GPP core network to provide services, such as influencing data routing decisions, policy control functions, or providing some third-party services to the network side.

To better understand embodiments of this application, the following describes a system architecture of embodiments of this application:
The technical solutions in embodiments of this application may be applied to various communication systems, for example, a global system for mobile communications (global system of mobile communication, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a 5th generation (5th generation, 5G) system or a new radio (new radio, NR) system, and a future communication system.

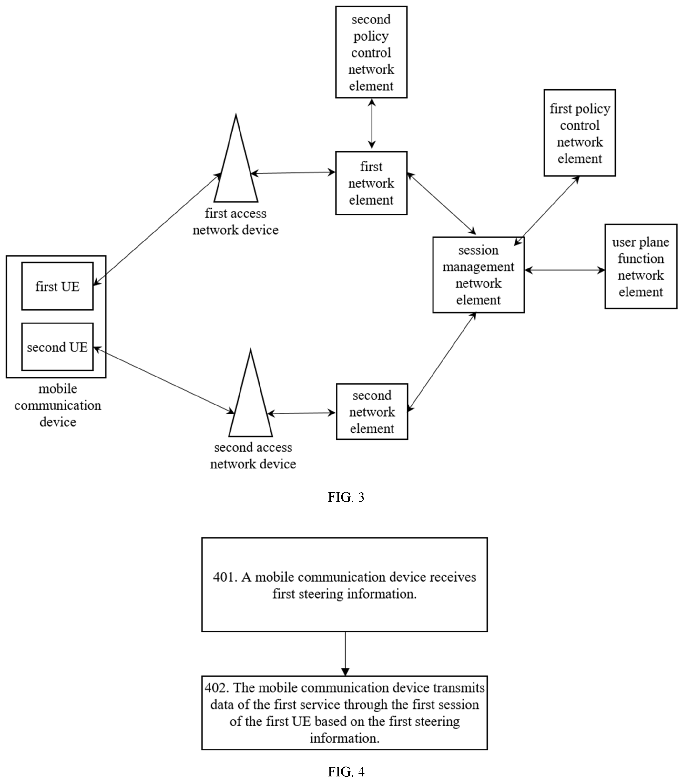

Referring to FIG. 3, FIG. 3 is a schematic diagram of a system architecture according to an embodiment of this application. As shown in FIG. 3, the system architecture includes a mobile communication device, a first access network device, a second access network device, a first network element, a second network element, a session management network element, a user plane function network element, a first policy control network element, and a second policy control network element. As shown in FIG. 3, the mobile communication device includes first UE and second UE. The first UE may communicate with the first network element via the first access network device, the first network element may communicate with the second policy control network element, the first network element may communicate with the session management network element, and the session management network element may communicate with the user plane function network element. The second UE may communicate with the second network element via the second access network device, and the second network element may communicate with the session management network element. Optionally, the mobile communication device has two sets of radio transceiver devices. When the first UE communicates with the first access network device, the second UE may also communicate with the second access network device, that is, the first UE and the second UE may both be connected to the access network device at the same time, or the first UE and the second UE may both be in a connected state at the same time, or the first UE and the second UE may both access the network at the same time. Therefore, the first UE and the second UE may simultaneously transmit data for the mobile communication device.
1. Mobile communication device: may also be referred to as a dual steer device (dual steer device). As shown in FIG. 3, the mobile communication device includes a first UE and a second UE. Optionally, the mobile communication device may further include more UEs, which is not limited in this embodiment of this application. In this embodiment of this application, the two UEs included in the mobile communication device may be two devices/apparatuses. Alternatively, the two UEs included in the mobile communication device may be two universal subscriber identity modules (universal subscriber identity module, USIM), for example, the first UE may be a first USIM, and the second UE may be a second USIM. Alternatively, the mobile communication device is a terminal device, and the terminal device includes two USIMs, where the first UE corresponds to the first USIM, and the second UE corresponds to the second USIM. Correspondingly, in this embodiment of this application, the mobile communication device may be replaced with a terminal device, the UE may be replaced with a USIM, the first UE may be replaced with a first USIM, and the second UE may be replaced with a second USIM. Alternatively, the mobile communication device is a dual steer device, and the dual steer device includes two USIMs, where the first UE corresponds to the first USIM, and the second UE corresponds to the second USIM. Correspondingly, in this embodiment of this application, the mobile communication device may be replaced with a dual steer device, the UE may be replaced with a USIM, the first UE may be replaced with a first USIM, and the second UE may be replaced with a second USIM.
2. First access network device and second access network device: The first UE camps on a first network, and the second UE camps on a second network, that is, the first UE registers with the first network, and the second UE registers with the second network. The first network and the second network may be the same or different. For example, the network is a public land mobile network (public land mobile network, PLMN), the first network is a first PLMN, and the second network is a second PLMN. After the first UE and the second UE camp on the network, both the first UE and the second UE may be connected to the access network device at a same time, or both the first UE and the second UE may be in a connected state at the same time, or both the first UE and the second UE may access the network at the same time. For example, when the first UE is in the connected state, the second UE may also be in the connected state. The first access network device is an access network device corresponding to the first UE, that is, the first UE is connected to the first network by using the first access network device. The second access network device is an access network device corresponding to the second UE, that is, the second UE is connected to the second network by using the second access network device. Optionally, the first access network device and the second access network device may be a same device or different devices.

The access network device in the embodiments of this application is mainly responsible for functions such as radio resource management, quality of service management, data compression, and data encryption on an air interface side. The access network device may include base stations in various forms, for example, a macro base station, a micro base station, a relay station, an access point, and the like. For example, the access network device may be a base station (base station), an evolved NodeB (evolved NodeB, eNodeB), a next generation NodeB (next generation NodeB, gNB), a next generation base station in a sixth generation (6th generation, 6G) mobile communication system, a base station in a future mobile communication system, or the like. All or some of the functions of the access network device in this application may also be implemented by software running on hardware, or by virtualized functions instantiated on a platform (for example, a cloud platform). The access network device in this application may alternatively be a logical node, a logical module, or software that can implement all or some of the functions of the access network device. In the embodiments of this application, a form of the access network device is not limited. An apparatus configured to implement a function of the access network device may be the access network device, or may be an apparatus that can support the access network device in implementing the function, for example, a chip system. The apparatus may be installed in the access network device or used in conjunction with the access network device. The radio access technology (radio access technology, RAT) types supported by the first access network device and the second access network device may be the same or different. In other words, the radio access technologies (radio access technology, RAT) provided by the first access network device and the second access network device may be the same or different. For example, the radio access technology type may be evolved universal terrestrial radio access (evolved universal terrestrial radio access, E-UTRA), non-3GPP (Non-3GPP), 5G NR, 5G NR (satellite), or 6G. 5G NR (satellite) may be further divided into low earth orbit (low earth orbit, LEO), medium earth orbit (medium earth orbit, MEO), and geostationary earth orbit (geostationary earth orbit, GEO).

3. First network element and second network element: The first network element and the second network element are core network devices. The first network element may provide mobility management, access management, registration management, or session-related services for the first UE. The second network element may provide mobility management, access management, registration management, or session-related services for the second UE. The first UE may communicate with the first network element via the first access network device. The second UE may communicate with the second network element via the second access network device.

For example, the first network element may receive a registration request message sent by the first UE and perform relevant processing for the registration of the first UE; the second network element may receive a registration request message sent by the second UE and perform relevant processing for the registration of the second UE. For another example, the first network element may receive a request message sent by the first UE for establishing a session and perform relevant processing for session establishment; the second network element may receive a request message sent by the second UE for establishing a session and perform relevant processing for session establishment.

In a 5G system, the first network element and the second network element may be AMF network elements. In a 6G system or a system after 6G, the first network element and the second network element may be referred to as AMF network elements or other names, which is not limited in the embodiments of this application. Optionally, the first network element and the second network element may be the same network element or different network elements.
4. Session management network element: responsible for user plane network element selection, user plane network element redirection, Internet Protocol (IP) address allocation, establishment, modification, and release of bearers, and QoS control. In a 5G system, the session management network element may be an SMF network element. In a 6G system or a system after 6G, the session management network element may be referred to as an SMF network element or by another name, which is not limited in the embodiments of this application.
5. User plane function network element: responsible for forwarding and receiving user data in the UE. It can receive user data from the data network and transmit it to the UE through an access network device; it can also receive user data from the UE through an access network device and forward it to the data network. In a 5G system, the user plane function network element may be a UPF network element. In a 6G system or a system after 6G, the user plane function network element may be referred to as a UPF network element or by another name, which is not limited in the embodiments of this application.
6. First policy control network element: Mainly responsible for session management policy control, for example, may generate policy and charging control rules (PCC rules). For instance, in a 5G system, the first policy control network element may be referred to as an SM-PCF network element. In future communication systems, the first policy control network element may still be an SM-PCF network element, or it may have other names, which is not limited in this application.
7. Second policy control network element: Mainly responsible for access mobility policy control, for example, may generate a UE routing selection policy (UE route selection policy, URSP). For instance, in a 5G system, the second policy control network element may be referred to as an AM-PCF network element. In future communication systems, the second policy control network element may still be an AM-PCF network element, or it may have other names, which is not limited in this application. Optionally, the first policy control network element and the second policy control network element may be located on the same policy control network element or on different policy control network elements.

The following further describes the service data processing method and the communication apparatus with reference to the accompanying drawings. It may be understood that, in the embodiments of this application, an example is used to illustrate the interaction by using a mobile communication device, a first access network device, a second access network device, a first network element, a second network element, a session management network element, a user plane function network element, a first policy control network element, and a second policy control network element as the entities executing the interaction as an example, but the entities executing the interaction are not limited in this application. For example, the mobile communication device (or the first access network device, the second access network device, the first network element, the second network element, the session management network element, the user plane function network element, the first policy control network element, or the second policy control network element) in the method provided in this application may also be a chip, a chip system, or a processor applied to a mobile communication device (or the first access network device, the second access network device, the first network element, the second network element, the session management network element, the user plane function network element, the first policy control network element, or the second policy control network element), or may be a logical node, a logical module, or software that can implement all or a part of the functions of the mobile communication device (or the first access network device, the second access network device, the first network element, the second network element, the session management network element, the user plane function network element, the first policy control network element, or the second policy control network element).

Please refer to FIG. 4, which is a schematic flowchart of a service data processing method according to an embodiment of this application. The method includes the following steps:
401. A mobile communication device receives first steering information.

There are the following four possible implementations for the first steering information:
(1) The first steering information indicates that data of the first service is transmitted through the first UE.

In other words, the data of the first service is directed to the first UE for transmission.

(2) The first steering information indicates that the data of the first service is preferentially transmitted through the first UE.

For example, the first steering information may include a UE priority list corresponding to the first service (the priority of the first UE is higher than that of the second UE). The first steering information indicates that the first UE is preferentially selected or more likely to be selected to transmit the data of the first service.

(3) The first steering information indicates that the data of the first service is preferentially transmitted through the first network, where the first network is a network on which the first UE camps.

For example, the first steering information may include a network priority list corresponding to the first service (the priority of the first network is higher than that of the second network), and the second network is a network on which the second UE camps. The first steering information indicates that the first UE corresponding to the first network is preferentially selected or more likely to be selected to transmit the data of the first service.

(4) The first steering information indicates that the data of the first service is preferentially transmitted through the first RAT, where the first RAT is a RAT supported by the first access network device. As described in the system architecture, the first access network device corresponds to the first UE. In other words, the first UE is connected to the first access network device, and the first access network device supports the first RAT.

For example, the first steering information may include a RAT priority list corresponding to the first service (the priority of the first RAT is higher than that of the second RAT), where the second RAT is a RAT supported by the second access network device. The first steering information indicates a preference or inclination to select or preferentially choose the first UE corresponding to the first RAT to transmit the data of the first service.

Optionally, the first steering information specifically indicates that the data of the first service is transmitted through the first UE, or indicates that the data of the first service is preferentially transmitted through the first UE/the first network/the first RAT. In other words, the first steering information can be used to control the mobile communication device in selecting the UE for transmitting the data of the first service.

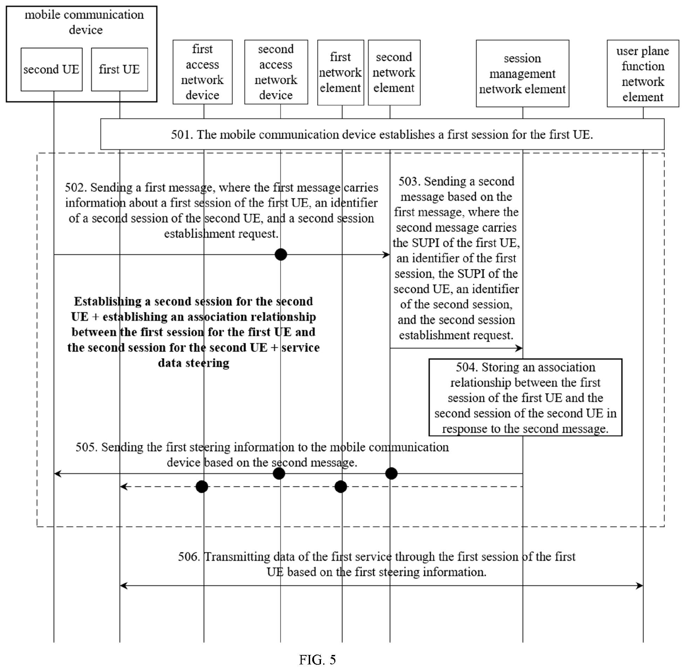

In a possible embodiment, during the process of establishing an association relationship between the first session of the first UE and the second session of the second UE, the session management network element is triggered to send first steering information to the mobile communication device. For example, for specific implementation details, refer to the descriptions in the embodiments corresponding to FIG. 5 to FIG. 7, where FIG. 5 to FIG. 7 use an example in which the mobile communication device first establishes the first session of the first UE, then establishes the second session of the second UE, and establishes an association relationship between the first session of the first UE and the second session of the second UE. The implementation principle is the same when the mobile communication device first establishes the second session of the second UE, then establishes the first session of the first UE, and establishes an association relationship between the first session of the first UE and the second session of the second UE, and details are not described again in this embodiment of this application. The session mentioned throughout this embodiment of this application may be a PDU session, or may also be referred to by another session name, which is not limited in this embodiment of this application.

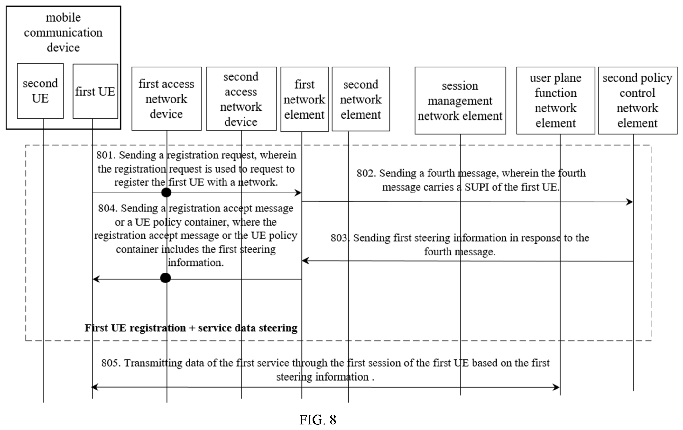

In a possible embodiment, when a certain UE (the first UE or the second UE) in the mobile communication device registers, the second policy control network element may be triggered to send the first steering information to the mobile communication device. For example, the mobile communication device may trigger the second policy control network element to send the first steering information to the mobile communication device when the first UE in the mobile communication device registers. Alternatively, the mobile communication device may trigger the second policy control network element to send the first steering information to the mobile communication device when the second UE in the mobile communication device registers. For instance, reference may be made to the descriptions in the embodiments corresponding to FIG. 8 to FIG. 10, where an example is provided where the first steering information is sent to the mobile communication device by the second policy control network element when the first UE registers, thereby illustrating the process.

402. The mobile communication device transmits data of the first service through the first session of the first UE based on the first steering information.

In the embodiments of this application, after receiving the first steering information, the mobile communication device associates the first service with the first UE based on the first steering information. When the data of the first service is to be sent, the mobile communication device sends uplink data of the first service through the first session of the first UE and receives downlink data of the first service through the first session of the first UE. During data transmission, the PDU layer may associate the first service with the first session of the first UE, so as to transmit the uplink data and downlink data of the first service through the first session of the first UE. The first session of the first UE is transmitted/borne by the first access network device.

For example, if the session management network element is triggered to send the first steering information to the mobile communication device during the process of establishing an association between the first session of the first UE and the second session of the second UE, then after the mobile communication device establishes the first session of the first UE, it receives the first steering information. When the first service is triggered or there is first service data to be sent, the mobile communication device selects the first UE for the first service based on the first steering information, and transmits the data of the first service through the first session of the first UE.

For another example, if the second policy control network element is triggered to send the first steering information to the mobile communication device when a certain UE (the first UE or the second UE) within the mobile communication device is being registered, then after the mobile communication device receives the first steering information, when the first service is triggered or there is first service data to be sent, the mobile communication device selects the first UE for the first service based on the first steering information, and determines the session parameters (such as DNN and/or S-NSSAI) corresponding to the first service based on the policy information (such as URSP) of the first UE, thereby establishing the first session of the first UE using these session parameters, and transmitting the data of the first service through the first session of the first UE.

Optionally, if the first steering information indicates that the data of the first service is preferentially transmitted through the first UE, the first network, or the first RAT, the mobile communication device may transmit the data of the first service through the first session of the first UE based on the first steering information and the signal quality between the mobile communication device and the first access network device. For example, the mobile communication device selects the first UE and transmits the data of the first service through the first session of the first UE when the signal quality between the mobile communication device and the first access network device is higher than a specified signal threshold. When the signal quality between the mobile communication device and the first access network device is lower than the specified signal threshold, and the signal quality between the mobile communication device and the second access network device is higher than the specified signal threshold, the mobile communication device selects the second UE and transmits the data of the first service through the second session of the second UE.

In a possible embodiment, the mobile communication device may further receive third steering information.

There are four possible implementations for the third steering information:
1) The third steering information indicates that the data of the second service is transmitted through the second UE.
2) The third steering information indicates that the data of the second service is preferentially transmitted through the second UE.

For example, the third steering information may include a UE priority list corresponding to the second service (a priority of the second UE is higher than that of the first UE). The third steering information indicates that the second UE is preferentially selected or more likely to be selected to transmit the data of the second service.

3) The third steering information indicates that the data of the second service is preferentially transmitted through the second network.

For example, the third steering information may include a network priority list corresponding to the second service (a priority of the second network is higher than that of the first network). The third steering information indicates that the UE corresponding to the second network is preferentially selected or more likely to be selected to transmit the data of the second service.

4) The third steering information indicates that the data of the second service is preferentially transmitted through the second RAT.

For example, the third steering information may include a RAT priority list corresponding to the second service (where the priority of the second RAT is higher than that of the first RAT). The third steering information indicates a preference or inclination to select or preferentially choose a UE corresponding to the second RAT for transmitting the data of the second service.

Optionally, the third steering information specifically indicates that the data of the second service is transmitted through the second UE, or indicates that the data of the second service is preferentially transmitted through the second UE/second network/second RAT. In other words, the third steering information can be used to control the mobile communication device in selecting the UE for transmitting the data of the second service. Similarly, the third steering information may also be sent by the session management network element to the mobile communication device when a session for a certain UE (the first UE or the second UE) is created, or may be received from the second policy control network element when a certain UE (the first UE or the second UE) is registered.

Optionally, if the third steering information indicates that the data of the second service is preferentially transmitted through the second UE, the second network, or the second RAT, the mobile communication device may transmit the data of the second service through the second session of the second UE according to the steering policy information and the signal quality between the mobile communication device and the second access network device. For example, the mobile communication device transmits the data of the second service through the second session of the second UE when the signal quality between the mobile communication device and the second access network device is higher than a specified signal threshold. If the signal quality between the mobile communication device and the second access network device is lower than the specified signal threshold, and the signal quality between the mobile communication device and the first access network device is higher than the specified signal threshold, the mobile communication device selects the first UE, and transmits the data of the second service through the first session of the first UE.

In this embodiment of this application, the names of the steering information are not limited. For example, the first steering information, the second steering information, and the third steering information may also be referred to as other information names.

In another possible embodiment, the first UE and the second UE may share the first session, that is, the sessions of both the first UE and the second UE are the first session, or the session identifiers of the first UE and the second UE are the same and both identify the first session. The second session of the second UE in the embodiment corresponding to FIG. 4 may be replaced with the first session of the second UE.

It is evident that, based on the method described in FIG. 4, a mobile communication device can receive information sent from the network side for steering data of a service, thereby enabling the mobile communication device to reasonably select a UE for transmitting service data.

Referring to FIG. 5, which illustrates a schematic flowchart of a service data processing method according to an embodiment of this application. In the method embodiment described in FIG. 5, the mobile communication device first establishes the first session for the first UE, and then establishes the second session for the second UE. During the process of establishing the second session for the second UE and setting up an association between the first session for the first UE and the second session for the second UE, the session management network element is triggered to send the first steering information to the mobile communication device. The details are as follows:
501. The mobile communication device establishes a first session of the first UE.

In the embodiments of this application, the mobile communication device may initiate a procedure for establishing the first session of the first UE when the first service is initiated.

In a possible embodiment, a specific implementation manner in which the mobile communication device establishes the first session of the first UE is as follows: the mobile communication device sends an identifier of the first session of the first UE, a data network name (data network name, DNN), single network slice selection assistance information (single-network slice selection assistance information, S-NSSAI), a first session establishment request (session establishment request), and first indication information to the first network element, where the first session establishment request is used to request establishment of the first session of the first UE, and the first indication information indicates that the first session of the first UE may be associated between different UEs. For example, the first session establishment request is a PDU session establishment request (PDU session establishment request).

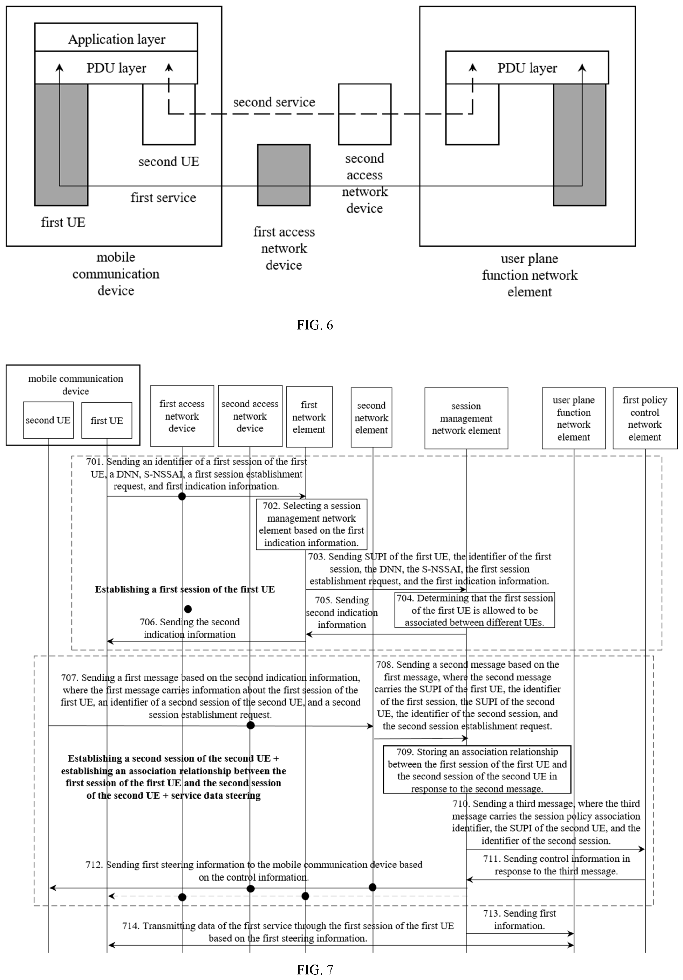

Accordingly, the first network element may receive this information. After receiving this information, the first network element selects a session management network element based on the first indication information, where the session management network element supports the association of service data between different UEs. The first network element then sends a SUPI of the first UE, the identifier of the first session, the DNN, the S-NSSAI, and the first session establishment request to the session management network element. It can be seen that by sending the first indication information to the first network element, the first network element can select, based on this first indication information, a session management network element that supports the association of service data between different UEs, thereby facilitating subsequent processing. For example, for related descriptions, refer to the descriptions under steps 701 to 702 in the embodiment corresponding to FIG. 7 below, which will not be repeated here. Of course, the mobile communication device may also establish the first session of the first UE in other ways, which is not limited in this embodiment of this application.

502. The mobile communication device sends a first message to the second network element, where the first message carries information about the first session of the first UE, an identifier of a second session of the second UE, and a second session establishment request, where the second session establishment request is used to request the establishment of the second session of the second UE. Correspondingly, the second network element may receive the first message.

In the embodiments of this application, after the mobile communication device establishes the first session of the first UE, the second session of the second UE may be established. Steps 502 to 505 describe the specific process of establishing the second session of the second UE, creating an association between the first session of the first UE and the second session of the second UE, and steering the service data.

In the embodiments of this application, the second UE in the mobile communication device may send the first message to the second network element via the second access network device.

In a possible embodiment, the first message may be a NAS message (NAS message). Optionally, the second session establishment request (session establishment request) may include an identifier of the second session. For example, the second session establishment request is a PDU session establishment request (PDU session establishment request).

In a possible embodiment, the mobile communication device may further receive second indication information, where the second indication information indicates that the first session is allowed to be associated between different UEs, or indicates that the session of the mobile communication device is allowed to be associated between different UEs; the mobile communication device may send the first message based on the second indication information. That is, the mobile communication device sends the first message when the first session is allowed to be associated between different UEs, or when the session of the mobile communication device is allowed to be associated between different UEs. Based on this possible embodiment, it is beneficial for the mobile communication device to accurately determine whether the first session can be associated between different UEs.

Optionally, the second indication information indicates that the session of the mobile communication device is allowed to be associated between different UEs. The mobile communication device may receive the second indication information from the second policy control network element through the first network element or the second network element when the first UE or the second UE is being registered. Correspondingly, the second policy control network element may send the second indication information to the mobile communication device through the first network element or the second network element.

In a possible embodiment, if the second indication information indicates that the first session is allowed to be associated between different UEs, the mobile communication device may receive the second indication information from the session management network element during the process of establishing the first session. For example, when the first network element sends the SUPI of the first UE, the identifier of the first session, the DNN, the S-NSSAI, and the first session establishment request to the session management network element, the first indication information may also be sent. After receiving this information, if the session management network element determines that the first session of the first UE allows association between different UEs, the session management network element sends the second indication information to the first network element, so that the second network element may send the second indication information to the mobile communication device. After receiving the second indication information, the mobile communication device may send the first message based on the second indication information. For example, for related descriptions, refer to the descriptions under steps 701 to 706 in the embodiment corresponding to FIG. 7, which are not described in detail herein again.

Optionally, when the first service is initiated, the mobile communication device may first trigger the establishment of the first session for the first UE, and then trigger the establishment of the second session for the second UE.

Optionally, the first message further includes a session parameter corresponding to the second session, for example, a DNN or S-NSSAI. For example, the mobile communication device determines, based on the URSP of the second UE, that the session parameter corresponding to the first service is the session parameter corresponding to the second session of the second UE. Optionally, the mobile communication device sends the first message to establish an association relationship between the first session of the first UE and the second session of the second UE when the session parameter corresponding to the second session of the second UE is the same as the session parameter corresponding to the first session of the first UE, so as to facilitate subsequent service data switching between the first UE and the second UE.

For another example, the mobile communication device generates the session parameter corresponding to the second session based on the session parameter of the first session. Optionally, the session parameter corresponding to the second session is the same as the session parameter of the first session, that is, the mobile communication device sets the session parameter corresponding to the second session to the session parameter of the first session, or uses the session parameter corresponding to the first session as the session parameter of the second session.

Optionally, the mobile communication device receives third indication information, where the third indication information is used to indicate that the data of the first service is allowed to be switched between different UEs. The mobile communication device generates, based on the third indication information, a session parameter corresponding to the second session based on the session parameter of the first session, or sets the session parameter corresponding to the second session to the session parameter of the first session. It should be understood that, in this case, the mobile communication device does not need to determine the session parameter corresponding to the second session based on the URSP of the second UE, and when the data of the first service is allowed to be switched between different UEs, the mobile communication device may directly set the session parameter corresponding to the second session to the session parameter of the first session, so that the mobile communication device can send the first message. Alternatively, further, the mobile communication device may send the first message when the mobile communication device determines, based on the URSP of the second UE, that the first service is allowed to use the session parameter corresponding to the second session (for example, the session parameter corresponding to the second session may not be the session parameter with the highest priority in the session parameters corresponding to the first service).

For example, it is assumed that in the URSP of the second UE, the session parameters corresponding to the first service include a DNN1 and a DNN2, where the priority of the DNN1 is higher than that of the DNN2, that is, the first service is allowed to use the DNN1 and the DNN2. The session parameter corresponding to the first session of the first UE is DNN2. The mobile communication device sets, based on the third indication information, the session parameter corresponding to the second session to the session parameter of the first session, that is, sets the session parameter corresponding to the second session to DNN2. Further, the mobile communication device determines, based on the URSP of the second UE, that the first service is allowed to use the DNN2, so that the mobile communication device may send the first message.

Optionally, the mobile communication device generates, based on the first steering information, the session parameter corresponding to the second session based on the session parameter of the first session, or sets the session parameter corresponding to the second session to the session parameter of the first session, so that the mobile communication device can send the first message. It should be understood that in this case, the mobile communication device does not need to determine the session parameter corresponding to the second session based on the URSP of the second UE. Alternatively, further, the mobile communication device may send the first message when the mobile communication device determines, based on the URSP of the second UE, that the first service is allowed to use the session parameter corresponding to the second session (for example, the session parameter corresponding to the second session may not be the session parameter with the highest priority in the session parameters corresponding to the first service).

For example, the first steering information includes a UE priority list (the first UE has a higher priority than the second UE). Because the first steering information includes the second UE, it indicates that the mobile communication device is allowed to transmit the data of the first service through the second UE, where the second UE has a lower priority than the first UE. Therefore, the session parameter corresponding to the second session may be directly set to the session parameter of the first session.

For example, the first steering information includes a network priority list (the first network has a higher priority than the second network). Because the first steering information includes the second network, it indicates that the mobile communication device is allowed to transmit the data of the first service through the second network, where the second network has a lower priority than the first network. Therefore, the session parameter corresponding to the second session may be directly set to the session parameter of the first session.

For example, the first steering information includes a RAT priority list (the first RAT has a higher priority than the second RAT). Because the first steering information includes the second RAT, it indicates that the mobile communication device is allowed to transmit the data of the first service through the second RAT, where the second RAT has a lower priority than the first RAT. Therefore, the session parameter corresponding to the second session may be directly set to the session parameter of the first session.

503. The second network element sends a second message to the session management network element based on the first message, where the second message carries the SUPI of the first UE, the identifier of the first session, the SUPI of the second UE, the identifier of the second session, and a second session establishment request. The session management network element is a network element that manages the first session of the first UE. Correspondingly, the session management network element may receive the second message.

In a possible embodiment, the second message may be a PDUSession_CreateSMContext Request.

In a possible embodiment, the information of the first session of the first UE includes one or more of the following items: an identifier of the first session of the first UE, a DNN corresponding to the first session of the first UE, or S-NSSAI corresponding to the first session of the first UE. Based on this possible embodiment, it is beneficial for the network side to accurately determine which session should be associated with the second session.

In a possible embodiment, the first message further includes the subscription concealed identifier SUCI of the first UE, the subscription permanent identifier SUPI of the first UE, or a binding UE indication. Based on this possible embodiment, it is beneficial for the network side to accurately determine the SUPI of the first UE.

The following describes several possible implementation methods for the second network element to send a second message to the session management network element based on the first message under different circumstances:
Case 1: The information of the first session of the first UE is an identifier of the first session of the first UE.
1) A specific implementation method for the second network element to send a second message to the session management network element based on the first message is as follows: the second network element obtains the SUPI of the first UE and the identifier of the session management network element configured to manage the first session based on the device identification information and the identifier of the first session; where the device identification information is the SUPI of the second UE, or the first message further includes the SUCI of the first UE, and the device identification information is the SUCI of the first UE; and the second network element sends the second message to the session management network element. Based on this specific implementation method, the second network element can accurately obtain the SUPI of the first UE and the identifier of the session management network element configured to manage the first session of the first UE, so as to send the second message to the session management network element.

The second network element is responsible for access and mobility management of the second UE, as well as registration management of the second UE. Therefore, the second network element pre-stores the SUPI of the second UE. Consequently, after the second network element receives the first message sent by the second UE in the mobile communication device, the second network element can obtain the SUPI of the second UE. Based on the SUPI of the second UE and the identifier of the first session, the second network element obtains the SUPI of the first UE and the identifier of the session management network element used to manage the first session, so as to send the second message to the session management network element.

Alternatively, the first message may further include the SUCI of the first UE. After receiving the first message sent by the second UE in the mobile communication device, the second network element may obtain the SUPI of the first UE and the identifier of the session management network element used to manage the first session based on the SUCI of the first UE and the identifier of the first session, so as to send the second message to the session management network element.

In a possible embodiment, a specific implementation manner in which the second network element obtains the SUPI of the first UE and the identifier of the session management network element used to manage the first session based on the device identification information and the identifier of the first session is as follows: the second network element sends the device identification information and the identifier of the first session to a unified data management network element; and the second network element receives the SUPI of the first UE and the identifier of the session management network element used to manage the first session sent by the unified data management network element. Based on this possible embodiment, the second network element can accurately obtain the SUPI of the first UE and the identifier of the session management network element used to manage the first session of the first UE.

In a 5G system, the unified data management network element may be a UDM network element. In a 6G system or a system after 6G, the unified data management network element may be referred to as a UDM network element or by another name, which is not limited in the embodiments of this application.

The unified data management network element stores an association relationship between the SUPI of the first UE and the SUPI of the second UE. For example, during the process where an operator provisions accounts for the first UE and the second UE, the unified data management network element stores the association relationship between the SUPI of the first UE and the SUPI of the second UE.

The unified data management network element also stores an association relationship between the SUPI of the first UE, the identifier of the first session, the session parameters (such as DNN and/or S-NSSAI), and the identifier of the session management network element used to manage the first session. For example, during the process of establishing the first session for the first UE, the session management network element responsible for managing the first session may send the SUPI of the first UE, the identifier of the first session, the session parameters, and the identifier of the session management network element to the unified data management network element. After receiving this information, the unified data management network element may store the association relationship between the SUPI of the first UE, the identifier of the first session, the session parameters, and the identifier of the session management network element.

For example, the device identification information is taken as the SUPI of the second UE. The second network element may send the SUPI of the second UE and the identifier of the first session to the unified data management network element. After receiving the SUPI of the second UE and the identifier of the first session, the unified data management network element obtains the SUPI of the first UE associated with the second UE based on the pre-stored association relationship between the SUPI of the first UE and the SUPI of the second UE. Then, the unified data management network element obtains the identifier of the session management network element associated with the SUPI of the first UE and the identifier of the first session based on the pre-stored association relationship among the SUPI of the first UE, the identifier of the first session, the session parameters, and the identifier of the session management network element used to manage the first session. The unified data management network element then returns the SUPI of the first UE and the identifier of the session management network element to the second network element.

Optionally, if the device identification information is the SUPI of the second UE, when the second network element sends the SUPI of the second UE and the identifier of the first session to the unified data management network element, it may also send a binding UE indication, which is used to indicate the acquisition of the SUPI of the UE associated with the second UE. In this way, the unified data management network element obtains the identifier of the session management network element that manages the first session for the UE associated with the SUPI of the second UE. Specifically, the unified data management network element determines, based on the stored association relationship between the SUPI of the first UE and the SUPI of the second UE, that the SUPI of the UE associated with the second UE is the SUPI of the first UE. Consequently, the unified data management network element identifies the session management network element responsible for managing the first session of the first UE.

For another example, consider the device identification information to be the SUCI of the first UE. The second network element may send the SUCI of the first UE and the identifier of the first session to the unified data management network element. After receiving the SUCI of the first UE and the identifier of the first session, the unified data management network element may first convert the SUCI of the first UE into the SUPI of the first UE. Then, based on the pre-stored association relationship between the SUPI of the first UE, the identifier of the first session, the session parameters, and the identifier of the session management network element used to manage the first session, the unified data management network element obtains the identifier of the session management network element associated with the SUPI of the first UE and the identifier of the first session. The unified data management network element then returns the SUPI of the first UE and the identifier of the session management network element to the second network element.

In another possible embodiment, a specific implementation manner in which the second network element obtains the SUPI of the first UE and the identifier of the session management network element configured to manage the first session based on the device identification information and the identifier of the first session is as follows: the second network element sends the device identification information to an authentication server function network element or a unified data management network element; the second network element receives the SUPI of the first UE sent by the authentication server function network element or the unified data management network element; the second network element sends the SUPI of the first UE and the identifier of the first session to the unified data management network element; and the second network element receives the identifier of the session management network element configured to manage the first session sent by the unified data management network element. Based on this possible embodiment, the second network element can accurately obtain the SUPI of the first UE and the identifier of the session management network element configured to manage the first session of the first UE.

In a 5G system, the authentication server function network element may be an AUSF network element. In a 6G system or a system after 6G, the authentication server function network element may be referred to as an AUSF network element or another name, which is not limited in the embodiments of this application.

For example, the device identification information is the SUPI of the second UE. The second network element may send the SUPI of the second UE to the unified data management network element. After receiving the SUPI of the second UE, the unified data management network element obtains, based on a pre-stored association relationship between the SUPI of the first UE and the SUPI of the second UE, the SUPI of the first UE associated with the second UE, and then returns the SUPI of the first UE to the second network element. After receiving the SUPI of the first UE, the second network element sends the SUPI of the first UE and the identifier of the first session to the unified data management network element. Based on a pre-stored association relationship between the SUPI of the first UE, the identifier of the first session, the session parameters, and the identifier of the session management network element used to manage the first session, the unified data management network element obtains the identifier of the session management network element associated with the SUPI of the first UE and the identifier of the first session. The unified data management network element then returns the identifier of the session management network element to the second network element.

Optionally, if the device identification information is the SUPI of the second UE, when sending the SUPI of the second UE to the unified data management network element, the second network element may also send a binding UE indication, where the binding UE indication is used to indicate the acquisition of the SUPI of the UE associated with the second UE.

For another example, the device identification information is the SUCI of the first UE. The second network element may send the SUCI of the first UE to an authentication server function network element or a unified data management network element. After receiving the SUCI of the first UE, the authentication server function network element or the unified data management network element may first convert the SUCI of the first UE into the SUPI of the first UE, and then return the SUPI of the first UE to the second network element. After receiving the SUPI of the first UE, the second network element sends the SUPI of the first UE and the identifier of the first session to the unified data management network element. Based on the pre-stored association relationship between the SUPI of the first UE, the identifier of the first session, the session parameters, and the identifier of the session management network element used to manage the first session, the unified data management network element obtains the identifier of the session management network element associated with the SUPI of the first UE and the identifier of the first session. The unified data management network element then returns the identifier of the session management network element to the second network element.

2) The first message further includes the SUPI of the first UE; a specific implementation manner in which the second network element sends the second message to the session management network element based on the first message is: the second network element obtains, based on the SUPI of the first UE and the identifier of the first session, an identifier of a session management network element configured to manage the first session; and the second network element sends the second message to the session management network element. Based on this specific implementation manner, the second network element can accurately obtain the identifier of the session management network element configured to manage the first session of the first UE, so as to send the second message to the session management network element.

For example, the second network element may send the SUPI of the first UE and the identifier of the first session to a unified data management network element. The unified data management network element obtains, based on a pre-stored association relationship between the SUPI of the first UE, the identifier of the first session, the session parameters, and the identifier of the session management network element configured to manage the first session, the identifier of the session management network element associated with the SUPI of the first UE and the identifier of the first session. The unified data management network element then returns the identifier of the session management network element to the second network element.

Case 2: The information of the first session of the first UE includes the DNN corresponding to the first session of the first UE and/or the S-NSSAI corresponding to the first session of the first UE. For ease of description, the DNN corresponding to the first session and/or the S-NSSAI corresponding to the first session of the first UE are referred to as session parameters of the first session in the following description.
1) A specific implementation manner in which the second network element sends the second message to the session management network element based on the first message is as follows: the second network element obtains the SUPI of the first UE, an identifier of the session management network element configured to manage the first session, and an identifier of the first session based on the device identification information and the session parameters of the first session of the first UE; where the device identification information is the SUPI of the second UE, or the first message further includes the SUCI of the first UE, and the device identification information is the SUCI of the first UE; and the second network element sends the second message to the session management network element. Based on this specific implementation manner, the second network element can accurately obtain the SUPI of the first UE, the identifier of the session management network element configured to manage the first session of the first UE, and the identifier of the first session, so as to send the second message to the session management network element.

In a possible embodiment, a specific implementation manner in which the second network element obtains the SUPI of the first UE, the identifier of the session management network element used to manage the first session, and the identifier of the first session based on the device identification information and the information of the first session of the first UE is as follows: the second network element sends the device identification information and the session parameters of the first session of the first UE to a unified data management network element; and the second network element receives the SUPI of the first UE, the identifier of the session management network element used to manage the first session, and the identifier of the first session sent by the unified data management network element. Based on this possible embodiment, the second network element can accurately obtain the SUPI of the first UE, the identifier of the session management network element used to manage the first session of the first UE, and the identifier of the first session.

For example, the device identification information is the SUPI of the second UE. The second network element may send the SUPI of the second UE and the session parameters of the first session to the unified data management network element. After receiving the SUPI of the second UE and the identifier of the first session, the unified data management network element obtains the SUPI of the first UE associated with the second UE based on the pre-stored association relationship between the SUPI of the first UE and the SUPI of the second UE. Then, the unified data management network element obtains the identifier of the session management network element associated with the SUPI of the first UE and the session parameters of the first session, and the identifier of the first session, based on the pre-stored association relationship between the SUPI of the first UE, the identifier of the first session, the session parameters, and the identifier of the session management network element used to manage the first session. The unified data management network element then returns the SUPI of the first UE, the identifier of the session management network element, and the identifier of the first session to the second network element.

Optionally, if the device identification information is the SUPI of the second UE, when the second network element sends the SUPI of the second UE and the identifier of the first session to the unified data management network element, an associated UE indication may also be sent, where the associated UE indication is used to indicate the acquisition of the SUPI of the UE associated with the second UE.

For another example, the device identification information is the SUCI of the first UE. The second network element may send the SUCI of the first UE and the session parameters of the first session to the unified data management network element. After receiving the SUCI of the first UE and the identifier of the first session, the unified data management network element may first convert the SUCI of the first UE into the SUPI of the first UE. Then, the unified data management network element may obtain the identifier of the session management network element associated with the SUPI of the first UE and the session parameters of the first session, based on the pre-stored association relationship between the SUPI of the first UE, the identifier of the first session, the session parameters, and the identifier of the session management network element used to manage the first session. The unified data management network element then returns the SUPI of the first UE, the identifier of the session management network element, and the identifier of the first session to the second network element.

In another possible embodiment, a specific implementation manner in which the second network element obtains, based on the device identification information and the information of the first session of the first UE, the SUPI of the first UE, the identifier of the session management network element used to manage the first session, and the identifier of the first session is as follows: the second network element sends the device identification information to an authentication server function network element or a unified data management network element; the second network element receives the SUPI of the first UE sent by the authentication server function network element or the unified data management network element; the second network element sends the SUPI of the first UE and the session parameters of the first session of the first UE to the unified data management network element; and the second network element receives the identifier of the session management network element used to manage the first session and the identifier of the first session sent by the unified data management network element. Based on this possible embodiment, the second network element can accurately obtain the SUPI of the first UE, the identifier of the session management network element used to manage the first session of the first UE, and the identifier of the first session.

For example, the device identification information is the SUPI of the second UE. The second network element may send the SUPI of the second UE to the unified data management network element. After receiving the SUPI of the second UE, the unified data management network element obtains the SUPI of the first UE associated with the second UE based on the pre-stored association relationship between the SUPI of the first UE and the SUPI of the second UE, and then returns the SUPI of the first UE to the second network element. After receiving the SUPI of the first UE, the second network element sends the SUPI of the first UE and the session parameters of the first session to the unified data management network element. Based on the pre-stored association relationship between the SUPI of the first UE, the identifier of the first session, the session parameters, and the identifier of the session management network element used to manage the first session, the unified data management network element obtains the identifier of the session management network element associated with the SUPI of the first UE and the session parameters of the first session, and the identifier of the first session. The unified data management network element then returns the identifier of the session management network element and the identifier of the first session to the second network element.

Optionally, if the device identification information is the SUPI of the second UE, when the second network element sends the SUPI of the second UE to the authentication server function network element or the unified data management network element, it may also send a binding UE indication, where the binding UE indication is used to indicate the acquisition of the SUPI of the UE associated with the second UE.

For another example, the device identification information is the SUCI of the first UE. The second network element may send the SUCI of the first UE to the authentication server function network element or the unified data management network element. After receiving the SUCI of the first UE, the authentication server function network element or the unified data management network element may first convert the SUCI of the first UE into the SUPI of the first UE, and then return the SUPI of the first UE to the second network element. After receiving the SUPI of the first UE, the second network element sends the SUPI of the first UE and the session parameters of the first session to the unified data management network element. Based on the pre-stored association relationship between the SUPI of the first UE, the identifier of the first session, the session parameters, and the identifier of the session management network element used to manage the first session, the unified data management network element obtains the identifier of the session management network element associated with the SUPI of the first UE and the session parameters of the first session, and the identifier of the first session. The unified data management network element then returns the identifier of the session management network element and the identifier of the first session to the second network element.

2) The first message further includes the SUPI of the first UE; a specific implementation manner in which the second network element sends the second message to the session management network element based on the first message is: the second network element obtains, based on the SUPI of the first UE and the session parameters of the first session, an identifier of the session management network element used to manage the first session and an identifier of the first session; and the second network element sends the second message to the session management network element. Based on this possible embodiment, the second network element can accurately obtain the identifier of the session management network element used to manage the first session of the first UE and the identifier of the first session, so as to send the second message to the session management network element.

For example, the second network element may send the SUPI of the first UE and the session parameters of the first session to a unified data management network element. The unified data management network element obtains, based on a pre-stored association relationship between the SUPI of the first UE, the identifier of the first session, the session parameters, and the identifier of the session management network element used to manage the first session, the identifier of the session management network element associated with the SUPI of the first UE and the session parameters of the first session, and the identifier of the first session. The unified data management network element returns the identifier of the session management network element and the identifier of the first session to the second network element. After receiving the identifier of the session management network element and the identifier of the first session, the second network element sends a second message to the session management network element.

In a possible embodiment, the first message and the second message are used to request the association of the first session of the first UE with the second session of the second UE.

In a possible embodiment, the first message and the second message further include an association indication, which is used to indicate to associate the first session of the first UE with the second session of the second UE. Alternatively, the names of the first message and the second message indicate the association of the first session of the first UE with the second session of the second UE.

504. In response to the second message, the session management network element stores the association relationship between the first session of the first UE and the second session of the second UE.

In the embodiments of this application, after the session management network element stores the association relationship between the first session of the first UE and the second session of the second UE, the first session of the first UE and the second session of the second UE may share the same IP address and the same N4 session identifier. The first session of the first UE is associated with the first IP address and the first N4 session identifier. Therefore, after the session management network element stores the association relationship between the first session of the first UE and the second session of the second UE, the second session of the second UE is also associated with the first IP address and the first N4 session identifier. The session management network element does not need to allocate a new N4 session identifier and a new IP address for the second session of the second UE; instead, it can simply reuse the first N4 session identifier and the first IP address.

In the embodiments of this application, "storing an association relationship" may also be understood as "creating an association relationship."

505. The session management network element sends the first steering information to the mobile communication device based on the second message. For a description of the first steering information, refer to the description under step 401, which will not be repeated herein. Correspondingly, the mobile communication device may receive the first steering information.

There are two possible implementation methods for the session management network element to send the first steering information to the mobile communication device:
1) Sending a session establishment accept message to the mobile communication device through the second network element, wherein the session establishment accept message includes the first steering information, and the session establishment accept message indicates that the second session of the second UE is successfully established. Correspondingly, the mobile communication device may receive the session establishment accept message through the second network element. That is, the second UE in the mobile communication device receives the session establishment accept message through the second network element. For example, the solid line under step 505 in FIG. 5 indicates that the session management network element sends the session establishment accept message to the second UE of the mobile communication device through the second network element and the second access network device. It can be seen that, based on this possible implementation, the first steering information can be successfully sent to the mobile communication device.

The indication that the second session establishment of the second UE is successful through the session establishment accept message may also be understood as the session establishment accept message being used to respond to the second session establishment request. Optionally, the session establishment accept message may further include third steering information, which may be referred to as described in step 402 above. That is, both the first steering information and the third steering information are sent to the second UE via the second network element.

2) Sending the first steering information to the mobile communication device through the first network element, where the first network element is responsible for mobility management of the first UE. Correspondingly, the mobile communication device may receive the first steering information through the first network element. That is, the first UE in the mobile communication device may receive the first steering information through the first network element. For example, the dashed line under step 505 in FIG. 5 indicates that the session management network element sends the first steering information to the first UE of the mobile communication device through the first network element and the first access network device. It can be seen that, based on this possible implementation, the first steering information can be successfully sent to the mobile communication device, and this is beneficial for reducing interactions between UEs in the mobile communication device.

In this possible implementation, since the first steering information is used to direct or preferentially direct the first service to the first UE, the session management network element may send the first steering information to the first UE. Optionally, the session management network element may also send a session establishment accept message to the mobile communication device through the second network element, where the session establishment accept message includes the third steering information, and the session establishment accept message indicates that the second session of the second UE is successfully established. In other words, the first steering information is sent to the first UE through the first network element, and the third steering information is sent to the second UE through the second network element.

In a possible embodiment, a specific implementation manner in which the session management network element sends the first steering information to the mobile communication device based on the second message is as follows: the session management network element may obtain control information from the first policy control network element based on the second message, where the control information indicates that the data of the first service is transmitted through the first session of the first UE; or the control information indicates that the data of the first service is preferentially transmitted through the first session of the first UE; or the control information indicates that the data of the first service is preferentially transmitted through the first network; or the control information indicates that the data of the first service is preferentially transmitted through the first RAT; and the session management network element sends the first steering information to the mobile communication device based on the control information. Based on this possible embodiment, the session management network element may generate reasonable first steering information based on the control information.

Optionally, the session management network element sends the first steering information to the mobile communication device based on the control information, the access information of the first UE, and the access information of the second UE. For example, the control information indicates that the data of the first service should be preferentially transmitted through the first network, the session management network element receives the access information of the first UE (the first UE accesses the first network) from the first network element, and the session management network element receives the access information of the second UE (the second UE accesses the second network) from the second network element. In this case, the session management network element determines the first steering information as that the data of the first service should be preferentially transmitted through the first session of the first UE. For another example, the control information indicates that the data of the first service should be preferentially transmitted through the first RAT, the session management network element receives the access information of the first UE (the first UE accesses the network through the first RAT) from the first network element, and the session management network element receives the access information of the second UE (the second UE accesses the network through the second RAT) from the second network element. In this case, the session management network element determines the first steering information as that the data of the first service should be preferentially transmitted through the first session of the first UE.

In the embodiments of this application, the information name of the control information may also be another information name, which is not limited in the embodiments of this application.

For a possible implementation in which the session management network element obtains the control information from the first policy control network element based on the second message, refer to the descriptions of step 710 and step 711 in FIG. 7, which are not described herein again. Alternatively, the session management network element may obtain the control information from the first policy control network element based on the second message in another manner, which is not limited in the embodiments of this application.

In a possible embodiment, the session management network element may further send the first information to the user plane function network element, where the first information is used to indicate that the data of the first service is to be sent to the first access network device, and the first access network device is configured to carry the first session of the first UE. Correspondingly, the user plane function network element may receive the first information. After receiving the first information, the user plane function network element sends the data of the first service to the first access network device. Herein, the user plane function network element is configured to transmit the data of the first session of the first UE and the data of the second session of the second UE, that is, the first session of the first UE and the second session of the second UE share the same user plane function network element. For example, for related descriptions, refer to the description under step 713 in FIG. 7, which is not described herein again. Based on this possible embodiment, the downlink data sending behavior of the user plane function network element can be properly controlled, so as to prevent data of the same service from not being simultaneously transmitted through two UEs in the mobile communication device.

In a possible embodiment, the session management network element may further send third indication information to the mobile communication device, where the third indication information is used to indicate whether the data of the first service is allowed to be switched between different UEs. Optionally, the third indication information may be sent to the mobile communication device in the same message as the first steering information. Optionally, the control information is also used to indicate whether the data of the first service is allowed to be switched between different UEs. Specifically, the session management network element sends the third indication information to the mobile communication device based on the control information. In this way, the mobile communication device can determine, based on the third indication information, whether the data of the first service can be switched between different UEs.

506. The mobile communication device transmits the data of the first service through the first session of the first UE based on the first steering information.

In the embodiments of this application, when the first service is triggered or there is first service data to be sent, the mobile communication device selects the first UE for the first service based on the first steering information, and transmits the data of the first service through the first session of the first UE.

It can be seen that, according to the method embodiment described in FIG. 5, in the process of creating the second session for the second UE and establishing an association between the first session of the first UE and the second session of the second UE, the session management network element may be triggered to send information used for steering data of the service to the mobile communication device. This allows the mobile communication device to reasonably select the UE for transmitting the service data. For example, it is assumed that the first session of the first UE and the second session of the second UE share the same IP address. FIG. 6 is a schematic diagram illustrating the first session of the first UE and the second session of the second UE sharing the same IP address. The PDU layer is an IP layer, where the dashed line may represent the second session of the second UE, and the solid line may represent the first session of the first UE. The first session of the first UE and the second session of the second UE share the first IP address. In the embodiments of this application, the mobile communication device may receive information sent by the network side for steering data of the service. For example, if the network side directs the first service to the first UE and the second service to the second UE, the mobile communication device may transmit the first service corresponding to the first IP address through the first session of the first UE, and transmit the second service corresponding to the first IP address through the second session of the second UE.

To facilitate understanding of the content described in the embodiment corresponding to FIG. 5, the following further elaborates on the service data processing method provided in the embodiments of this application with reference to FIG. 7. Referring to FIG. 7, FIG. 7 is a schematic flowchart of a service data processing method according to an embodiment of this application. Wherein:
701. The mobile communication device sends an identifier of a first session of the first UE, a DNN, S-NSSAI, a first session establishment request, and first indication information to the first network element. The first session establishment request is used to request the establishment of the first session of the first UE, and the first indication information indicates that the first session of the first UE may be associated between different UEs. Correspondingly, the first network element may receive the identifier of the first session of the first UE, the DNN, the S-NSSAI, the first session establishment request, and the first indication information.

Among them, steps 701 to 706 represent a possible implementation for establishing a first session of the first UE.

In the embodiments of this application, the first indication information indicating that the first session of the first UE may be associated between different UEs can alternatively be replaced with the first indication information indicating that the first session of the first UE needs to be associated between different UEs.

Optionally, the mobile communication device may send a NAS message to the first network element through the first access network device, where the NAS message carries an identifier of the first session of the first UE, a DNN, S-NSSAI, a first session establishment request, and first indication information. Optionally, the first session establishment request may include an identifier of the first session.

In the embodiments of this application, by sending the first indication information to the first network element, the first network element can select, based on the first indication information, a session management network element that supports association of sessions between different UEs, thereby facilitating subsequent processing.

Optionally, the first indication information indicating that the first session of the first UE may be associated between different UEs may also be understood as the first indication information indicating that the service data of the first session of the first UE may be transmitted or switched between different UEs, or may also be understood as the first indication information indicating that the type of the first session is a session between different UEs, where a session between different UEs may be understood as a session that can be transferred or switched between different UEs.

Optionally, the mobile communication device may also not send the first indication information to the first network element. For example, after receiving the identifier of the first session of the first UE, the DNN, the S-NSSAI, and the first session establishment request sent by the mobile communication device, the first network element may by default select a session management network element that supports session association between different UEs to perform subsequent procedures. Alternatively, if the mobile communication device does not send the first indication information to the first network element, the first network element may also select a session management network element to manage the first session based on an existing method. For instance, the first network element may select a session management network element to manage the first session based on the DNN or the S-NSSAI.

702. The first network element selects a session management network element based on the first indication information, where the session management network element supports association of sessions between different UEs.

Optionally, the session management network element supporting association of sessions between different UEs may also be understood as the session management network element supporting transmission or switching of service data between different UEs, or supporting session types across different UEs.

703. The first network element sends the SUPI of the first UE, the identifier of the first session, the DNN, the S-NSSAI, the first session establishment request, and the first indication information to the session management network element. Correspondingly, the session management network element may receive the SUPI of the first UE, the identifier of the first session, the DNN, the S-NSSAI, the first session establishment request, and the first indication information sent by the first network element.

By providing the first indication information to the session management network element, the session management network element can determine whether the first session is allowed to be associated between different UEs and return the determination result to the mobile communication device, so that the mobile communication device can subsequently decide whether to initiate a session association procedure.

Optionally, the first network element may also not send the first indication information to the session management network element. For example, after receiving the SUPI of the first UE, the identifier of the first session, the DNN, the S-NSSAI, and the first session establishment request sent by the first network element, the session management network element may determine by default whether the first session is allowed to be associated between different UEs and return the determination result to the mobile communication device. Alternatively, if the first network element does not send the first indication information to the session management network element, the session management network element may also not perform steps 704 and 705.

704. The session management network element determines that the first session of the first UE is allowed to be associated between different UEs.

In the embodiments of this application, after the session management network element receives the SUPI of the first UE, the identifier of the first session, the DNN, the S-NSSAI, the first session establishment request, and the first indication information from the first UE, the session management network element determines that the first session of the first UE allows association between different UEs. Throughout this specification of this application, "allow" may also be replaced with "can" or "support."

In the embodiments of this application, the determining, by the session management network element, that the first session of the first UE allows association between different UEs may also be understood as the session management network element determining that the service data corresponding to the first session of the first UE allows switching/transmission between different UEs. Alternatively, the session management network element determines that the type of the first session of the first UE is a session between different UEs, where a session between different UEs may be understood as a session that can be transferred or switched between different UEs. Throughout this specification of this application, "allow" may also be replaced with "support."

In a possible embodiment, a specific implementation manner in which the session management network element determines that the first session of the first UE is allowed to be associated between different UEs is as follows: the session management network element determines, based on the local configuration of the DNN, that the first session of the first UE is allowed to be associated between different UEs; or, the session management network element determines, based on subscription data or policy information corresponding to the first session, that the first session of the first UE is allowed to be associated between different UEs. For example, the session management network element may obtain the subscription data corresponding to the first session from the unified data management network element. The session management network element may obtain the policy information corresponding to the first session from the policy control function network element.

Optionally, if the session management network element determines that the first session of the first UE is not allowed to be associated between different UEs, the session management network element may send indication information to the mobile communication device through the first network element, where the indication information indicates that the first session of the first UE is not allowed to be associated between different UEs. In this way, the mobile communication device does not initiate step 707 based on the indication information, and does not associate the first session of the first UE with the second session of the first UE. Alternatively, if the session management network element determines that the first session of the first UE is not allowed to be associated between different UEs, the session management network element does not send any indication information to the mobile communication device. If the mobile communication device does not receive the second indication information, the mobile communication device does not initiate step 707, and does not associate the first session of the first UE with the second session of the first UE.

705. The session management network element sends second indication information to the first network element, where the second indication information indicates that the first session of the first UE is allowed to be associated between different UEs. Correspondingly, the first network element may receive the second indication information.

In the embodiments of this application, the second indication information indicating that the first session of the first UE is allowed to be associated between different UEs may also be understood as the second indication information indicating that the first session of the first UE is allowed to be transmitted/handled over between different UEs. Alternatively, the second indication information indicates that the type of the first session is a session between different UEs, where a session between different UEs may be understood as a session that can be transferred or switched between different UEs.

Optionally, the session management network element may further send the SUPI of the first UE, the identifier of the first session, the DNN, the S-NSSAI, and the identifier of the session management network element to the unified data management network element, so that the unified data management network element stores an association relationship between the SUPI of the first UE, the identifier of the first session, the DNN, the S-NSSAI, and the identifier of the session management network element.

Optionally, the session management network element may also allocate a first N4 session identifier to the first session, where the N4 session identifier is used to identify the N4 session between the session management network element and the user plane function network element. The session management network element may send the first N4 session identifier and the address information of the first access network device to the user plane function network element, to indicate that the service data carried by the first IP address corresponding to the first N4 session identifier is to be sent to the first access network device. The first IP address is an IP address allocated to the first session by the session management network element or the user plane function network element.

Optionally, the session management network element may also send the address information of the user plane function network element to the first access network device, so that the first access network device can send the uplink service data of the first session to the user plane function network element.

Optionally, the session management network element may further send the SUPI of the first UE, the identifier of the first session, the DNN, and the S-NSSAI to the first policy control network element. After receiving this information, the first policy control network element may allocate a session policy association identifier (SM Policy Association ID) to the first session of the first UE, and store an association relationship between the session policy association identifier, the SUPI of the first UE, the identifier of the first session, the DNN, and the S-NSSAI. The first policy control network element may also feed back the session policy association identifier to the session management network element. After receiving the session policy association identifier, the session management network element may store an association relationship between the session policy association identifier and the identifier of the first session of the first UE, to facilitate subsequent management of the first session.

Optionally, the session management network element may further store the association relationship between the SUPI of the first UE, the identifier of the first session, the DNN, and the S-NSSAI, as well as the association relationship between the identifier of the first session and the first IP address, and the association relationship between the identifier of the first session and the first N4 session identifier, so as to facilitate subsequent management of the first session.

Optionally, the session management network element may also configure an air interface resource between the first access network device and the first UE for the first session.

Optionally, the session management network element may send a session establishment accept message to the first network element, where the session establishment accept message carries the first IP address and the second indication information, and the session establishment accept message indicates that the first session of the first UE is successfully established. Correspondingly, the first network element may receive the session establishment accept message.

Alternatively, the mobile communication device may establish the first session of the first UE in another manner, which is not limited in this embodiment of this application.

706. The first network element sends the second indication information to the mobile communication device. Correspondingly, the mobile communication device may receive the second indication information.

In the embodiments of this application, after receiving the second indication information, the first network element sends the second indication information to the mobile communication device.

Optionally, the first network element may receive a session establishment accept message, where the session establishment accept message carries the first IP address and the second indication information, and the session establishment accept message indicates that the first session of the first UE is successfully established. The first network element sends the session establishment accept message to the mobile communication device. Correspondingly, the mobile communication device receives the session establishment accept message.

Alternatively, the session management network element may also send the second indication information to the mobile communication device through the first network element by using another message. This is not limited in the embodiments of this application.

In another possible embodiment, the mobile communication device may receive the second indication information from the network side when the first UE or the second UE is registered, where the second indication information indicates that the session of the mobile communication device is allowed to be associated between different UEs.

707. The mobile communication device sends a first message to the second network element based on the second indication information, where the first message carries information about a first session of the first UE, an identifier of a second session of the second UE, and a second session establishment request, where the second session establishment request is used to request establishment of the second session of the second UE. Correspondingly, the second network element may receive the first message.

In the embodiments of this application, the mobile communication device sends the first message to the second network element only after receiving the second indication information and determining, based on the second indication information, that the first session of the first UE is allowed to be associated between different UEs.

708. The second network element sends a second message to a session management network element based on the first message, where the second message carries the SUPI of the first UE, the identifier of the first session, the SUPI of the second UE, the identifier of the second session, and a second session establishment request, and the session management network element is a network element that manages the first session of the first UE. Correspondingly, the session management network element may receive the second message.

709. In response to the second message, the session management network element stores the association relationship between the first session of the first UE and the second session of the second UE.

For steps 707 to 709, refer to the descriptions under steps 502 to 504 in the embodiment corresponding to FIG. 5, which will not be repeated here.

710. The session management network element sends a third message to the first policy control network element, where the third message carries the session policy association identifier, the SUPI of the second UE, and the identifier of the second session. Correspondingly, the first policy control network element may receive the third message.

Among them, the session policy association identifier is a session policy association identifier associated with the identifier of the first session of the first UE. Optionally, the third message may further include a DNN and/or S-NSSAI.

711. In response to the third message, the first policy control network element sends control information to the session management network element, wherein the control information indicates that the data of the first service is transmitted through the first session of the first UE; or the control information indicates that the data of the first service is preferentially transmitted through the first session of the first UE; or the control information indicates that the data of the first service is preferentially transmitted through the first network, wherein the first network is a network on which the first UE camps; or the control information indicates that the data of the first service is preferentially transmitted through the first RAT, wherein the first RAT is a RAT supported by the first access network device. Correspondingly, the session management network element may receive the control information.

In the embodiments of this application, the first policy control network element pre-stores an association relationship between the identifier of the first session of the first UE and the session policy association identifier. Therefore, after receiving the session policy association identifier, the SUPI of the second UE, and the identifier of the second session, the first policy control network element can determine that the first session of the first UE is associated with the second session of the second UE, and the first policy control network element can then generate control information.

Based on steps 710 and 711, the session management network element can accurately obtain the control information.

Optionally, the control information may further indicate that the data of the second service is transmitted through the second session of the second UE; or the control information indicates that the data of the second service is preferentially transmitted through the second session of the second UE; or the control information indicates that the data of the second service is preferentially transmitted through the second network, where the second network is a network on which the second UE camps; or the control information indicates that the data of the second service is preferentially transmitted through the second RAT, where the second RAT is a RAT supported by the second access network device. Correspondingly, the session management network element may further send third steering information to the mobile communication device based on the control information. For the third steering information, refer to the description under step 402 above.

Among them, steps 710 to 711 represent a possible implementation of obtaining control information from the first policy control network element based on the second message.

712. The session management network element sends first steering information to the mobile communication device based on the control information.

For the two possible implementations where the session management network element sends the first steering information to the mobile communication device, refer to the description under step 505 in FIG. 5, which will not be elaborated here. As for how the session management network element sends the first steering information to the mobile communication device based on the control information, refer to the description under step 504, which will not be elaborated here.

713. The session management network element sends first information to a user plane function network element, where the first information is used to indicate that data of the first service is to be sent to the first access network device, which is configured to carry the first session of the first UE. Correspondingly, the user plane function network element may receive the first information.

In the embodiments of this application, after receiving the first information, the user plane function network element sends the data of the first service to the first access network device. The user plane function network element is configured to transmit data of the first session of the first UE and data of the second session of the second UE, that is, the first session of the first UE and the second session of the second UE share the same user plane function network element.

In a possible embodiment, the first information includes the address information of the first access network device and an identifier of the first service. The address information of the first access network device may be tunnel endpoint information of the first access network device, for example, AN Tunnel Info.

Optionally, the first information may further include the first N4 session identifier. In this way, the user plane function network element can send the data of the first service carried by the first IP address corresponding to the first N4 session identifier to the first access network device. When establishing the first session of the first UE, the session management network element sends the first N4 session identifier and the first IP address to the user plane function network element, and the user plane function network element already knows the association relationship between the first N4 session identifier and the first IP address. Subsequently, when the first N4 session identifier, the address information of the first access network device, and the identifier of the first service are transmitted between the session management network element and the user plane function network element, the forwarding rule associated with the first N4 session identifier can be updated to send the data of the first service carried by the first IP address corresponding to the first N4 session identifier to the first access network device. For example, the session management network element sends an N4 Session Modification Request message (the first N4 session identifier, the address information of the first access network device, the identifier of the first service) to the user plane function network element.

In a possible embodiment, if the session management network element also sends third steering information to the mobile communication device, the session management network element may further send third information to the user plane function network element, where the third information is used to indicate that the data of the second service is to be sent to the second access network device, which is configured to carry the second session of the second UE. Correspondingly, the user plane function network element may receive this third information. After receiving the third information, the user plane function network element sends the data of the second service to the second access network device.

In a possible embodiment, the third information includes the address information of the second access network device and an identifier of the second service. The address information of the second access network device may be the tunnel endpoint information of the second access network device. Optionally, the third information may further include the first N4 session identifier. In this way, the user plane function network element can send the data of the second service, which is carried by the first IP address corresponding to the first N4 session identifier, to the second access network device.

714. The mobile communication device transmits the data of the first service through the first session of the first UE based on the first steering information.

For step 714, refer to the description under step 506, which will not be repeated here.

It can be seen that, based on the method embodiment described in FIG. 7, during the process of creating the second session for the second UE and establishing an association relationship between the first session of the first UE and the second session of the second UE, the session management network element may be triggered to send information used for steering data of the service to the mobile communication device. This allows the mobile communication device to reasonably select the UE for transmitting the service data. In addition, the first information can be sent to the user plane function network element to control the downlink data transmission behavior of the user plane function network element.

Referring to FIG. 8, FIG. 8 is a schematic flowchart of a service data processing method according to an embodiment of this application. In the method embodiment described in FIG. 8, when the first UE in a mobile communication device performs registration, a second policy control network element is triggered to send first steering information to the mobile communication device. Among them:
801. The mobile communication device sends a registration request (registration request) to the first network element, where the registration request is used to request to register the first UE with a network. Correspondingly, the first network element may receive the registration request.

In the embodiments of this application, the mobile communication device may send a registration request to the first network element through the first access network device.

802. The first network element sends a fourth message to the second policy control network element, where the fourth message carries a SUPI of the first UE. The fourth message is used to request the establishment of an access management policy association (access management policy association) for the first UE. Correspondingly, the second policy control network element may receive the fourth message.

In the embodiments of this application, after receiving the registration request, the first network element sends a fourth message to the second policy control network element.

803. In response to the fourth message, the second policy control network element sends the first steering information to the first network element. For a description of the first steering information, refer to the description under step 401, which is not repeated herein. Correspondingly, the first network element may receive the first steering information.

In a possible embodiment, a specific implementation manner in which the second policy control network element sends the first steering information to the first network element is as follows: the second policy control network element may obtain subscription information of the first UE, and generate the first steering information based on the subscription information; where the subscription information indicates that the data of the first service is transmitted through the first UE; or the subscription information indicates that the data of the first service is preferentially transmitted through the first UE; or the subscription information indicates that the data of the first service is preferentially transmitted through the first network; or the subscription information indicates that the data of the first service is preferentially transmitted through the first RAT. Based on this possible embodiment, the second policy control network element can generate reasonable first steering information according to the subscription information.

For example, the subscription information of the first UE includes the association information between the SUPI of the first UE and the SUPI of the second UE, and also indicates the association information between the service and the UE, or indicates which UE or which network or which RAT should have priority in transmitting the data of which service. The second policy control network element determines the association between the first UE and the second UE based on the subscription information of the first UE. Since the first UE and the second UE are associated, there may be an issue where the first UE and the second UE simultaneously transmit the same service data. Therefore, the second policy control network element generates the first steering information based on the subscription information of the first UE.

804. The first network element sends a registration accept message or a UE policy container to the mobile communication device, where the registration accept message or the UE policy container includes the first steering information. The registration accept message indicates that the first UE has successfully registered with the network. Accordingly, the mobile communication device may receive the registration accept message.

In the embodiments of this application, the first network element may send a registration accept message or a UE policy container to the mobile communication device through the first access network device.

Herein, the registration accept message indicating that the first UE has successfully registered with the network may also be understood as the registration accept message being used to respond to a registration request, where the registration request is used to request the registration of the first UE to the network.

In a possible embodiment, the second policy control network element may further send policy information, such as a UE routing policy (UE route selection policy, URSP), to the first network element. Correspondingly, the registration accept message or the UE policy container also carries this policy information. The policy information includes a correspondence between a service data flow and a session parameter (such as a DNN and/or S-NSSAI).

In a possible embodiment, the second policy control network element may also send a UE policy container to the first network element, where the UE policy container includes the first steering information. After receiving the UE policy container, the first network element then sends the UE policy container to the mobile communication device. Optionally, the first network element first sends a registration accept message to the mobile communication device, then receives the UE policy container from the second policy control network element, and subsequently sends the UE policy container to the mobile communication device, where the UE policy container includes the first steering information.

In a possible embodiment, the second policy control network element may further send third indication information to the mobile communication device, where the third indication information is used to indicate whether the data of the first service is allowed to be switched between different UEs. Optionally, the third indication information is carried in a registration accept message or a UE policy container. In this way, the mobile communication device can determine, based on the third indication information, whether the data of the first service can be switched between different UEs.

805. The mobile communication device transmits the data of the first service through the first session of the first UE based on the first steering information.

In the embodiments of this application, after receiving the registration accept message, when the first service is triggered or there is first service data to be sent, the mobile communication device selects the first UE for the first service based on the first steering information, determines the session parameters (such as DNN and/or S-NSSAI) corresponding to the first service based on the policy information (such as URSP) of the first UE, establishes the first session of the first UE using these session parameters, and transmits the data of the first service through the first session of the first UE.

The embodiments of this application may be applied to any one of the following two scenarios:
1) The first UE registers first, and the second UE registers subsequently. That is, the registration procedure of the first-registered UE can be enhanced, where the second policy control network element is triggered to send the first steering information to the mobile communication device when the first UE in the mobile communication device registers.
2) The second UE registers first, and the first UE registers later. That is, the registration procedure of the subsequently registered UE can be enhanced, such that when the second UE registers within the mobile communication device, the second policy control network element is triggered to send the first steering information to the mobile communication device.

In a possible embodiment, the registration request further includes an identifier of the second UE or a dual steer device indication, where the dual steer device indication is used to indicate that the first UE is located in a dual steer device, and the dual steer device is a device that includes two UEs; the identifier of the second UE may be an SUCI of the second UE or a permanent equipment identifier (PEI) of the second UE. Optionally, after the second UE completes the registration procedure, the registration request of the first UE includes the identifier of the second UE or the dual steer device indication. The fourth message further includes the SUPI of the second UE or the dual steer device indication. Based on this possible embodiment, it is beneficial for the second policy control network element to generate the first steering information when both UEs in the mobile communication device have registered with the network or when the first UE is located in the dual steer device.

The identifier of the second UE or the dual steer device indication may be understood as a trigger condition for the second policy control network element to generate the first steering information.

For example, the second UE registers first, and the first UE registers later. When the first UE sends a registration request, the identifier of the second UE may be carried in the registration request. After receiving the registration request, the first network element may convert the identifier of the second UE into the SUPI of the second UE, and send a fourth message carrying the SUPI of the second UE and the SUPI of the first UE to the second policy control network element. In this way, after receiving the fourth message, the second policy control network element can determine that both UEs in the mobile communication device have registered with the network or that the first UE is located in a dual steer device, and then generate the first steering information. The second policy control network element only needs to generate the first steering information when both UEs in the mobile communication device have registered with the network or when the first UE is located in a dual steer device.

For another example, the second UE registers first, and the first UE registers later. When the first UE sends a registration request, the registration request may carry a dual steer device indication. After receiving the registration request, the first network element sends a fourth message carrying the SUPI of the first UE and the dual steer device indication to the second policy control network element. In this way, after receiving the fourth message, the second policy control network element can determine that both UEs in the mobile communication device have registered with the network or that the first UE is located in a dual steer device, and then generate the first steering information.

Alternatively, the dual steer device indication may be replaced with other indication information. After receiving this indication information, the second policy control network element can determine that both UEs are registered with the network or that the first UE is located in the dual steer device, and then generate the first steering information.

In a possible embodiment, the first network element may further send the SUPI of the first UE to the unified data management network element in response to the registration request; correspondingly, the unified data management network element may receive the SUPI of the first UE. The unified data management network element pre-stores an association relationship between the SUPI of the first UE and the SUPI of the second UE. After receiving the SUPI of the first UE, the unified data management network element may determine whether both the first UE and the second UE are registered, that is, determine whether both the first UE and the second UE are in a registered state. If both the first UE and the second UE are registered, the unified data management network element sends the SUPI of the second UE or a dual steer device indication to the first network element. Correspondingly, the first network element may receive the SUPI of the second UE or the dual steer device indication sent by the unified data management network element. After receiving the SUPI of the second UE or the dual steer device indication, the first network element sends a fourth message to the second policy control network element, where the fourth message carries the SUPI of the first UE and also carries the SUPI of the second UE or the dual steer device indication. Similarly, based on the SUPI of the second UE or the dual steer device indication, the second policy control network element may determine that both UEs in the mobile communication device are registered with the network or that the first UE is located in the dual steer device, and then generate the first steering information. Based on this possible embodiment, it is beneficial for the second policy control network element to generate the first steering information when both UEs in the mobile communication device are registered with the network or when the first UE is located in the dual steer device.

Optionally, a specific implementation manner in which the first network element sends the SUPI of the first UE to the unified data management network element in response to the registration request is as follows: the first network element, in response to the registration request, sends a UE context management registration to the unified data management network element, that is, UE Context Management Registration (SUPI of the first UE, and an identifier of the first network element).

In a possible embodiment, a specific implementation manner in which the mobile communication device transmits data of the first service based on the first steering information through the first session of the first UE is as follows: the mobile communication device selects the first UE based on the first steering information, establishes the first session of the first UE, and transmits the data of the first service through the first session of the first UE. For example, the mobile communication device may select the first UE for the first service based on the first steering information, determine session parameters (such as DNN and/or S-NSSAI) corresponding to the first service based on policy information (such as URSP) of the first UE, establish the first session of the first UE using the session parameters, and transmit the data of the first service through the first session of the first UE.

The mobile communication device may also send a first message, which carries information about the first session of the first UE, an identifier of the second session of the second UE, and a second session establishment request, where the second session establishment request is used to request the establishment of the second session of the second UE.

Accordingly, the second network element may receive the first message and send a second message to the session management network element based on the first message, where the second message carries the SUPI of the first UE, an identifier of the first session, the SUPI of the second UE, an identifier of the second session, and a second session establishment request, and the session management network element is a network element that manages the first session of the first UE.

Accordingly, the session management network element may receive the second message, and in response to the second message, store an association relationship between the first session of the first UE and the second session of the second UE; and send first information to a user plane function network element based on the second message, where the first information is used to indicate that the data of the first service is to be sent to the first access network device, and the first access network device is configured to carry the first session of the first UE.

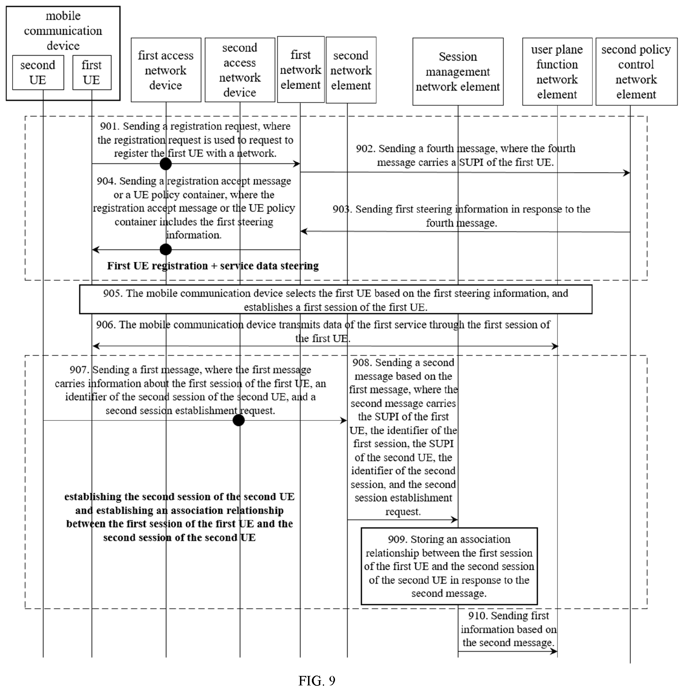

Based on this possible embodiment, the downlink data transmission behavior of the user plane function network element can be reasonably controlled to prevent data of the same service from not being simultaneously transmitted through two UEs in the mobile communication device. For related descriptions of this possible embodiment, refer to the descriptions under steps 905 to 910 in the embodiment corresponding to FIG. 9, which will not be repeated here.

It is evident that, based on the method described in FIG. 8, when a certain UE registers in a mobile communication device, information for steering data of a service can be triggered to be sent to the mobile communication device, thereby enabling the mobile communication device to reasonably select the UE for transmitting the service data.

To facilitate understanding of the content introduced in the embodiment corresponding to FIG. 8, the following further describes the service data processing method provided in the embodiments of this application with reference to FIG. 9. Referring to FIG. 9, FIG. 9 is a schematic flowchart of a service data processing method according to an embodiment of this application. Wherein:
901. The mobile communication device sends a registration request (registration request) to the first network element, where the registration request is used to request to register the first UE with a network. Correspondingly, the first network element may receive the registration request.
902. The first network element sends a fourth message to the second policy control network element, where the fourth message carries a SUPI of the first UE. The fourth message is used to request the establishment of an access management policy association (access management policy association) for the first UE. Correspondingly, the second policy control network element may receive the fourth message.
903. In response to the fourth message, the second policy control network element sends first steering information to the first network element. For a description of the first steering information, refer to the description under step 401, which will not be repeated herein. Correspondingly, the first network element may receive the first steering information.
904. The first network element sends a registration accept message or a UE policy container to the mobile communication device, where the registration accept message or the UE policy container includes the first steering information. The registration accept message indicates that the first UE has successfully registered with the network. Correspondingly, the mobile communication device may receive the registration accept message or the UE policy container.

For related descriptions of step 901 to step 904, refer to the descriptions under step 801 to step 804. Details are not described herein again.

905. The mobile communication device selects the first UE based on the first steering information, and establishes a first session of the first UE.

For example, when the first service is triggered, the mobile communication device selects the first UE based on the first steering information, establishes the first session of the first UE based on policy information (for example, URSP) of the first UE, and then transmits the data of the first service through the first session of the first UE.

For related descriptions of the mobile communication device in establishing the first session of the first UE, refer to the descriptions under step 501. Details are not described herein again.

906. The mobile communication device transmits the data of the first service through the first session of the first UE.

907. The mobile communication device sends a first message to the second network element, where the first message carries information about the first session of the first UE, an identifier of the second session of the second UE, and a second session establishment request, where the second session establishment request is used to request the establishment of the second session of the second UE. Correspondingly, the second network element may receive the first message.

Optionally, the mobile communication device may also receive third steering information, where the third steering information may be referred to the description under 402. When the second service is initiated, the mobile communication device may select the second UE based on the third steering information, send a first message to the second network element to establish the second session of the second UE, and then transmit the second service through the second session of the second UE.

Optionally, the mobile communication device may first trigger the establishment of the first session for the first UE when initiating the first service, and then trigger the establishment of the second session for the second UE. The mobile communication device preferentially transmits the data of the first service through the first session of the first UE, while the second session of the second UE serves as a backup and temporarily does not transmit the data of the first service. For example, when the signal quality between the mobile communication device and the first access network device subsequently deteriorates, or when the signal quality between the mobile communication device and the first access network device falls below a first threshold, or when the QoS requirements of the first session of the first UE are not met, the mobile communication device then switches the transmission of the first service data to the second session of the second UE.

Optionally, the first message further includes a session parameter corresponding to the second session, for example, a DNN or S-NSSAI.

For example, the mobile communication device determines, based on the URSP of the second UE, that the session parameter corresponding to the first service is the session parameter corresponding to the second session of the second UE. Optionally, the mobile communication device sends the first message to establish an association relationship between the first session of the first UE and the second session of the second UE when the session parameter corresponding to the second session of the second UE is the same as the session parameter corresponding to the first session of the first UE, so as to facilitate subsequent switching of service data between the first UE and the second UE.

For another example, the mobile communication device generates, based on the session parameter of the first session, the session parameter corresponding to the second session. Optionally, the session parameter corresponding to the second session is the same as the session parameter of the first session, that is, the mobile communication device sets the session parameter corresponding to the second session to the session parameter of the first session, or uses the session parameter corresponding to the first session as the session parameter of the second session.

Optionally, the mobile communication device receives third indication information, where the third indication information is used to indicate that the data of the first service is allowed to be switched between different UEs. The mobile communication device generates, based on the third indication information, a session parameter corresponding to the second session based on the session parameter of the first session, or sets the session parameter corresponding to the second session to the session parameter of the first session. It should be understood that, in this case, the mobile communication device does not need to determine the session parameter corresponding to the second session based on the URSP of the second UE, and when the data of the first service is allowed to be switched between different UEs, the mobile communication device may directly set the session parameter corresponding to the second session to the session parameter of the first session, so that the mobile communication device can send the first message. Alternatively, further, the mobile communication device may send the first message when the mobile communication device determines, based on the URSP of the second UE, that the first service is allowed to use the session parameter corresponding to the second session (for example, the session parameter corresponding to the second session may not be the session parameter with the highest priority in the session parameters corresponding to the first service).

For example, it is assumed that in the URSP of the second UE, the session parameters corresponding to the first service include a DNN1 and a DNN2, where the priority of the DNN1 is higher than that of the DNN2, that is, the first service is allowed to use the DNN1 and the DNN2. The session parameter corresponding to the first session of the first UE is DNN2. The mobile communication device sets, based on the third indication information, the session parameter corresponding to the second session to the session parameter of the first session, that is, sets the session parameter corresponding to the second session to DNN2. Further, the mobile communication device determines, based on the URSP of the second UE, that the first service is allowed to use the DNN2, so that the mobile communication device may send the first message.

Optionally, the mobile communication device generates, based on the first steering information, the session parameter corresponding to the second session based on the session parameter of the first session, or sets the session parameter corresponding to the second session to the session parameter of the first session, so that the mobile communication device can send the first message. It should be understood that in this case, the mobile communication device does not need to determine the session parameter corresponding to the second session based on the URSP of the second UE. Alternatively, further, the mobile communication device may send the first message when the mobile communication device determines, based on the URSP of the second UE, that the first service is allowed to use the session parameter corresponding to the second session (for example, the session parameter corresponding to the second session may not be the session parameter with the highest priority in the session parameters corresponding to the first service).

For example, the first steering information includes a UE priority list (the first UE has a higher priority than the second UE). Because the first steering information includes the second UE, it indicates that the mobile communication device is allowed to transmit the data of the first service through the second UE, where the second UE has a lower priority than the first UE. Therefore, the session parameter corresponding to the second session may be directly set to the session parameter of the first session.

For example, the first steering information includes a network priority list (the first network has a higher priority than the second network). Because the first steering information includes the second network, it indicates that the mobile communication device is allowed to transmit the data of the first service through the second network, where the second network has a lower priority than the first network. Therefore, the session parameter corresponding to the second session may be directly set to the session parameter of the first session.

For example, the first steering information includes a RAT priority list (the first RAT has a higher priority than the second RAT). Because the first steering information includes the second RAT, it indicates that the mobile communication device is allowed to transmit the data of the first service through the second RAT, where the second RAT has a lower priority than the first RAT. Therefore, the session parameter corresponding to the second session may be directly set to the session parameter of the first session.

Steps 907 to 909 describe the specific process of establishing the second session for the second UE and creating an association between the first session of the first UE and the second session of the second UE. For further related descriptions of steps 907 to 909, please refer to the descriptions under steps 502 to 504, which will not be repeated here.

908. The second network element sends a second message to the session management network element based on the first message, where the second message carries the SUPI of the first UE, an identifier of the first session, the SUPI of the second UE, an identifier of the second session, and a second session establishment request. The session management network element is a network element that manages the first session of the first UE. Correspondingly, the session management network element may receive the second message.

909. In response to the second message, the session management network element stores the association relationship between the first session of the first UE and the second session of the second UE.

910. The session management network element sends first information to the user plane function network element based on the second message, where the first information is used to indicate that the data of the first service is to be sent to the first access network device. The first access network device is configured to carry the first session of the first UE. Correspondingly, the user plane function network element may receive the first information.

In a possible embodiment, a specific implementation manner in which the session management network element sends the first information to the user plane function network element based on the second message is as follows: the session management network element may obtain control information from the first policy control network element based on the second message, where the control information indicates that the data of the first service is transmitted through the first session of the first UE; or the control information indicates that the data of the first service is preferentially transmitted through the first session of the first UE; or the control information indicates that the data of the first service is preferentially transmitted through the first network; or the control information indicates that the data of the first service is preferentially transmitted through the first RAT; the session management network element specifically sends the first information to the user plane function network element based on the control information. Based on this possible embodiment, the session management network element may generate reasonable first information according to the control information.

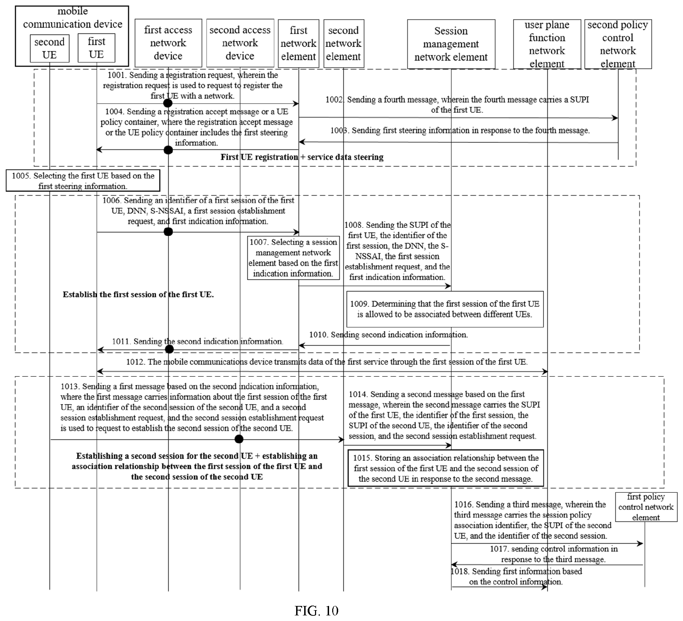

For a possible implementation manner in which the session management network element obtains the control information from the first policy control network element based on the second message, refer to the descriptions under step 1016 and step 1017 in FIG. 10, which will not be elaborated herein.

For further details of step 910, refer to the description under step 713, which will not be repeated here.

It is evident that, based on the method described in FIG. 9, when a certain UE in a mobile communication device registers, information for steering data of a service can be triggered to be sent to the mobile communication device. This helps prevent data of the same service from not being simultaneously transmitted through two UEs in the mobile communication device. Additionally, the first information can be sent to the user plane function network element to control the downlink data transmission behavior of the user plane function network element.

To facilitate understanding of the content introduced in the embodiment corresponding to FIG. 9, the following further describes the service data processing method provided in the embodiments of this application with reference to FIG. 10. Referring to FIG. 10, FIG. 10 is a schematic flowchart of a service data processing method according to an embodiment of this application. Wherein:
1001: The mobile communication device sends a registration request (registration request) to the first network element, where the registration request is used to request to register the first UE with a network. Correspondingly, the first network element may receive the registration request.
1002: The first network element sends a fourth message to the second policy control network element, where the fourth message carries a SUPI of the first UE. The fourth message is used to request the establishment of an access management policy association (access management policy association) for the first UE. Correspondingly, the second policy control network element may receive the fourth message.
1003: In response to the fourth message, the second policy control network element sends first steering information to the first network element. For a description of the first steering information, refer to the description under step 401, which will not be repeated herein. Correspondingly, the first network element may receive the first steering information.
1004: The first network element sends a registration accept message or a UE policy container to the mobile communication device, where the registration accept message or the UE policy container includes the first steering information. The registration accept message indicates that the first UE has successfully registered with the network. Correspondingly, the mobile communication device may receive the registration accept message or the UE policy container.

For the related descriptions of steps 1001 to 1004, refer to the descriptions under steps 801 to 804, which will not be repeated here.

1005: The mobile communication device selects the first UE based on the first steering information.

1006. The mobile communication device sends an identifier of a first session of the first UE, DNN, S-NSSAI, a first session establishment request, and first indication information to the first network element. The first session establishment request is used to request the establishment of the first session of the first UE, and the first indication information indicates that the first session of the first UE may be associated between different UEs. Correspondingly, the first network element may receive the identifier of the first session of the first UE, DNN, S-NSSAI, the first session establishment request, and the first indication information.

1007. The first network element selects a session management network element based on the first indication information, wherein the session management network element supports association of sessions between different UEs.

1008. The first network element sends the SUPI of the first UE, the identifier of the first session, the DNN, the S-NSSAI, the first session establishment request, and the first indication information to the session management network element. Correspondingly, the session management network element may receive the SUPI of the first UE, the identifier of the first session, the DNN, the S-NSSAI, the first session establishment request, and the first indication information sent by the first network element.

1009: The session management network element determines that the first session of the first UE is allowed to be associated between different UEs.

1010: The session management network element sends second indication information to the first network element, where the second indication information indicates that the first session of the first UE allows association between different UEs. Correspondingly, the first network element may receive the second indication information.

1011: The first network element sends the second indication information to the mobile communication device. Correspondingly, the mobile communication device may receive the second indication information.

Among them, steps 1006 to 1011 represent a possible implementation for establishing the first session of the first UE. For details of steps 1006 to 1011, refer to the descriptions under steps 701 to 706, which will not be elaborated upon here.

1012. The mobile communication device transmits data of the first service through the first session of the first UE.

1013. The mobile communication device sends a first message to the second network element based on the second indication information, where the first message carries information about the first session of the first UE, an identifier of the second session of the second UE, and a second session establishment request, where the second session establishment request is used to request establishment of a second session of the second UE. Correspondingly, the second network element may receive the first message.

In the embodiments of this application, the mobile communication device sends the first message to the second network element only after receiving the second indication information and determining, based on the second indication information, that the first session of the first UE is allowed to be associated between different UEs.

1014. The second network element sends a second message to a session management network element based on the first message, where the second message carries the SUPI of the first UE, the identifier of the first session, the SUPI of the second UE, the identifier of the second session, and the second session establishment request, where the session management network element is a network element that manages the first session of the first UE. Correspondingly, the session management network element may receive the second message.

1015. In response to the second message, the session management network element stores the association relationship between the first session of the first UE and the second session of the second UE.

For steps 1013 to 1015, refer to the descriptions under steps 907 to 908, which will not be repeated here.

1016. The session management network element sends a third message to the first policy control network element, wherein the third message carries the session policy association identifier, the SUPI of the second UE, and the identifier of the second session. Correspondingly, the first policy control network element may receive the third message.

Among them, the session policy association identifier is the session policy association identifier associated with the identifier of the first session of the first UE. Optionally, the third message may further include a DNN and/or S-NSSAI.

1017. In response to the third message, the first policy control network element sends control information to the session management network element, wherein the control information indicates that data of the first service is transmitted through the first session of the first UE; or the control information indicates that data of the first service is preferentially transmitted through the first session of the first UE; or the control information indicates that data of the first service is preferentially transmitted through the first network, wherein the first network is a network on which the first UE camps; or the control information indicates that data of the first service is preferentially transmitted through the first RAT, wherein the first RAT is a RAT supported by the first access network device. Accordingly, the session management network element may receive the control information.

Steps 1016 to 1017 represent a possible implementation of obtaining control information from the first policy control network element based on the second message. For details of steps 1016 to 1017, refer to the descriptions under steps 710 and 711, which will not be elaborated here.

1018. The session management network element sends first information to the user plane function network element based on the control information, where the first information is used to indicate that the data of the first service is to be sent to the first access network device. The first access network device is configured to carry the first session of the first UE. Correspondingly, the user plane function network element may receive the first information.

For the related description of step 1018, please refer to the description under step 910, which will not be repeated here.

It is evident that, based on the method described in FIG. 10, when a certain UE registers in a mobile communication device, the information for steering data of a service can be triggered to be sent to the mobile communication device, thereby helping to prevent data of the same service from not being simultaneously transmitted through two UEs in the mobile communication device. Additionally, the first information can be sent to the user plane function network element to control the downlink data transmission behavior of the user plane function network element.

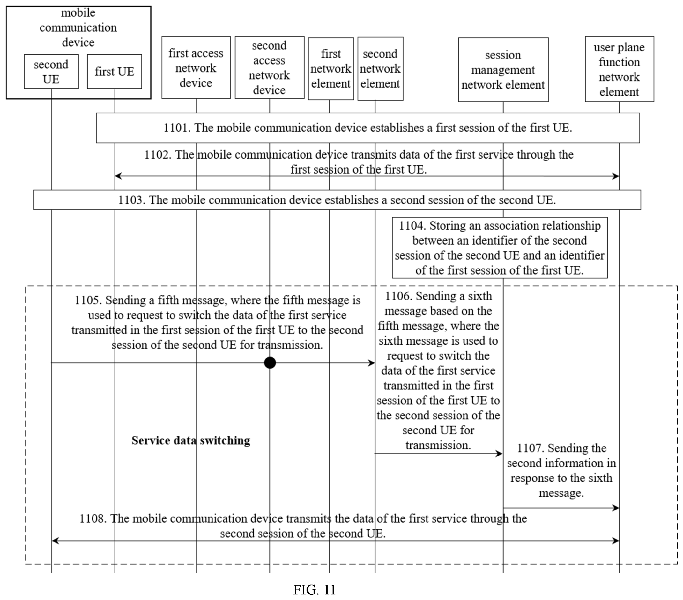

Please refer to FIG. 11, which is a schematic flowchart of a service data processing method according to an embodiment of this application. A mobile communication device establishes a first session of a first UE and a second session of a second UE in advance, and establishes an association relationship between the first session and the second session. Subsequently, the mobile communication device triggers, by sending signaling, switching of data of the first service from the first session of the first UE to the second session of the second UE for transmission. The first session of the first UE and the second session of the second UE share the same IP address, and an IP address used for the first service data remains unchanged before and after the data is switched between UEs, thereby ensuring service continuity. The details are as follows:
1101. The mobile communication device establishes a first session of the first UE.

For a description of step 1101, refer to the description under step 501. Details are not described herein again.

1102. The mobile communication device transmits the data of the first service through the first session of the first UE.

In this embodiment of this application, the first session is associated with the first IP address, and the data of the first service is transmitted through the first session of the first UE by using the first IP address.

Optionally, the mobile communication device may also receive the first steering information. For example, if the session management network element is triggered to send the first steering information to the mobile communication device during the process of establishing an association relationship between the first session of the first UE and the second session of the second UE, then after the mobile communication device establishes the first session of the first UE, the mobile communication device selects the first UE based on the received first steering information, and transmits the data of the first service through the first session of the first UE. As another example, if the second policy control network element is triggered to send the first steering information to the mobile communication device when a UE in the mobile communication device is being registered, then the mobile communication device selects the first UE based on the first steering information, establishes the first session of the first UE, and transmits the data of the first service through the first session of the first UE. For how the mobile communication device receives the first steering information and transmits the data of the first service through the first session of the first UE based on the first steering information, refer to the descriptions in the embodiments corresponding to FIG. 4 to FIG. 10, which will not be elaborated herein.

1103. The mobile communication device establishes a second session for the second UE.

The first session of the first UE is associated with the second session of the second UE.

1104. The session management network element stores the association between the identifier of the second session of the second UE and the identifier of the first session of the first UE.

In a possible embodiment, a specific implementation manner in which the mobile communication device establishes the second session of the second UE is as follows: the mobile communication device sends a first message, where the first message carries information about the first session of the first UE, an identifier of the second session of the second UE, and a second session establishment request, where the second session establishment request is used to request the establishment of the second session of the second UE.

Accordingly, the second network element sends a second message to the session management network element based on the first message, where the second message carries the SUPI of the first UE, an identifier of the first session, the SUPI of the second UE, an identifier of the second session, and a second session establishment request. The session management network element is a network element that manages the first session of the first UE. Accordingly, the session management network element may receive the second message. Specifically, the session management network element may, in response to the second message, store an association relationship between the first session of the first UE and the second session of the second UE.

Optionally, the first message and the second message are further used to request to associate the first session of the first UE with the second session of the second UE.

Optionally, the first message and the second message further include an association indication, where the association indication is used to indicate to associate the first session of the first UE with the second session of the second UE.

Optionally, the information about the first session of the first UE includes one or more of the following: an identifier of the first session of the first UE, a DNN corresponding to the first session of the first UE, or S-NSSAI corresponding to the first session of the first UE.

Optionally, the first message further includes the first SUCI of the first UE, the first SUPI of the first UE, or the associated UE indication.

Optionally, the mobile communication device may further receive second indication information, where the second indication information indicates that the first session is allowed to be associated between different UEs, or indicates that a session of the mobile communication device is allowed to be associated between different UEs; and the mobile communication device may specifically send the first message based on the second indication information. In other words, the mobile communication device sends the first message when the first session is allowed to be associated between different UEs, or when a session of the mobile communication device is allowed to be associated between different UEs.

Optionally, the second indication information indicates that the session of the mobile communication device is allowed to be associated between different UEs. The mobile communication device may receive the second indication information from the second policy control network element when the first UE or the second UE is registered. Correspondingly, the second policy control network element may send the second indication information to the mobile communication device.

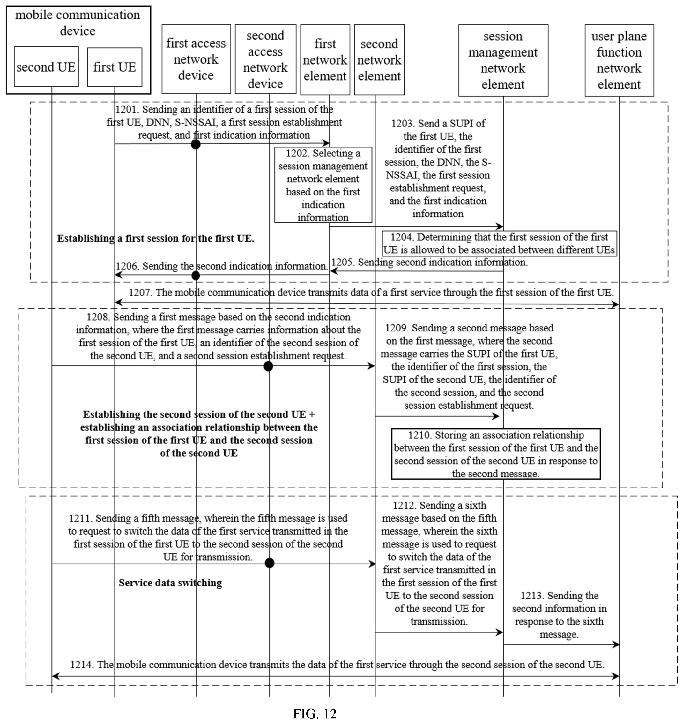

Optionally, if the second indication information indicates that the first session is allowed to be associated between different UEs, the mobile communication device may receive the second indication information from the session management network element during the process of establishing the first session. For example, when the first network element sends the SUPI of the first UE, the identifier of the first session, the DNN, the S-NSSAI, and the first session establishment request to the session management network element, the first network element may also send the first indication information. After receiving this information, if the session management network element determines that the first session of the first UE is allowed to be associated between different UEs, the session management network element sends the second indication information to the first network element, so that the second network element can send the second indication information to the mobile communication device. After receiving the second indication information, the mobile communication device may send the first message based on the second indication information. For example, for related descriptions, refer to the descriptions under steps 1201 to 1208 in the embodiment corresponding to FIG. 12, which are not described in detail herein.

For a possible implementation in which the second network element sends the second message to the session management network element based on the first message, and other related descriptions regarding the establishment of the second session for the second UE, refer to the descriptions under steps 502 to 504 and the descriptions under steps 907 to 909. Alternatively, the second session for the second UE may be established in another manner, which is not limited in this embodiment of this application.

In a possible embodiment, after receiving the first message, the second network element may further record that the session management network element is responsible for managing the second session of the second UE, so that when the second network element subsequently receives a fifth message sent by the mobile communication device, the second network element may send a sixth message to the session management network element.

In the embodiments of this application, after the session management network element stores the association relationship between the identifier of the second session of the second UE and the identifier of the first session of the first UE, the first session of the first UE and the second session of the second UE may share the same IP address and the same N4 session identifier. The first session of the first UE is associated with the first IP address and the first N4 session identifier. Therefore, after the session management network element stores the association relationship between the first session of the first UE and the second session of the second UE, the second session of the second UE is also associated with the first IP address and the first N4 session identifier. The session management network element does not need to allocate a new N4 session identifier and a new IP address to the second session of the second UE; instead, it can reuse the first N4 session identifier and the first IP address.

1105: The mobile communication device sends a fifth message to the second network element, where the fifth message is used to request to switch the data of the first service transmitted in the first session of the first UE to the second session of the second UE for transmission. Alternatively, the fifth message is used to request to switch the data of the first service to the second session of the second UE for transmission. The fifth message carries an identifier of the second session of the second UE. Correspondingly, the second network element may receive the fifth message.

For example, the second UE in the mobile communication device may send a fifth message to the second network element through the second access network device.

Optionally, the fifth message may be a service request (service request) /PDU session modification request (PDU session modification request).

In a possible embodiment, a trigger condition for the mobile communication device to send a fifth message to the second network element may be that the signal quality between the mobile communication device and the first access network device deteriorates, or the signal quality between the mobile communication device and the first access network device is lower than a first threshold, or a QoS requirement of a first session of the first UE is not met.

In another possible embodiment, the trigger condition for the mobile communication device to send the fifth message to the second network element may be: the signal quality between the mobile communication device and the first access network device deteriorates, or the signal quality between the mobile communication device and the first access network device is below a first threshold, or the quality of service QoS requirement for the first session of the first UE is not met; and the signal quality between the mobile communication device and the second access network device is above a second threshold.

In a possible embodiment, the mobile communication device may further receive third indication information, where the third indication information indicates that the data of the first service is allowed to be switched between different UEs, or the service data transmitted in the first session is allowed to be switched between different UEs; and the mobile communication device specifically sends the fifth message based on the third indication information. In other words, the mobile communication device sends the fifth message when the data of the first service is allowed to be switched between different UEs, or when the service data transmitted in the first session is allowed to be switched between different UEs.
1) The third indication information indicates that the data of the first service is allowed to be switched between different UEs.

Optionally, the third indication information may come from a session management network element, that is, the session management network element may send the third indication information to the mobile communication device. Optionally, the mobile communication device first establishes the first session of the first UE, and then establishes the second session of the second UE. In the process of establishing the second session of the second UE and establishing an association relationship between the first session of the first UE and the second session of the second UE, the session management network element is triggered to send the third indication information to the mobile communication device through the second network element. For example, this embodiment of this application may be combined with the embodiment shown in FIG. 5. The session management network element may send the third indication information and the first steering information together to the mobile communication device.

Optionally, the third indication information may come from the second policy control network element, that is, the second policy control network element may send the third indication information to the mobile communication device. Optionally, when the first UE in the mobile communication device performs registration, the second policy control network element is triggered to send the first steering information to the mobile communication device through the first network element. For example, this embodiment of this application may be combined with the embodiment shown in FIG. 8. The second policy control network element may send the third indication information and the first steering information together to the mobile communication device.

2) The third indication information indicates that the service data transmitted in the first session is allowed to be switched between different UEs.

Optionally, the third indication information may come from a session management network element, meaning that the session management network element may send the third indication information to the mobile communication device. For example, during the process of creating the first session, the session management network element may be triggered to send the third indication information to the mobile communication device.

In a possible embodiment, the mobile communication device may further receive the first steering information. For how the mobile communication device receives the first steering information, refer to the descriptions in the embodiments corresponding to FIG. 4 to FIG. 10, which will not be elaborated herein. The first steering information indicates that the data of the first service is preferentially transmitted through the first UE/the first network/the first RAT. The mobile communication device specifically sends the fifth message based on the first steering information.

For example, the first steering information includes a UE priority list (where the priority of the first UE is higher than that of the second UE). Since the first steering information includes the second UE, it indicates that the mobile communication device is allowed to transmit the data of the first service through the second UE, although the priority of the second UE is lower than that of the first UE. Therefore, the mobile communication device may send a fifth message to switch the transmission of the data of the first service to the second UE. Correspondingly, if the first steering information only includes the first UE and does not include the second UE, the mobile communication device cannot send the fifth message.

For example, the first steering information includes a network priority list (the first network has a higher priority than the second network). Because the first steering information includes the second network, it indicates that the mobile communication device is allowed to transmit the data of the first service through the second network, where the second network has a lower priority than the first network. Therefore, the mobile communication device may send the fifth message to switch the data of the first service to the second UE for transmission. Correspondingly, if the first steering information includes only the first network and does not include the second network, the mobile communication device cannot send the fifth message.

For example, the first steering information includes a RAT priority list (the first RAT has a higher priority than the second RAT). Because the first steering information includes the second network, it indicates that the mobile communication device is allowed to transmit the data of the first service through the second RAT, where the second RAT has a lower priority than the first RAT. Therefore, the mobile communication device may send the fifth message to switch the data of the first service to the second UE for transmission. Correspondingly, if the first steering information includes only the first RAT and does not include the second RAT, the mobile communication device cannot send the fifth message.

In a possible embodiment, the mobile communication device may first receive the first steering information and then receive the fourth steering information. For how the mobile communication device receives the first steering information, refer to the descriptions in the embodiments corresponding to FIG. 4 to FIG. 10, which will not be elaborated herein. When the subscription information of the first UE, the second UE, or the mobile communication device changes, or when the first service is preferentially transmitted through the second UE/second network/second RAT according to an AF request, the second policy control network element may generate the fourth steering information and send the fourth steering information to the mobile communication device through the first network element or the second network element. The fourth steering information indicates that the data of the first service is preferentially transmitted through the second UE/second network/second RAT. The mobile communication device specifically sends the fifth message based on the fourth steering information.

For example, the fourth steering information includes an order of UE priorities (the priority of the second UE is higher than that of the first UE). Because the priority of the second UE is higher than that of the first UE, the mobile communication device sends the fifth message.

For example, the fourth steering information includes the network priority list (where the second network priority is higher than the first network priority). Because the second network priority is higher than the first network priority, the mobile communication device sends the fifth message.

For example, the fourth steering information includes the RAT priority list (where the second RAT priority is higher than the first RAT priority). Because the second RAT priority is higher than the first RAT priority, the mobile communication device sends the fifth message.

1106: The second network element sends a sixth message to the session management network element based on the fifth message, where the sixth message is used to request to switch the data of the first service transmitted in the first session of the first UE to the second session of the second UE for transmission. Alternatively, the sixth message is used to request to switch the data of the first service to the second session of the second UE for transmission. The sixth message carries session indication information, where the session indication information is used to indicate the second session of the second UE. Correspondingly, the session management network element may receive the sixth message.

In a possible embodiment, the sixth message may be a PDUSession_UpdateSMContext Request.

In a possible embodiment, the fifth message and the sixth message further include a switching indication, where the switching indication is used to indicate to switch the data of the first service transmitted in the first session of the first UE to the second session of the second UE for transmission, or the switching indication is used to indicate to switch the data of the first service transmitted in the first session of the UE associated with the second UE to the second session of the second UE for transmission, or the switching indication is used to indicate to switch the data of the first service to the second session of the second UE for transmission.

Optionally, the switching indication may be an indication piece of information, where the indication information indicates to switch the data of the first service transmitted in the first session of the first UE to the second session of the second UE for transmission, or indicates to switch the data of the first service transmitted in the first session of the UE associated with the second UE to the second session of the second UE for transmission, or indicates to switch the data of the first service to the second session of the second UE for transmission.

Alternatively, the switching indication includes two pieces of indication information. For example, one piece of indication information is a traffic switching indication, used to indicate that data of the first service is to be switched to a second session of the second UE for transmission. The other piece of indication information is an associated UE indication, used to indicate that the data of the first service is to be switched from the UE associated with the second UE. These two pieces of indication information are combined to indicate that the data of the first service on the first session of the UE associated with the second UE is to be switched to the second session of the second UE for transmission.

In a possible embodiment, the fifth message and the sixth message may further include an identifier of the first service. The identifier of the first service may be a traffic descriptor (traffic descriptor) of the first service, address information (an IP address and a port number) for transmitting the first service, or an application identifier (application identifier) of the first service.

In a possible embodiment, the session indication information includes the SUPI of the second UE and an identifier of the second session.

In another possible embodiment, the session indication information is information allocated by a session management network element to identify a second session of the second UE. For example, the session indication information may be an SM Context ID#2.

1107. In response to the sixth message, the session management network element sends second information to the user plane function network element, where the second information indicates that data of the first service will be sent to the second access network device. The data of the first service is transmitted through the first IP address. The first IP address is an IP address associated with the first session of the first UE and the second session of the second UE, and the second access network device is configured to carry the second session of the second UE. Correspondingly, the user plane function network element may receive the second information.

In the embodiments of this application, after receiving the second information, the user plane function network element sends the data of the first service to the second access network device, where the data of the first service is transmitted through the first IP address. In other words, the IP address used for the data of the first service remains unchanged before and after the switching between UEs, thereby maintaining service continuity. The user plane function network element is configured to transmit the data of the first session of the first UE and the data of the second session of the second UE, meaning that the first session of the first UE and the second session of the second UE share the same user plane function network element.

In a possible embodiment, the second information includes the address information of the second access network device and an identifier of the first service. The address information of the second access network device may be tunnel endpoint information of the second access network device, for example, AN Tunnel Info.

Optionally, the second information further includes the first N4 session identifier. In this way, the user plane function network element can send the data of the first service carried by the first IP address corresponding to the first N4 session identifier to the second access network device. When establishing the first session of the first UE, the session management network element sends the first N4 session identifier and the first IP address to the user plane function network element, and the user plane function network element already knows the association relationship between the first N4 session identifier and the first IP address. Subsequently, when the first N4 session identifier, the address information of the second access network device, and the identifier of the first service are transmitted between the session management network element and the user plane function network element, the forwarding rule associated with the first N4 session identifier can be updated to send the data of the first service carried by the first IP address corresponding to the first N4 session identifier to the second access network device. For example, the session management network element sends an N4 Session Modification Request message (the first N4 session identifier, the address information of the second access network device, and the identifier of the first service) to the user plane function network element.

1108: The mobile communication device transmits the data of the first service through the second session of the second UE.

In the embodiments of this application, after the data of the first service is switched to the second session of the second UE, for example, after the mobile communication device receives the switching accept or acknowledgment information sent by the session management network element through the second network element, the mobile communication device transmits the data of the first service through the second session of the second UE. Herein, the data of the first service is transmitted through the second session of the second UE using the first IP address.

It can be seen that, based on the method described in FIG. 11, an association relationship between the first session of the first UE and the second session of the second UE can be established in advance, and subsequently, the switching of service data between UEs in the mobile communication device can be triggered according to the need. By establishing the association relationship between the first session of the first UE and the second session of the second UE, the first session of the first UE and the second session of the second UE can share the same IP address, and the IP address used for service data remains unchanged before and after the switching between UEs in the mobile communication device, thereby maintaining service continuity. Moreover, establishing the association relationship between the first session of the first UE and the second session of the second UE in advance facilitates the timely switching of service data to the second UE for transmission at a later stage. For example, as shown in FIG. 6, the first session of the first UE and the second session of the second UE share the same IP address, namely the first IP address. This first IP address can be used simultaneously by both UEs, meaning that both sessions can be in an active state at the same time. Before and after the data of the first service is switched between UEs, the connection between the PDU layer and the application layer remains unchanged, meaning that the IP address used by the application does not change, which does not affect service continuity.

To facilitate understanding of the content introduced in the embodiment corresponding to FIG. 11, the following further describes the service data processing method provided in the embodiments of this application with reference to FIG. 12. Referring to FIG. 12, FIG. 12 is a schematic flowchart of a service data processing method according to an embodiment of this application. Wherein:
1201. The mobile communication device sends an identifier of a first session of the first UE, a DNN, S-NSSAI, a first session establishment request, and first indication information to the first network element. The first session establishment request is used to request the establishment of the first session of the first UE, and the first indication information indicates that the first session of the first UE may be associated between different UEs. Correspondingly, the first network element may receive the identifier of the first session of the first UE, the DNN, the S-NSSAI, the first session establishment request, and the first indication information.

Among them, steps 1201 to 1206 represent a possible implementation for establishing the first session of the first UE. For details of steps 1201 to 1206, refer to the descriptions under steps 701 to 706, which will not be elaborated here again.

1202. The first network element selects a session management network element based on the first indication information, where the session management network element supports association of sessions between different UEs.

1203. The first network element sends a SUPI of the first UE, the identifier of the first session, the DNN, the S-NSSAI, the first session establishment request, and the first indication information to the session management network element. Correspondingly, the session management network element may receive the SUPI of the first UE, the identifier of the first session, the DNN, the S-NSSAI, the first session establishment request, and the first indication information sent by the first network element.

1204. The session management network element determines that the first session of the first UE is allowed to be accociated between different UEs.

1205. The session management network element sends second indication information to the first network element, where the second indication information indicates that the first session of the first UE is allowed to be associated between different UEs. Correspondingly, the first network element may receive the second indication information.

1206. The first network element sends the second indication information to the mobile communication device. Correspondingly, the mobile communication device may receive the second indication information.

1207. The mobile communication device transmits the data of a first service through the first session of the first UE.

1208. The mobile communication device sends a first message to the second network element based on the second indication information, where the first message carries information about the first session of the first UE, an identifier of the second session of the second UE, and a second session establishment request. The second session establishment request is used to request the establishment of the second session of the second UE. Correspondingly, the second network element may receive the first message.

1209. The second network element sends a second message to the session management network element based on the first message, where the second message carries the SUPI of the first UE, an identifier of the first session, the SUPI of the second UE, an identifier of the second session, and a second session establishment request, and the session management network element is a network element that manages the first session of the first UE. Correspondingly, the session management network element may receive the second message.

1210. In response to the second message, the session management network element stores an association relationship between the first session of the first UE and the second session of the second UE.

For steps 1208 to 1210, refer to the descriptions under steps 502 to 504 and the descriptions under steps 907 to 909, which will not be repeated here.

1211. The mobile communication device sends a fifth message to the second network element, where the fifth message is used to request to switch the data of the first service transmitted in the first session of the first UE to the second session of the second UE for transmission. Alternatively, the fifth message is used to request to switch the data of the first service to the second session of the second UE for transmission. The fifth message carries an identifier of the second session of the second UE. Correspondingly, the second network element may receive the fifth message.

1212. The second network element sends a sixth message to the session management network element based on the fifth message, where the sixth message is used to request to switch the data of the first service transmitted in the first session of the first UE to the second session of the second UE for transmission. Alternatively, the sixth message is used to request to switch the data of the first service to the second session of the second UE for transmission. The sixth message carries session indication information, where the session indication information is used to indicate the second session of the second UE. Correspondingly, the session management network element may receive the sixth message.

1213. In response to the sixth message, the session management network element sends second information to the user plane function network element, where the second information indicates that the data of the first service to be transmitted through the first IP address is to be sent to the second access network device. The first IP address is the IP address associated with the first session of the first UE, and the second access network device is configured to carry the second session of the second UE. Correspondingly, the user plane function network element may receive this second information.

1214. The mobile communication device transmits the data of the first service through the second session of the second UE.

For steps 1211 to 1214, please refer to the descriptions under steps 1105 to 1108, which will not be repeated here.

It can be seen that, based on the method described in FIG. 12, an association relationship between the first session of the first UE and the second session of the second UE can be established in advance, and subsequently, the switching of service data between UEs in the mobile communication device can be triggered according to the need. By establishing the association relationship between the first session of the first UE and the second session of the second UE, the first session of the first UE and the second session of the second UE can share the same IP address, and the IP address used for the service data remains unchanged before and after the switching between UEs in the mobile communication device, thereby maintaining service continuity. Moreover, establishing the association relationship between the first session of the first UE and the second session of the second UE in advance facilitates the timely switching of service data to the second UE for transmission in the future.

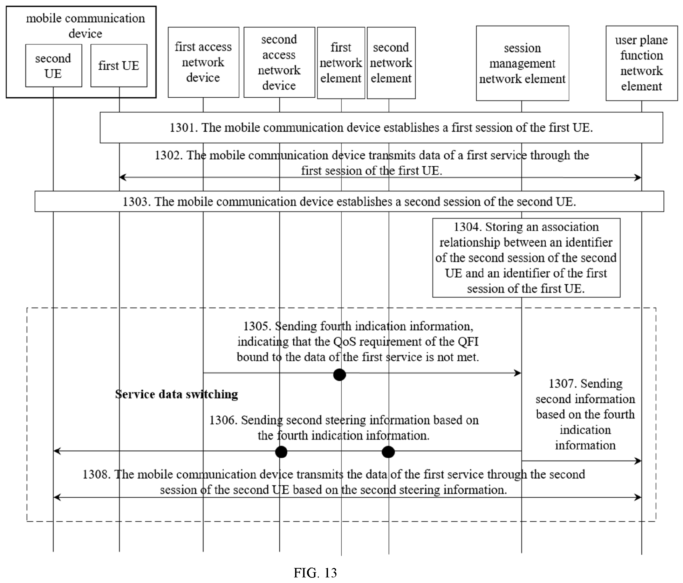

Referring to FIG. 13, FIG. 13 is a schematic flowchart of a service data processing method according to an embodiment of this application. A mobile communication device establishes a first session of the first UE and a second session of the second UE in advance, and establishes an association relationship between the first session and the second session. Subsequently, a session management network element switches the data of the first service from the first session of the first UE to the second session of the second UE for transmission based on a notification from an access network device. The first session of the first UE and the second session of the second UE share the same IP address, and the IP address used for the first service data remains unchanged before and after the switching between UEs, thereby maintaining service continuity. In this process:
1301: The mobile communication device establishes a first session of the first UE.
1302: The mobile communication device transmits the data of a first service through the first session of the first UE.
1303: The mobile communication device establishes a second session for the second UE.

Among them, the first session of the first UE is associated with the second session of the second UE.

1304: The session management network element stores an association relationship between an identifier of the second session of the second UE and an identifier of the first session of the first UE.

For steps 1301 to 1304, refer to the descriptions under steps 1101 to 1104, which will not be repeated here.

1305: The first access network device sends fourth indication information to the session management network element. The fourth indication information indicates that the quality of service QoS requirement of the quality of service QoS flow identifier (QoS flow identifier, QFI) bound to the first service data is not met. The first access network device is configured to carry the first session of the first UE. Correspondingly, the session management network element may receive the fourth indication information.

In the embodiments of this application, the first access network device may send the fourth indication information to the session management network element by using the first network element.

In the embodiments of this application, in a process of establishing a first session of the first UE, the session management network element may bind the data of the first service to the QFI, that is, carry the data of the first service on the QFI of the first session.

Optionally, the fourth indication information may be a QoS notification (QoS notification). For example, the session management network element may send a QoS notification control (QoS notification control) to the first access network device. After receiving the QoS notification control, when the QoS requirement of the QFI bound to the data of the first service is not met, the first access network device sends a QoS notification to the session management network element. Optionally, the QoS requirement may be a guaranteed flow bit rate (guaranteed flow bit rate, GFBR) or a packet error rate (packet error rate, PER).

In a possible embodiment, if the data of the first service allows for switching between different UEs, or if the service data transmitted in the first session allows for switching between different UEs, or if the data of the first service is preferentially transmitted through the first UE, or if the data of the first service is preferentially transmitted through the first network (where the first network is the network on which the first UE camps), or if the data of the first service is preferentially transmitted through the first RAT (where the first RAT is the RAT supported by the first access network device), then the session management network element sends fifth indication information to the first access network device, where the fifth indication information is used to indicate that the first access network device sends the fourth indication information when the QoS requirement of the QFI bound to the data of the first service is not met. Optionally, the fifth indication information may be understood as the QoS notification control mentioned above.

Optionally, the session management network element may obtain the control information from the first policy control network element, and determine, based on the control information, that the data of the first service is allowed to be switched between different UEs, or that the data of the first service is preferentially transmitted through the first UE, or that the data of the first service is preferentially transmitted through the first network, or that the data of the first service is preferentially transmitted through the first RAT. For how the session management network element obtains the control information, refer to the descriptions in the method embodiments corresponding to FIG. 5 or FIG. 7, which will not be elaborated herein.

Optionally, the session management network element may determine, based on the local configuration of the DNN, that the service data transmitted in the first session is allowed to be switched between different UEs; or the session management network element may determine, based on the subscription data or policy information corresponding to the first session, that the service data transmitted in the first session is allowed to be switched between different UEs.

1306. The session management network element sends second steering information to the mobile communication device based on the fourth indication information. The second steering information indicates that the data of the first service is transmitted through the second UE, or indicates that the data of the first service is preferentially transmitted through the second UE, or indicates that the data of the first service is switched from the first UE to be transmitted through the second UE; accordingly, the mobile communication device may receive the second steering information.

In the embodiments of this application, the session management network element sends the second steering information to the mobile communication device through the second network element and the second access network device based on the fourth indication information, in order to control the uplink transmission behavior of the mobile communication device.

1307. The session management network element sends second information to the user plane function network element based on the fourth indication information. The second information indicates to send the data of the first service to the second access network device. The data of the first service is transmitted through the first IP address. The first IP address is an IP address associated with the first session of the first UE and the second session of the second UE, and the second access network device is configured to carry the second session of the second UE. Correspondingly, the user plane function network element may receive the second information.

The session management network controls the downlink data transmission behavior of the user plane function network element by sending second information to the user plane function network element.

In the embodiments of this application, after receiving the second information, the user plane function network element sends the data of the first service, which is transmitted through the first IP address, to the second access network device. In other words, the IP address used for the data of the first service remains unchanged before and after the switching between UEs, thereby maintaining service continuity.

In a possible embodiment, the second information includes the address information of the second access network device and an identifier of the first service. The address information of the second access network device may be tunnel endpoint information of the second access network device, for example, AN Tunnel Info.

Optionally, the second information further includes the first N4 session identifier. In this way, the user plane function network element can send the data of the first service carried by the first IP address corresponding to the first N4 session identifier to the second access network device. When establishing the first session of the first UE, the session management network element sends the first N4 session identifier and the first IP address to the user plane function network element, and the user plane function network element already knows the association relationship between the first N4 session identifier and the first IP address. Subsequently, when the first N4 session identifier, the address information of the second access network device, and the identifier of the first service are transmitted between the session management network element and the user plane function network element, the forwarding rule associated with the first N4 session identifier can be updated to send the data of the first service carried by the first IP address corresponding to the first N4 session identifier to the second access network device. For example, the session management network element sends an N4 Session Modification Request message (the first N4 session identifier, the address information of the second access network device, and the identifier of the first service) to the user plane function network element.

1308: The mobile communication device transmits the data of the first service through the second session of the second UE based on the second steering information.

In this embodiment of this application, after receiving the second steering information, the mobile communication device may transmit the data of the first service through the second session of the second UE based on the second steering information. The data of the first service is transmitted through the second session of the second UE by using the first IP address.

It can be learned that, based on the method described in FIG. 13, an association relationship between the first session of the first UE and the second session of the second UE may be established in advance, and subsequently, service data may be triggered to be switched and transmitted between UEs in the mobile communication device based on a requirement. By establishing the association relationship between the first session of the first UE and the second session of the second UE, the first session of the first UE and the second session of the second UE can share the same IP address, and an IP address used for the service data remains unchanged before and after the switching between UEs in the mobile communication device, thereby ensuring service continuity. In addition, the association relationship between the first session of the first UE and the second session of the second UE is established in advance, which facilitates subsequent switching of the service data to the second UE for transmission in a timely manner.

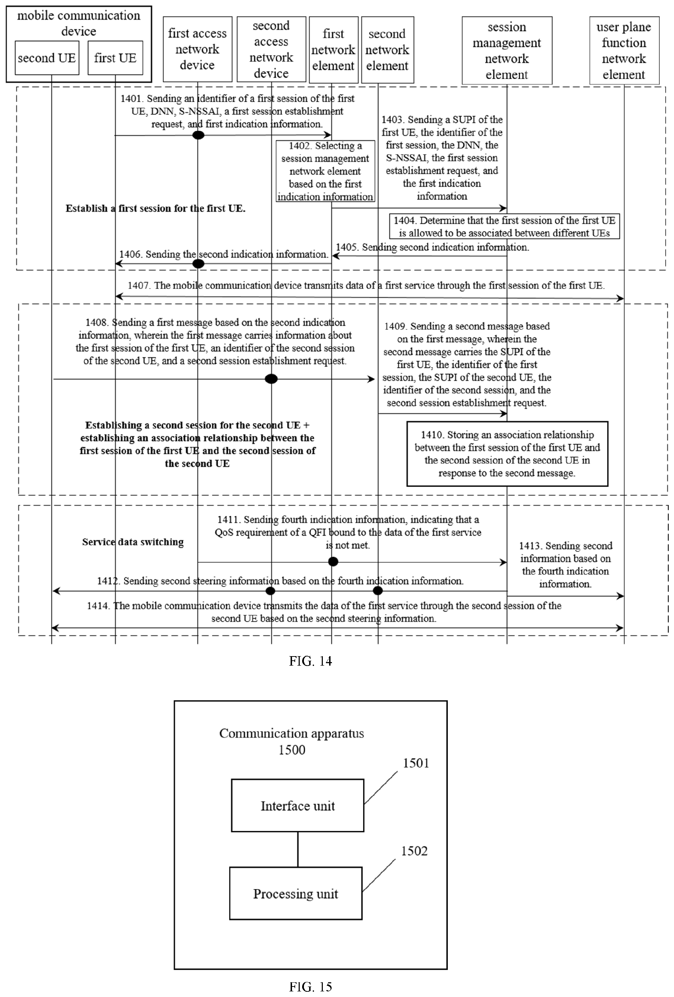

To facilitate understanding of the content introduced in the embodiment corresponding to FIG. 13, the following further describes the service data processing method provided in the embodiments of this application with reference to FIG. 14. Referring to FIG. 14, FIG. 14 is a schematic flowchart of a service data processing method according to an embodiment of this application. Wherein:
1401. The mobile communication device sends an identifier of a first session of the first UE, a DNN, S-NSSAI, a first session establishment request, and first indication information to the first network element. The first session establishment request is used to request the establishment of the first session of the first UE, and the first indication information indicates that the first session of the first UE may be associated between different UEs. Correspondingly, the first network element may receive the identifier of the first session of the first UE, the DNN, the S-NSSAI, the first session establishment request, and the first indication information.

Among them, steps 1401 to 1406 represent a possible implementation for establishing the first session of the first UE. For details of steps 1401 to 1406, refer to the descriptions under steps 701 to 706, which will not be elaborated on here.

1402. The first network element selects a session management network element based on the first indication information, where the session management network element supports association of sessions between different UEs.

1403. The first network element sends a SUPI of the first UE, the identifier of the first session, the DNN, the S-NSSAI, the first session establishment request, and the first indication information to the session management network element. Correspondingly, the session management network element may receive the SUPI of the first UE, the identifier of the first session, the DNN, the S-NSSAI, the first session establishment request, and the first indication information sent by the first network element.

1404. The session management network element determines that the first session of the first UE is allowed to be associated between different UEs.

1405. The session management network element sends second indication information to the first network element, wherein the second indication information indicates that the first session of the first UE is allowed to be associated between different UEs. Correspondingly, the first network element may receive the second indication information.

1406. The first network element sends the second indication information to the mobile communication device. Correspondingly, the mobile communication device may receive the second indication information.

1407. The mobile communication device transmits the data of a first service through the first session of the first UE.

1408. The mobile communication device sends a first message to the second network element based on the second indication information, where the first message carries information about the first session of the first UE, an identifier of the second session of the second UE, and a second session establishment request. The second session establishment request is used to request the establishment of the second session of the second UE. Correspondingly, the second network element may receive the first message.

1409. The second network element sends a second message to the session management network element based on the first message, where the second message carries the SUPI of the first UE, an identifier of the first session, the SUPI of the second UE, the identifier of the second session, and the second session establishment request, and the session management network element is a network element that manages the first session of the first UE. Correspondingly, the session management network element may receive the second message.

1410. In response to the second message, the session management network element stores an association relationship between the first session of the first UE and the second session of the second UE.

For steps 1408 to 1410, refer to the descriptions under steps 502 to 504 and steps 907 to 909, which will not be repeated here.

1411. The first access network device sends fourth indication information to the session management network element. The fourth indication information indicates that the QoS requirement of the QFI bound to the data of the first service is not met. The first access network device is configured to carry the first session of the first UE. Correspondingly, the session management network element may receive the fourth indication information.

1412. The session management network element sends second steering information to the mobile communication device based on the fourth indication information. The second steering information indicates that the data of the first service is transmitted through the second UE, or indicates that the data of the first service is preferentially transmitted through the second UE, or indicates that the data of the first service is switched from being transmitted through the first UE to being transmitted through the second UE; accordingly, the mobile communication device may receive the second steering information.

1413. The session management network element sends second information to the user plane function network element based on the fourth indication information. The second information indicates that the data of the first service is to be sent to the second access network device. The data of the first service is transmitted through the first IP address. The first IP address is an IP address associated with the first session of the first UE and the second session of the second UE, and the second access network device is configured to carry the second session of the second UE. Correspondingly, the user plane function network element may receive the second information.

1414. The mobile communication device transmits the data of the first service through the second session of the second UE based on the second steering information.

For steps 1411 to 1414, refer to the descriptions under steps 1305 to 1308, which are not described herein again.

It can be learned that, based on the method described in FIG. 14, an association relationship between the first session of the first UE and the second session of the second UE may be established in advance, and subsequently, a service data transmission between UEs in the mobile communication device may be triggered based on a requirement. By establishing the association relationship between the first session of the first UE and the second session of the second UE, the first session of the first UE and the second session of the second UE can share the same IP address, and an IP address used for the service data remains unchanged before and after the switching between UEs in the mobile communication device, thereby ensuring service continuity. In addition, the association relationship between the first session of the first UE and the second session of the second UE is established in advance, which facilitates subsequent timely switching of the service data to the second UE for transmission.

In another possible embodiment, in the embodiments corresponding to FIG. 5 to FIG. 14, the first UE and the second UE may share the first session, that is, the sessions of both the first UE and the second UE are the first session.

For example, in the embodiments corresponding to FIG. 5 to FIG. 14, where the first message carries the information of the first session of the first UE, the identifier of the second session of the second UE, and a second session establishment request, where the second session establishment request is used to request establishment of the second session of the second UE, this may be replaced with: the first message carries the information of the first session of the first UE and a second session establishment request, where the second session establishment request is used to request establishment of the first session of the second UE. The second message carries the SUPI of the first UE, the identifier of the first session, the SUPI of the second UE, the identifier of the second session, and the second session establishment request, which may be replaced with: the second message carries the SUPI of the first UE, the identifier of the first session, the SUPI of the second UE, and the second session establishment request. The session management network element stores the association relationship between the first session of the first UE and the second session of the second UE, which may be replaced with: the session management network element stores the association relationship between the first session of the first UE and the SUPI of the second UE. The third message carrying the session policy association identifier, the SUPI of the second UE, and the identifier of the second session may be replaced with: the third message carries the session policy association identifier, the SUPI of the second UE, and the identifier of the first session. The first message and the second message are used to request to associate the first session of the first UE with the second session of the second UE, which may be replaced with: the first message and the second message are used to request to associate the first session of the first UE with the first session of the second UE. Optionally, the first message and the second message further include an association indication, where the association indication is used to indicate to associate the first session of the first UE with the second session of the second UE, which may be replaced with: the first message and the second message further include an association indication, where the association indication is used to indicate the association of the first session of the first UE with the first session of the second UE.

In the embodiments corresponding to FIG. 11 to FIG. 12, the fifth message is used to request to switch the data of the first service transmitted on the first session of the first UE to the second session of the second UE for transmission, and the fifth message carries an identifier of the second session of the second UE may be replaced with: the fifth message is used to request to switch the data of the first service transmitted on the first session of the first UE to the first session of the second UE for transmission, and the fifth message carries an identifier of the first session of the second UE. The sixth message is used to request to switch the data of the first service transmitted on the first session of the first UE to the second session of the second UE for transmission, where the sixth message carries session indication information, and the session indication information is used to indicate the second session of the second UE may be replaced with: the sixth message is used to request to switch the data of the first service transmitted on the first session of the first UE to the first session of the second UE for transmission, where the sixth message carries session indication information, and the session indication information is used to indicate the first session of the second UE. The mobile communication device may transmit the data of the first service through the second session of the second UE may be replaced with: the mobile communication device transmits the data of the first service through the first session of the second UE.

In the embodiments corresponding to FIG. 13 to FIG. 14, the mobile communication device may transmit the data of the first service through the second session of the second UE based on the second steering information, which may be replaced by: the mobile communication device transmits the data of the first service through the first session of the second UE based on the second steering information.

This application provides a communication apparatus, which may be configured to implement the functions of the foregoing mobile communication device, the first network element, the second network element, the session management network element, the first policy control network element, or the second policy control network element. The communication apparatus may be a mobile communication device, the first network element, the second network element, or the session management network element. The communication apparatus includes modules or units that are in one-to-one correspondence with the methods/operations/steps/actions performed by the mobile communication device, the first network element, the second network element, or the session management network element in the foregoing method embodiments. The unit may be a hardware circuit, may be software, or may be implemented by a combination of a hardware circuit and software. Referring to FIG. 15, FIG. 15 is a schematic structural diagram of a communication apparatus 1500 according to an embodiment of this application. The communication apparatus 1500 may include an interface unit 1501 and a processing unit 1502. Specifically, the processing unit 1502 is configured to process signaling and/or data, where the signaling and/or data may be data received by the interface unit 1501, and the processed signaling and/or data may also be sent by the interface unit 1501.

When the communication apparatus 1500 is configured to implement the functions of the mobile communication device in the foregoing method embodiments, more detailed descriptions of the processing unit 1502 and the interface unit 1501 may be directly obtained by referring to the related descriptions of the functions of the mobile communication device in the method embodiments illustrated in FIG. 4 to FIG. 14, and details are not repeated herein.

When the communication apparatus 1500 is configured to implement the functions of the first network element in the foregoing method embodiments, more detailed descriptions of the processing unit 1502 and the interface unit 1501 may be directly obtained by referring to the related descriptions of the functions of the first network element in the method embodiments illustrated in FIG. 4 to FIG. 14, and details are not repeated herein.

When the communication apparatus 1500 is configured to implement the functions of the second network element in the foregoing method embodiments, more detailed descriptions of the processing unit 1502 and the interface unit 1501 may be directly obtained by referring to the related descriptions of the functions of the second network element in the method embodiments illustrated in FIG. 4 to FIG. 14, and details are not repeated herein.

When the communication apparatus 1500 is configured to implement the functions of the session management network element in the foregoing method embodiments, more detailed descriptions of the processing unit 1502 and the interface unit 1501 may be directly obtained by referring to the related descriptions of the functions of the session management network element in the method embodiments illustrated in FIG. 4 to FIG. 14, and details are not repeated herein.

When the communication apparatus 1500 is configured to implement the functions of the first policy control network element in the foregoing method embodiments, more detailed descriptions of the processing unit 1502 and the interface unit 1501 may be directly obtained by referring to the relevant descriptions of the first policy control network element in the method embodiments illustrated in FIG. 4 to FIG. 14, and details are not repeated herein.

When the communication apparatus 1500 is configured to implement the functions of the second policy control network element in the foregoing method embodiments, more detailed descriptions of the processing unit 1502 and the interface unit 1501 may be directly obtained by referring to the relevant descriptions of the second policy control network element in the method embodiments illustrated in FIG. 8 to FIG. 14, and details are not repeated herein.

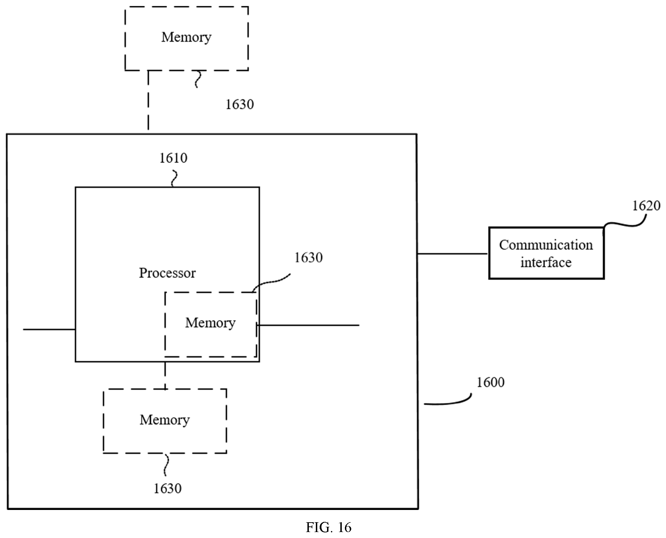

As shown in FIG. 16, a communication apparatus 1600 is shown according to an embodiment of this application, which is configured to implement the functions of the foregoing mobile communication device, the first network element, the second network element, or the session management network element. The apparatus may be a communication device or an apparatus used in a communication device. The communication device may be a mobile communication device, the first network element, the second network element, or the session management network element. The apparatus used in the communication device may be a chip system or a chip inside the communication device. The chip system may include a chip, or may include a chip and other discrete components.

The communication apparatus 1600 includes at least one processor 1610 configured to implement the processing functions of the device (for example, a mobile communication device, a first network element, a second network element, a session management network element, a first policy control network element, or a second policy control network element) in the method provided in the embodiments of this application. The communication apparatus 1600 may further include a communication interface 1620, configured to implement a receiving and sending operation of the device (for example, a mobile communication device, a first network element, a second network element, a session management network element, a first policy control network element, or a second policy control network element) in the method provided in the embodiments of this application. In the embodiments of this application, the communication interface may be a transceiver, a circuit, a bus, a module, or another type of communication interface, configured to communicate with another device by using a transmission medium. For example, the communication interface 1620 may be configured to enable an apparatus in the communication apparatus 1600 to communicate with another device. The processor 1610 receives and sends data by using the communication interface 1620, and is configured to implement the method described in the foregoing method embodiments.

The communication apparatus 1600 may further include at least one memory 1630 configured to store program instructions and/or data. The memory 1630 is coupled to the processor 1610. The coupling in this embodiment of this application is an indirect coupling or a communication connection between apparatuses, units, or modules, and may be implemented in an electrical, mechanical, or another form, and is used for information exchange between the apparatuses, units, or modules. The processor 1610 may operate in collaboration with the memory 1630. The processor 1610 may execute the program instructions stored in the memory 1630. At least one of the at least one memory may be included in the processor.

A specific connection medium between the communication interface 1620, the processor 1610, and the memory 1630 is not limited in this embodiment of this application. In this embodiment of this application, the memory 1630, the processor 1610, and the communication interface 1620 are connected through a bus in FIG. 16. The bus is represented by a thick line in FIG. 16. A connection manner between other components is merely an example for description, and is not intended to be construed as a limitation. The bus may be classified into an address bus, a data bus, a control bus, or the like. For ease of representation, only one thick line is used to represent the bus in FIG. 16, but this does not indicate that there is only one bus or only one type of bus.

The communication apparatus 1600 is specifically used for a device (for example, a mobile communication device, a first network element, a second network element, a session management network element, a first policy control network element, or a second policy control network element) When the communication apparatus 1600 is specifically a chip or a chip system, the communications interface 1620 may output or receive a baseband signal. The communication apparatus 1600 is specifically a device (for example, a mobile communication device, a first network element, a second network element, a session management network element, a first policy control network element, or a second policy control network element) When, the communications interface 1620 may output or receive a radio frequency signal. In this embodiment of this application, the processor may be a general purpose processor, a digital signal processor, an application-specific integrated circuit, a field programmable gate array or another programmable logic device, a discrete gate or a transistor logic device, or a discrete hardware component. may implement or perform the methods, steps, and logical block diagrams disclosed in the embodiments of this application. The general-purpose processor may be a microprocessor, any conventional processor, or the like. The steps of the method disclosed with reference to the embodiments of this application may be directly performed by a hardware processor, or may be performed by using a combination of hardware and software modules in the processor.

It should be noted that the communication interface 1620 may be configured to perform the functions of the aforementioned interface unit 1501, and the processor 1610 may be configured to perform the functions of the aforementioned processing unit 1502. This will not be further elaborated herein.

When the communication apparatus is a chip applied to, for example, a mobile communication device, a first network element, a second network element, a session management network element, a first policy control network element, or a second policy control network element, the chip implements the functions of the mobile communication device, the first network element, the second network element, the session management network element, the first policy control network element, or the second policy control network element in the foregoing method embodiments, and the chip receives information from another network element; or the chip sends information to another network element.

It may be understood that the processor in the embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

The method steps in the embodiments of this application may be implemented through hardware, or may be implemented by a processor executing software instructions. The software instructions may include corresponding software modules, which may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. An example of a storage medium is coupled to a processor, enabling the processor to read information from the storage medium and write information into the storage medium. Of course, the storage medium may also be a component of the processor. The processor and the storage medium may be located in an ASIC. In addition, the ASIC may be located in a core network device or a terminal. Certainly, the processor and the storage medium may also exist as discrete components in the UE or the first network element.

In the foregoing embodiments, the embodiments may be implemented entirely or partially by software, hardware, firmware, or any combination thereof. When software is used to implement the embodiments, the embodiments may be implemented entirely or partially in a form of a computer program product. The computer program product includes one or more computer programs or instructions. When the computer program or the instruction is loaded and executed on a computer, the procedures or functions described in the embodiments of this application are entirely or partially performed. The computer may be a general-purpose computer, a dedicated computer, a computer network, or another programmable apparatus. The computer program or the instruction may be stored in a computer-readable storage medium, or may be transmitted through the computer-readable storage medium. The computer-readable storage medium may be any usable medium accessible to the computer, or a data storage device, such as a server, integrating one or more usable media. The usable medium may be a magnetic medium, for example, a floppy disk, a hard disk, or a magnetic tape; may be an optical medium, for example, a DVD; or may be a semiconductor medium, for example, a solid state disk (solid state disk, SSD).

In the embodiments of this application, unless otherwise specified and logically conflicted, terms and/or descriptions in different embodiments are consistent and/or may be referenced by each other. Technical features in different embodiments may be combined to form a new embodiment based on internal logical relationships of the different embodiments.

It may be understood that, various numbers in the embodiments of this application are merely distinguished for ease of description, and are not used to limit the scope of the embodiments of this application. The sequence numbers of the foregoing processes do not mean the execution sequence, and the execution sequence of the processes should be determined by the functions and internal logic of the processes.

An embodiment of this application further provides a computer-readable storage medium. The computer-readable storage medium stores computer-executable instructions. When the computer-executable instructions are executed, the method performed by the mobile communication device, the first network element, the second network element, the session management network element, the first policy control network element, or the second policy control network element in the foregoing method embodiment is implemented.

An embodiment of this application further provides a computer program product, where the computer program product includes a computer program. When the computer program is executed, the method performed by the mobile communication device, the first network element, the second network element, the session management network element, the first policy control network element, or the second policy control network element in the foregoing method embodiments is implemented.

An embodiment of this application further provides a communication system, where the communication system includes, for example, a mobile communication device, a first network element, a second network element, a session management network element, a first policy control network element, and a second policy control network element. The mobile communication device is configured to perform the method performed by the mobile communication device in the foregoing method embodiments. The first network element is configured to perform the method performed by the first network element in the foregoing method embodiments. The second network element is configured to perform the method performed by the second network element in the foregoing method embodiments. The session management network element is configured to perform the method performed by the session management network element in the foregoing method embodiments. The first policy control network element is configured to perform the method performed by the first policy control network element in the foregoing method embodiments. The second policy control network element is configured to perform the method performed by the second policy control network element in the foregoing method embodiments.

It should be noted that, for the foregoing method embodiments, for ease of description, they are all described as a series of action combinations. However, a person skilled in the art should understand that this application is not limited to the described order of actions, because according to this application, some steps may be performed in other orders or simultaneously. In addition, a person skilled in the art should also understand that the embodiments described in this specification are all preferred embodiments, and the actions and modules involved are not necessarily necessary for this application. Descriptions of embodiments provided in this application may be mutually referenced, and each embodiment has a different emphasis in the description. For a part that is not described in detail in an embodiment, refer to related descriptions in other embodiments. For the purpose of convenient and brief description, for example, for functions of the apparatuses and devices provided in the embodiments of this application and steps performed by the apparatuses and devices, refer to related descriptions in the method embodiments of this application. The method embodiments and the apparatus embodiments may also be mutually referenced, combined, or cited.

It should be finally noted that the foregoing embodiments are merely used to describe the technical solutions of this application, but are not intended to limit the technical solutions. Although this application is described in detail with reference to the foregoing embodiments, a person of ordinary skill in the art should understand that the technical solutions described in the foregoing embodiments may still be modified, or some or all technical features thereof may be equivalently replaced; and these modifications or replacements do not cause the essence of the corresponding technical solutions to depart from the scope of the technical solutions of the embodiments of this application.

## Claims

1. A service data processing method, applied to a mobile communication device, wherein the mobile communication device includes a first user equipment UE and a second UE, and the method comprises:
receiving, by the mobile communication device, first steering information;
wherein the first steering information indicates that data of a first service is transmitted through the first UE; or
the first steering information indicates that data of a first service is preferentially transmitted through the first UE; or
the first steering information indicates that data of a first service is preferentially transmitted through a first network, wherein the first network is a network on which the first UE camps; or
the first steering information indicates that data of a first service is preferentially transmitted through a first radio access technology RAT, wherein the first RAT is a RAT supported by a first access network device, and the first access network device corresponds to the first UE;
transmitting, by the mobile communication device, the data of the first service through a first session of the first UE based on the first steering information.

2. The method according to claim 1, wherein the method further comprises:
sending, by the mobile communication device, a registration request, wherein the registration request is used to request to register the first UE with a network; and
the receiving, by the mobile communication device, first steering information comprises:
receiving, by the mobile communication device, a registration accept message or a UE policy container, wherein the registration accept message or the UE policy container includes the first steering information, and the registration accept message indicates that the first UE successfully registers with the network.

3. The method according to claim 2, wherein the transmitting, by the mobile communication device, the data of the first service through a first session of the first UE based on the first steering information comprises:
selecting, by the mobile communication device, the first UE based on the first steering information, and establishing the first session of the first UE;
transmitting the data of the first service through the first session of the first UE;
the method further comprises:
sending, by the mobile communication device, a first message, wherein the first message carries information about the first session of the first UE, an identifier of a second session of the second UE, and a second session establishment request, wherein the second session establishment request is used to request establishment of the second session of the second UE.

4. The method according to claim 3, wherein the first message is further used to request to associate the first session of the first UE with the second session of the second UE.

5. The method according to claim 3 or 4, wherein the method further comprises:
receiving, by the mobile communication device, second indication information, wherein the second indication information indicates that the first session is allowed to be associated between different UEs, or indicates that a session of the mobile communication device is allowed to be associated between different UEs; and
the sending, by the mobile communication device, a first message comprises:
sending, by the mobile communication device, the first message based on the second indication information.

6. A service data processing method, wherein the method comprises:
receiving, by a first network element, a registration request, wherein the registration request is used to request to register a first UE with a network;
sending, by the first network element, a fourth message, wherein the fourth message is used to request establishment of an access management policy association for the first UE, and the fourth message carries a subscription permanent identifier SUPI of the first UE;
receiving, by the first network element, first steering information, wherein the first steering information indicates that data of a first service is transmitted through the first UE; or the first steering information indicates that data of a first service is preferentially transmitted through the first UE; or the first steering information indicates that data of a first service is preferentially transmitted through a first network, wherein the first network is a network on which the first UE camps; or the first steering information indicates that data of a first service is preferentially transmitted through a first radio access technology RAT, wherein the first RAT is a RAT supported by a first access network device, and the first access network device corresponds to the first UE; and
sending, by the first network element, a registration accept message or a UE policy container, wherein the registration accept message or the UE policy container includes the first steering information, and the registration accept message indicates that the first UE successfully registers with the network.

7. The method according to claim 6, wherein the registration request further includes an identifier of a second UE or a dual steer device indication, wherein the dual steer device indication is used to indicate that the first UE is located in a dual steer device, and the dual steer device is a device including two UEs; and
wherein the fourth message further includes a subscription permanent identifier SUPI of the second UE or the dual steer device indication.

8. The method according to claim 6, wherein the method further comprises:
sending, by the first network element, the SUPI of the first UE to a unified data management network element in response to the registration request;
receiving, by the first network element, a SUPI of the second UE or a dual steer device indication from the unified data management network element, wherein the dual steer device indication is used to indicate that the first UE is located in a dual steer device, and the dual steer device is a device including two UEs; and
wherein the fourth message further includes the SUPI of the second UE or the dual steer device indication.

9. A service data switching method, applied to a mobile communication device, wherein the mobile communication device includes a first user equipment UE and a second UE, and the method comprises:
establishing, by the mobile communication device, a first session of the first UE;
transmitting, by the mobile communication device, data of a first service through the first session of the first UE;
establishing, by the mobile communication device, a second session of the second UE; and associating the first session of the first UE with the second session of the second UE;
sending, by the mobile communication device, a fifth message, wherein the fifth message carries an identifier of the second session of the second UE, and the fifth message is used to request to switch the data of the first service transmitted in the first session of the first UE to the second session of the second UE for transmission; and
transmitting, by the mobile communication device, the data of the first service through the second session of the second UE, wherein the data of the first service is transmitted through a first IP address, and the first IP address is an IP address associated with the first session of the first UE and the second session of the second UE.

10. The method according to claim 9, wherein the establishing, by the mobile communication device, a second session of the second UE comprises:
sending, by the mobile communication device, a first message, wherein the first message carries information about the first session of the first UE, the identifier of the second session of the second UE, and a second session establishment request, and the second session establishment request is used to request establishment of the second session of the second UE.

11. The method according to claim 10, wherein the method further comprises:
receiving, by the mobile communication device, second indication information, wherein the second indication information indicates that the first session is allowed to be associated between different UEs, or indicates that a session of the mobile communication device is allowed to be associated between different UEs; and
the sending, by the mobile communication device, a first message comprises:
sending, by the mobile communication device, the first message based on the second indication information.

12. The method according to any one of claims 9 to 11, wherein the fifth message further includes a switching indication, wherein the switching indication is used to indicate to switch the data of the first service transmitted in the first session of the first UE to the second session of the second UE for transmission, or the switching indication is used to indicate to switch the data of the first service transmitted in the first session of a UE associated with the second UE to the second session of the second UE for transmission.

13. The method according to any one of claims 9 to 12, wherein the method further comprises:
receiving, by the mobile communication device, third indication information, wherein the third indication information indicates that the data of the first service is allowed to be switched between different UEs, or service data transmitted in the first session is allowed to be switched between different UEs; and
the sending, by the mobile communication device, a fifth message comprises:
sending, by the mobile communication device, the fifth message based on the third indication information.

14. A service data switching method, wherein the method comprises:
storing, by a session management network element, an association relationship between an identifier of a second session of a second UE and an identifier of a first session of a first UE;
receiving, by the session management network element, a sixth message, wherein the sixth message is used to request to switch data of a first service transmitted in the first session of the first UE to the second session of the second UE for transmission, the sixth message carries session indication information, and the session indication information is used to indicate the second session of the second UE; and
sending, by the session management network element, second information to a user plane function network element in response to the sixth message, wherein the second information indicates to send the data of the first service to a second access network device, the data of the first service is transmitted through a first IP address, the first IP address is an IP address associated with the first session of the first UE and the second session of the second UE, and the second access network device is configured to carry the second session of the second UE.

15. The method according to claim 14, wherein the second information includes a first N4 session identifier, address information of the second access network device, and an identifier of the first service, wherein the first N4 session identifier is an N4 session identifier associated with the first session of the first UE.

16. The method according to claim 14 or 15, wherein the method further comprises:
receiving, by the session management network element, a second message, wherein the second message carries a subscription permanent identifier SUPI of a first user equipment UE, the identifier of the first session of the first UE, a SUPI of the second UE, the identifier of the second session of the second UE, and a second session establishment request, wherein the second session establishment request is used to request establishment of the second session of the second UE; and
the storing, by a session management network element, an association relationship between an identifier of a second session of a second UE and an identifier of a first session of a first UE comprises:
storing, by the session management network element, the association relationship between the identifier of the second session of the second UE and the identifier of the first session of the first UE in response to the second message.

17. The method according to claim 16, wherein the second message is used to request to associate the first session of the first UE with the second session of the second UE.

18. The method according to claim 16 or 17, wherein
the second message further includes an association indication, wherein the association indication is used to indicate to associate the first session of the first UE with the second session of the second UE.

19. The method according to any one of claims 14 to 18, wherein the sixth message further includes a switching indication, wherein the switching indication is used to indicate to switch the data of the first service transmitted in the first session of the first UE to the second session of the second UE for transmission, or the switching indication is used to indicate to switch the data of the first service transmitted in the first session of a UE associated with the second UE to the second session of the second UE for transmission.

20. A service data processing method, wherein the method comprises:
receiving, by a second network element, a first message, wherein the first message carries information about a first session of a first user equipment UE, an identifier of a second session of a second UE, and a second session establishment request, wherein the second session establishment request is used to request establishment of the second session of the second UE; and
sending, by the second network element, a second message to a session management network element based on the first message, wherein the second message carries a subscription permanent identifier SUPI of the first UE, an identifier of the first session, a SUPI of the second UE, the identifier of the second session, and the second session establishment request, and the session management network element is a network element that manages the first session of the first UE.

21. The method according to claim 20, wherein the information about the first session of the first UE includes one or more of the following: the identifier of the first session of the first UE, a data network name DNN corresponding to the first session of the first UE, or single network slice selection assistance information S-NSSAI corresponding to the first session of the first UE.

22. The method according to claim 20 or 21, wherein the information about the first session of the first UE is the identifier of the first session of the first UE; and the sending, by the second network element, a second message to a session management network element based on the first message comprises:
obtaining, by the second network element, the SUPI of the first UE and an identifier of the session management network element based on a device identification information and the identifier of the first session, wherein the device identification information is the SUPI of the second UE, or the first message further includes a SUCI of the first UE, and the device identification information is the SUCI of the first UE; and
sending, by the second network element, the second message to the session management network element.

23. The method according to claim 22, wherein the obtaining, by the second network element, the SUPI of the first UE and an identifier of the session management network element based on a device identification information and the identifier of the first session comprises:
sending, by the second network element, the device identification information and the identifier of the first session to a unified data management network element; and
receiving, by the second network element, the SUPI of the first UE and the identifier of the session management network element from the unified data management network element.

24. The method according to any one of claims 20 to 23, wherein the first message and the second message are used to request to associate the first session of the first UE with the second session of the second UE.

25. The method according to claim 24, wherein
the first message and the second message further include an association indication, wherein the association indication is used to indicate to associate the first session of the first UE with the second session of the second UE.

26. A communication apparatus, comprising a unit configured to execute the method according to any one of claims 1 to 25.

27. A communication apparatus, comprising a processor and a memory, wherein the processor is coupled to the memory, and the processor is configured to implement the method according to any one of claims 1 to 25.

28. A chip, comprising a processor and an interface, wherein the processor is coupled to the interface, the interface is configured to receive or output a signal, and the processor is configured to execute code instructions, so that the method according to any one of claims 1 to 25 is executed.

29. A computer-readable storage medium, wherein the computer-readable storage medium stores computer-executable instructions, and when the computer-executable instructions are invoked by a computer, the computer is enabled to execute the method according to any one of claims 1 to 25.
